(19) Europäisches Patentamt / European Patent Office / Office européen des brevets

(11) **EP 2 743 647 B1**

(12) **EUROPEAN PATENT SPECIFICATION**

(45) Date of publication and mention
of the grant of the patent:
**16.09.2015 Bulletin 2015/38**

(51) Int Cl.:
***G01D 5/244*** (2006.01)          ***G01B 7/30*** (2006.01)

(21) Application number: **13196425.6**

(22) Date of filing: **10.12.2013**

(54) **Rotation angle detection device**

Vorrichtung zur Drehwinkelerfassung

Dispositif de détection d'angle de rotation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2012 JP 2012271637**
**10.05.2013 JP 2013100613**

(43) Date of publication of application:
**18.06.2014 Bulletin 2014/25**

(73) Proprietor: **JTEKT Corporation
Osaka-shi, Osaka 542-8502 (JP)**

(72) Inventors:
• **Kariatsumari, Yuji**
**Osaka-shi, Osaka 542-8502 (JP)**
• **Shimizu, Yoshinobu**
**Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Bavariaring 10
80336 München (DE)**

(56) References cited:
**EP-A1- 1 684 051      EP-A1- 2 477 004
EP-A2- 2 466 268      JP-A- 2008 026 297**

**Description**

BACKGROUND OF THE INVENTION

1. Field of the Invention

The invention relates to a rotation angle detection device that detects a rotation angle of a rotary body.

2. Description of the Related Art

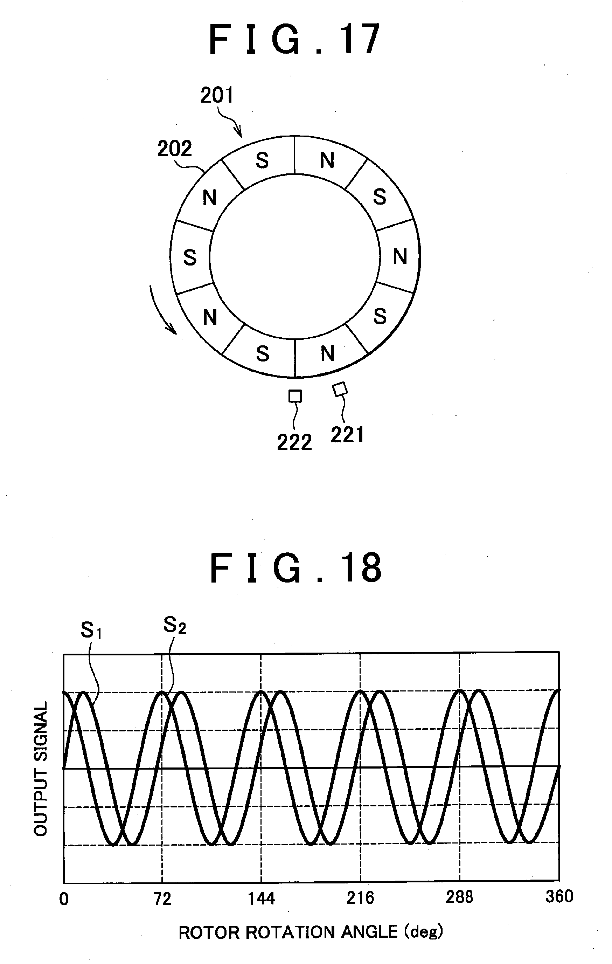

As a rotation angle detection device that detects a rotation angle of a rotary body, there has been known a rotation angle detection device that detects a rotation angle of a rotor of a brushless motor with the use of a detection rotor that rotates in accordance with the rotation of the brushless motor. Specifically, as illustrated in FIG. 17, a detection rotor 201 (hereinafter, referred to as "rotor 201") includes a cylindrical magnet 202 having a plurality of magnetic pole pairs corresponding to magnetic pole pairs formed in a rotor of a brushless motor. Two magnetic sensors 221, 222 are arranged around the rotor 201 at a predetermined angular interval around the rotation central axis of the rotor 201. The magnetic sensors 221, 222 respectively output sinusoidal signals having a predetermined phase difference. On the basis of the two sinusoidal signals, a rotation angle of the rotor 201 (a rotation angle of the brushless motor) is detected.
In this example, the magnet 202 has five magnetic pole pairs. That is, the magnet 202 has ten magnetic poles arranged at equal angular intervals. The magnetic poles are arranged at angular intervals of 36° (180° in electrical angle) around the rotation central axis of the rotor 201. Further, the two magnetic sensors 221, 222 are arranged at an angular interval of 18° (90° in electrical angle) around the rotation central axis of the rotor 201.
The direction indicated by an arrow in FIG. 17 is defined as the forward rotation direction of the detection rotor 201. The rotation angle of the rotor 201 increases as the rotor 201 is rotated in the forward direction, whereas the rotation angle of the rotor 201 decreases as the rotor 201 is rotated in the reverse direction. The magnetic sensors 221, 222 output sinusoidal signals $S_1$, $S_2$, respectively. As illustrated in FIG. 18, one period of each of the sinusoidal signals $S_1$, $S_2$ corresponds to a duration in which the rotor 201 rotates an angle of 72° (360° in electrical angle) corresponding to one magnetic pole pair.
The angular range corresponding to one rotation of the rotor 201 is divided into five sections corresponding to the five magnetic pole pairs, a start position of each section is defined as 0°, and an end position of each section is defined as 360°. A rotation angle of the rotor 201 expressed under the above-described conditions is an electrical angle θ of the rotor 201. In this case, the first magnetic sensor 221 outputs an output signal of $S_1 = A_1 \cdot \sin\theta$, and the second magnetic sensor 222 outputs an output signal of $S_2 = A_2 \cdot \cos\theta$. Each of $A_1$ and $A_2$ represents an amplitude. If the amplitude $A_1$ of the output signal $S_1$ and the amplitude $A_2$ of the output signal $S_2$ are assumed to be equal to each other, the electrical angle θ of the rotor 201 is obtained with the use of both the output signals $S_1$, $S_2$ based on the following expression.

$$\theta = \tan^{-1}(\sin\theta / \cos\theta)$$

$$= \tan^{-1}(S_1 / S_2)$$

The thus obtained electrical angle θ is used to control the brushless motor. Refer to, for example, Japanese Patent Application Publication No. 2008-26297 (JP 2008-26297 A).
In the above-described conventional rotation angle detection device, the rotation angle θ is computed on the assumption that the amplitudes $A_1$, $A_2$ of the output signals $S_1$, $S_2$ output from the magnetic sensors 221, 222 are equal to each other. However, the amplitudes $A_1$, $A_2$ of the output signals $S_1$, $S_2$ vary depending on variations of the temperature characteristics of the magnetic sensors 221, 222 and temperature changes. Therefore, an error may be caused in detection of a rotation angle of the rotor due to variations of the temperature characteristics of the magnetic sensors 221, 222 and temperature changes.

SUMMARY OF THE INVENTION

One object of the invention is to provide a rotation angle detection device that is able to detect a rotation angle with a high degree of accuracy.
A rotation angle detection device according to an aspect of the invention includes: a plurality of sensors used to detect a rotation angle of a rotary body; a sampling unit that samples an output signal from each of the sensors at prescribed timings; a computation unit that computes the rotation angle of the rotary body with use of a plurality the output signals from at least two sensors among the plurality of the sensors, the output signals being sampled at a prescribed number of different timings, the prescribed number being two or more; and a multipolar magnet that rotates in accordance with rotation of the rotary body, and that has a plurality of magnetic poles. The rotation angle detection device according to the aspect selects a sensor group constituted of multiple sensors from the plurality of the sensors, and the sensors arranged at respective ends of the sensor group respectively output sinusoidal signals having a phase difference smaller than 180° in electrical angle in accordance with rotation of the multipolar magnet. The computation unit is configured to compute the rotation angle of the rotary body with use of six output signals from two sensors that belong to the sensor group, the six output signals including three output signals from one of the two sensors and three output signals from the other one of the two sensors, and being sampled at three different timings. Multiple expressions obtained by mathematizing the six output signals each include an amplitude of the corresponding output signal, the rotation angle of the rotary body, and a piece of information regarding a magnetic pole width of each of the magnetic poles of the multipolar magnet as unknown quantities. The computation unit computes the rotation angle of the rotary body on an assumption that, among the unknown quantities included in the six expressions, the amplitudes of the three output signals from each one of the two sensors, the three output signals being sampled at different sampling timings, are equal to one another, and all the pieces of the information regarding the magnetic pole width included in the six expressions are the same.

In the above-described aspect, a sensor group constituted of multiple sensors is selected from the plurality of the sensors, and the sensors at respective ends of the sensor group are selected so as to be arranged such that these sensors respectively output sinusoidal signals having a phase difference smaller than 180° in electrical angle in accordance with rotation of the multipolar magnet. Therefore, the state where two sensors that belong to the sensor group sense one and the same magnetic pole (180° in electrical angle) for a prescribed number of multiple consecutive sampling periods may occur. If the condition that two sensors sense one and the same magnetic pole for the prescribed number of multiple consecutive sampling periods is satisfied, the rotation angle of the rotary body is computed on the basis of the output signals from the two sensors, which are sampled at the prescribed number of multiple sampling timings. Thus, it is possible to compute the rotation angle with a high degree of accuracy.

The rotation angle detection device according to the above-described aspect may be configured such that: the sensor group is constituted of three magnetic sensors, and a sum of an angular interval between a central magnetic sensor and one of remaining magnetic sensors among the three magnetic sensors and an angular interval between the central magnetic sensor and the other one of the remaining magnetic sensors is smaller than 180° in electrical angle; and the rotation angle detection device further includes a malfunction determination unit that determines whether each of the magnetic sensors malfunctions, a first computation unit that computes the rotation angle of the rotary body based on the output signals from two properly operating magnetic sensors including the central magnetic sensor that sense one and the same magnetic pole for a prescribed number of multiple consecutive sampling periods among the three magnetic sensors, the output signals being sampled at the prescribed number of multiple sampling timings, when at least two magnetic sensors including the central magnetic sensor are properly operating and a first condition that both the two properly operating magnetic sensors including the central magnetic sensor sense one and the same magnetic pole for the prescribed number of multiple consecutive sampling periods is satisfied, and a second computation unit that computes the rotation angle of the rotary body based on the output signals from two properly operating magnetic sensors other than the central magnetic sensor among the three magnetic sensors, the output signals being sampled at the prescribed number of multiple sampling timings, when only the central magnetic sensor malfunctions and a second condition that the two properly operating magnetic sensors other than the central magnetic sensor sense one and the same magnetic pole for the prescribed number of multiple consecutive sampling periods is satisfied.

In the rotation angle detection device according to the above-described aspect, the sum of the angular interval between the central magnetic sensor and one of the remaining magnetic sensors among the three magnetic sensors and the angular interval between the central magnetic sensor and the other one of the remaining magnetic sensors is smaller than 180° in electrical angle. Therefore, even if any one of the three magnetic sensors malfunctions, the state where the properly operating two magnetic sensors sense one and the same magnetic pole for the prescribed number of multiple consecutive sampling periods may occur.

If the condition (at least one of the first condition and the second condition) that the properly operating two magnetic sensors sense one and the same magnetic pole for the prescribed number of multiple consecutive sampling periods is satisfied, the rotation angle of the rotary body is computed based on the output signals from the two properly operating magnetic sensors, the output signals being sampled at the prescribed number of multiple sampling timings. Thus, it is possible to compute the rotation angle with a high degree of accuracy. As a result, even if any one of the three magnetic sensors malfunctions, when at least one of the first condition and the second condition is satisfied, it is possible to compute the rotation angle with a high degree of accuracy.

The rotation angle detection device according to the above-described aspect may be configured such that: the first computation unit includes a device that computes information regarding the magnetic pole width of the magnetic pole sensed by the two properly operating magnetic sensors including the central magnetic sensor and/or information regarding the amplitude of each of output signals from the two properly operating magnetic sensors, the output signals being sampled at the prescribed number of multiple sampling timings, and stores the information in association with the magnetic pole sensed by the two properly operating magnetic sensors, at all times or when the output signals from the two properly operating magnetic sensors including the central magnetic sensor satisfy a prescribed requirement in a case where the first condition is satisfied; the second computation unit includes a device that computes information regarding the magnetic pole width of the magnetic pole sensed by the two properly operating magnetic sensors other than the central magnetic sensor and/or information regarding the amplitude of each of the output signals from the two properly operating magnetic sensors, the output signals being sampled at the prescribed number of multiple sampling timings, and stores the information in association with the magnetic pole sensed by the two properly operating magnetic sensors, at all times or when the output signals from the two properly operating magnetic sensors other than the central magnetic sensor satisfy a prescribed requirement in a case where the second condition is satisfied, and the rotation angle detection device further includes a third computation unit that computes the rotation angle of the rotary body with use of the information stored by the first computation unit and the output signals from two magnetic sensors including one magnetic sensor, among properly operating magnetic sensors out of the three magnetic sensors, the one magnetic sensor sensing the magnetic pole associated with the stored information regarding the magnetic pole width and/or information regarding the amplitude, the output signals being sampled at one sampling timing, when at least two magnetic sensors including the central magnetic sensors among the three magnetic sensors are operating properly in a case where the first condition is not satisfied, and a fourth computation unit that computes the rotation angle of the rotary body with use of the information stored by the second computation unit and the output signals from two properly operating magnetic sensors, the output signals being sampled at one sampling timing, when only the central magnetic sensor among the three magnetic sensors malfunctions, the second condition is not satisfied, and the information regarding the magnetic pole width and/or the information regarding the amplitude is stored in association with at least one of magnetic poles sensed by the two properly operating magnetic sensors other than the central magnetic sensor.

With the configuration according to the above-described aspect, in the case where at least two magnetic sensors including the central magnetic sensor among the three magnetic sensors are operating properly, even if the first condition is not satisfied, it is possible to compute the rotation angle with a high degree of accuracy. In the case where only the central magnetic sensor among the three magnetic sensors malfunctions, even if the second condition is not satisfied, the rotation angle can be computed with a high degree of accuracy when the information regarding the magnetic pole width and/or the information regarding the amplitude is stored in association with at least one of magnetic poles sensed by the two properly operating magnetic sensors other than the central magnetic sensor

The rotation angle detection device according to the above-described aspect may be configured such that, in a case where the three magnetic sensors are a first magnetic sensor, a second magnetic sensor, and a third magnetic sensor and the second magnetic sensor is the central magnetic sensor, an angular interval between the second magnetic sensor and the first magnetic sensor is 60° in electrical angle, and an angular interval between the second magnetic sensor and the third magnetic sensor is 60° in electrical angle.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic view illustrating the schematic configuration of an electric power steering system to which a rotation angle detection device according to an embodiment of the invention is applied;
FIG. 2 is a schematic diagram illustrating the electrical configuration of a motor control ECU;
FIG. 3 is a schematic diagram schematically illustrating the configuration of an electric motor;
FIG. 4 is a graph illustrating an example of a manner of setting a q-axis current command value $I_q{}^*$ with respect to a detected steering torque Th;
FIG. 5 is a schematic view schematically illustrating the configuration of a torque sensor;
FIG. 6 is a schematic diagram illustrating the configuration of a first magnet and the arrangement of three magnetic sensors;
FIG. 7 is a schematic diagram illustrating waveforms of output signals from a first magnetic sensor, a second magnetic sensor and a third magnetic sensor;
FIG. 8A is a schematic view illustrating an example of the case where a fourth computation mode is applied;
FIG. 8B is a schematic view illustrating an example of the case where a fifth computation mode is applied;
FIG. 8C is a schematic view illustrating an example of the case where a sixth computation mode is applied;

FIG. 9 is a graph illustrating the fourth computation mode;

FIG. 10 is a flowchart showing the operation of a first rotation angle computation unit;

FIG. 11 is a flowchart showing the procedure of a malfunction determination process in step $S_1$ in FIG. 10;

FIG. 12A is a flowchart showing part of the procedure of a rotation angle computing process based on forced rotation in step S3 in FIG. 10;

FIG. 12B is a flowchart showing part of the procedure of the rotation angle computing process based on forced rotation in step S3 in FIG. 10;

FIG. 12C is a flowchart showing part of the procedure of the rotation angle computing process based on forced rotation in step S3 in FIG. 10;

FIG. 12D is a flowchart showing part of the procedure of the rotation angle computing process based on forced rotation in step S3 in FIG. 10;

FIG. 13 is a schematic diagram showing part of the contents of a memory in a torque computation ECU;

FIG. 14 is a flowchart showing the detailed procedure of a relative pole number setting process;

FIG. 15A is a schematic diagram illustrating the relative pole number setting process;

FIG. 15B is a schematic diagram illustrating the relative pole number setting process;

FIG. 15C is a schematic diagram illustrating the relative pole number setting process;

FIG. 16A is a flowchart showing part of the procedure of a normal rotation angle computing process in step S5 in FIG. 10;

FIG. 16B is a flowchart showing part of the procedure of the normal rotation angle computing process in step S5 in FIG. 10;

FIG. 16C is a flowchart showing part of the procedure of the normal rotation angle computing process in step S5 in FIG. 10;

FIG. 16D is a flowchart showing part of the procedure of the normal rotation angle computing process in step S5 in FIG. 10;

FIG. 17 is a schematic diagram illustrating a rotation angle detection method executed by a conventional rotation angle detection device; and

FIG. 18 is a schematic diagram illustrating waveforms of output signals from a first magnetic sensor and a second magnetic sensor.

## DETAILED DESCRIPTION OF EMBODIMENTS

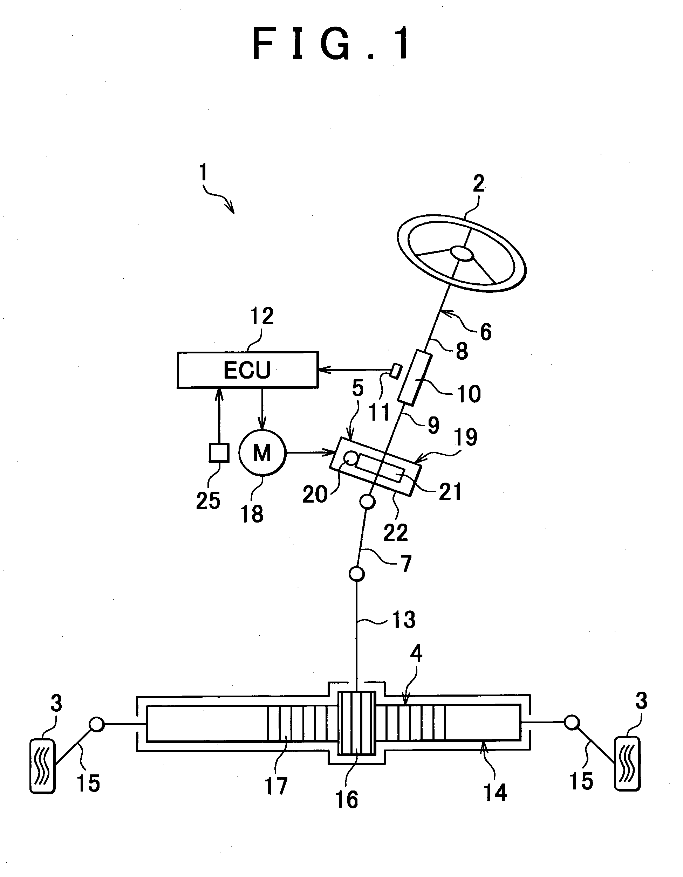

Hereinafter, embodiments of the invention will be described with reference to the accompanying drawings. As illustrated in FIG. 1, an electric power steering system 1 includes a steering wheel 2, which serves as a steering member used to steer a vehicle, a steered mechanism 4 that steers steered wheels 3 in accordance with the rotation of the steering wheel 2, and a steering assist mechanism 5 used to assist a driver in performing a steering operation. The steering wheel 2 and the steered mechanism 4 are mechanically connected to each other via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected to each other via a torsion bar 10 so as to be rotatable relative to each other on the same axis. That is, when the steering wheel 2 is rotated, the input shaft 8 and the output shaft 9 rotate in the same direction while rotating relative to each other.

A torque sensor (torque detection device) 11, to which a rotation angle detection device according to an embodiment of the invention is applied, is arranged around the steering shaft 6. The torque sensor 11 detects a steering torque applied to the steering wheel 2 on the basis of a relative rotational displacement between the input shaft 8 and the output shaft 9. The steering torque detected by the torque sensor 11 is input into an electronic control unit 12 for motor control (hereinafter, referred to as "motor control ECU 12").

The steered mechanism 4 is formed of a rack-and-pinion mechanism including a pinion shaft 13 and a rack shaft 14 that serves as a steered shaft. The steered wheels 3 are connected to respective end portions of the rack shaft 14 via tie rods 15 and knuckle arms (not illustrated). The pinion shaft 13 is connected to the intermediate shaft 7. The pinion shaft 13 rotates in accordance with steering of the steering wheel 2. A pinion 16 is connected to a distal end of the pinion shaft 13.

The rack shaft 14 linearly extends along the lateral direction of the vehicle (the direction orthogonal to the direction in which the vehicle travels straight ahead). A rack 17 that meshes with the pinion 16 is formed at an axially intermediate portion of the rack shaft 14. The pinion 16 and the rack 17 convert the rotation of the pinion shaft 13 into an axial movement of the rack shaft 14. By moving the rack shaft 14 in the axial direction, the steered wheels 3 are steered.

When the steering wheel 2 is steered (rotated), the rotation is transmitted to the pinion shaft 13 via the steering shaft 6 and the intermediate shaft 7. The rotation of the pinion shaft 13 is converted into an axial movement of the rack shaft 14 by the pinion 16 and the rack 17. As a result, the steered wheels 3 are steered. The steering assist mechanism 5 includes an electric motor 18 that generates steering assist force and a speed-reduction mechanism 19 that transmits torque output from the electric motor 18 to the steered mechanism 4. The electric motor 18 is formed of a three-phase brushless motor in the present embodiment. The speed-reduction mechanism 19 is formed of a worm gear mechanism including a worm shaft 20 and a worm wheel 21 that meshes with the worm shaft 20. The speed-reduction mechanism 19 is housed in a gear housing 22 that serves as a transmission mechanism housing.

The worm shaft 20 is driven to be rotated by the electric motor 18. The worm wheel 21 is connected to the steering shaft 6 so as to be rotatable in the same direction as the rotation direction of the steering shaft 6. The worm wheel 21 is driven to be rotated by the worm shaft 20. When the worm shaft 20 is driven to be rotated by the electric motor 18, the worm wheel 21 is driven to be rotated, and the steering shaft 6 rotates. The rotation of the steering shaft 6 is transmitted to the pinion shaft 13 via the intermediate shaft 7. The rotation of the pinion shaft 13 is converted into an axial movement of the rack shaft 14. As a result, the steered wheels 3 are steered. That is, when the worm shaft 20 is driven to be rotated by the electric motor 18, the steered wheels 3 are steered.

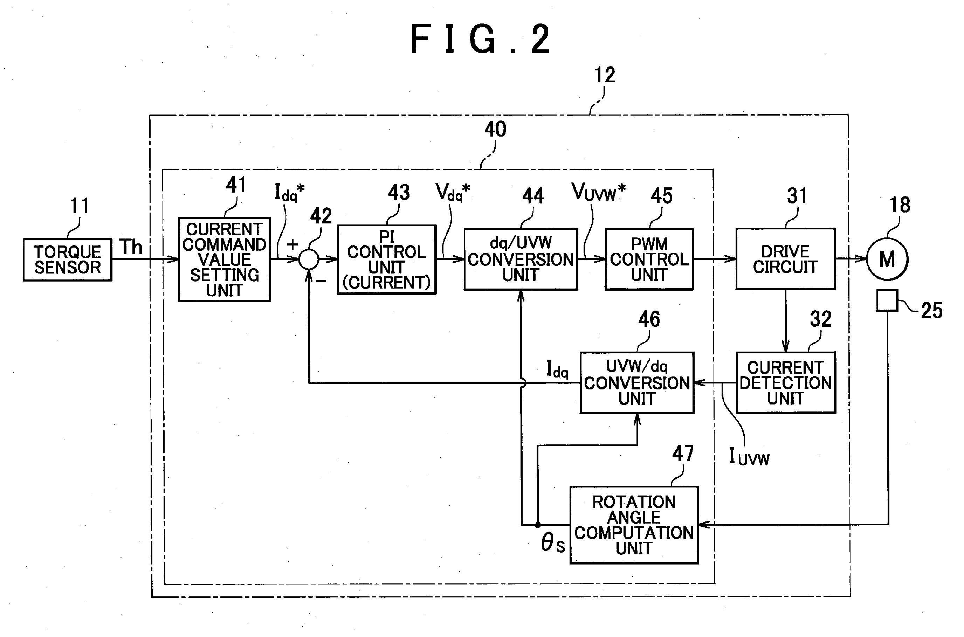

A rotation angle of a rotor of the electric motor 18 (a rotor rotation angle) is detected by a rotation angle sensor 25 such as a resolver. A signal output from the rotation angle sensor 25 is input into the motor control ECU 12. The electric motor 18 is controlled by the motor control ECU 12 that serves as a motor control unit. FIG. 2 is a schematic diagram illustrating the electrical configuration of the motor control ECU 12.

The motor control ECU 12 realizes appropriate steering assistance suited to a steering state, by driving the electric motor 18 on the basis of a steering torque Th detected by the torque sensor 11. The motor control ECU 12 includes a microcomputer 40, a drive circuit (inverter circuit) 31 that is controlled by the microcomputer 40 and that supplies electric power to the electric motor 18, and a current detection unit 32 that detects a motor current passing through the electric motor 18.

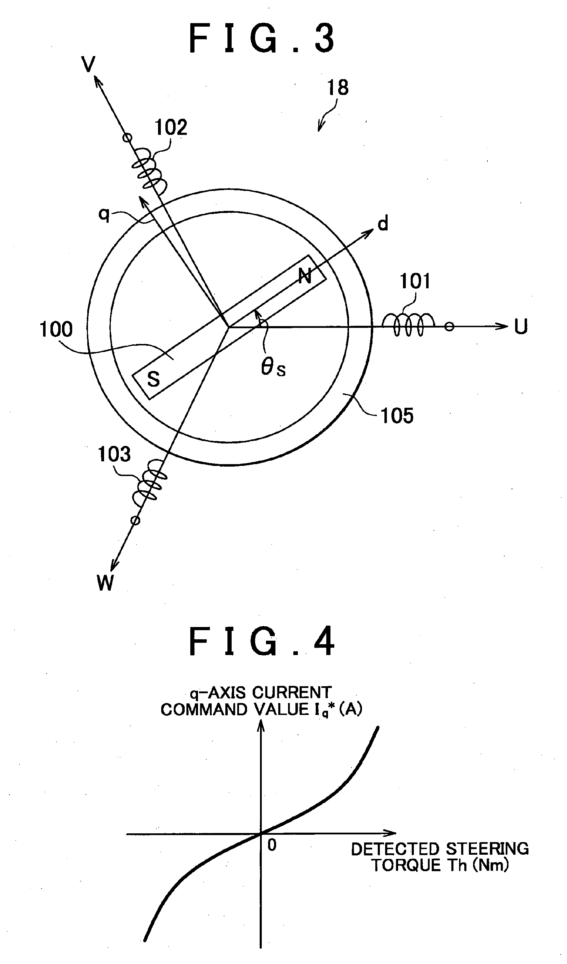

The electric motor 18 is, for example, a three-phase brushless motor, and includes a rotor 100, which serves as a field magnet, and a stator 105 provided with U-phase, V-phase, and W-phase stator coils 101, 102, 103, as schematically illustrated in FIG. 3. The electric motor 18 may be an electric motor of an inner rotor type, in which a stator is arranged outside a rotor so as to face the rotor, or may be an electric motor of an outer rotor type, in which a stator is arranged inside a tubular rotor so as to face the rotor.

A UVW coordinate system that is a three-phase fixed coordinate system is defined, in which a U-axis, a V-axis, and a W-axis are set to the respective directions of the U-phase stator coil 101, the V-phase stator coil 102 and the W-phase stator coil 13. A dq coordinate system (an actual rotating coordinate system) that is a two-phase rotating coordinate system is defined, in which a d-axis that is a magnetic pole axis is set to the magnetic pole direction of the rotor 100 and a q-axis that is a torque axis is set to the direction orthogonal to the d-axis within a rotary plane of the rotor 100. The dq coordinate system is a rotating coordinate system that rotates together with the rotor 100. In the dq coordinate system, because only a q-axis current contributes to generation of torque of the rotor 100, a d-axis current is set to zero and the q-axis current is controlled on the basis of a desired torque. A rotation angle (electrical angle) $\theta$-S of the rotor 100 is a rotation angle of the d-axis with respect to the U-axis. The dq coordinate system is an actual rotating coordinate system that rotates in accordance with the rotor angle $\theta$-S. With the use of the rotor angle $\theta$-S, coordinate conversion between the UVW coordinate system and the dq coordinate system can be executed.

The microcomputer 40 includes a CPU and memories (a ROM, a RAM, a non-volatile memory, etc.), and is configured to function as a plurality of functional processing units by executing predetermined programs. The functional processing units include a current command value setting unit 41, a current deviation computation unit 42, a PI (Proportional Integral) control unit 43, a dq/UVW conversion unit 44, a PWM (Pulse Width Modulation) control unit 45, a UVW/dq conversion unit 46, and a rotation angle computation unit 47.

The rotation angle computation unit 47 computes a rotor rotation angle (electrical angle) (hereinafter, referred to as "rotor angle $\theta_s$") of the electric motor 18 on the basis of a signal output from the rotation angle sensor 25. The current command value setting unit 41 sets current values, which are values of currents that should be passed through coordinate axes of the dq coordinate system, as current command values. Specifically, the current command value setting unit 41 sets a d-axis current command value $I_d$* and a q-axis current command value $I_q$* (hereinafter, the d-axis current command value $I_d$* and the q-axis current command value Iq* will be collectively referred to as "two-phase current command values $I_{dq}$*" where appropriate). More specifically, the current command value setting unit 41 sets the q-axis current command value Iq* to a significant value, whereas it sets the d-axis current command value $I_d$* to zero. More specifically, the current command value setting unit 41 sets the q-axis current command value Iq* on the basis of the detected steering torque Th detected by the torque sensor 11.

An example of a manner of setting the q-axis current command value $I_q$* with respect to the detected steering torque Th is shown in FIG. 4. With regard to the detected steering torque Th, for example, a torque for steering to the right takes a positive value, and a torque for steering to the left takes a negative value. The q-axis current command value Iq* takes a positive value when an operation assist force for steering to the right should be generated by the electric motor 18, and takes a negative value when an operation assist force for steering to the left should be generated by the electric motor 18. The q-axis current command value Iq* with respect to a positive value of the detected steering torque Th takes a positive value, and the q-axis current command value Iq* with respect to a negative value of the detected steering torque Th takes a negative value. When the detected steering torque Th is zero, the q-axis current command value $I_q$* is zero. The q-axis current command value Iq* is set such that the absolute value of the q-axis current command value Iq* increases as the absolute value of the detected steering torque Th increases.

The two-phase current command values $I_{dq}$* set by the current command value setting unit 41 are provided to the current deviation computation unit 42. The current detection unit 32 detects a U-phase current $I_U$, a V-phase current $I_V$, and a W-phase current $I_W$ for the electric motor 18 (hereinafter, the U-phase current $I_U$, the V-phase current $I_V$, and the W-phase current $I_W$ will be collectively referred to as "three-phase detected currents $I_{UVW}$" where appropriate). The three-phase detected currents $I_{UVW}$ detected by the current detection unit 32 are provided to the UVW/dq conversion unit 46.

The UVW/dq conversion unit 46 executes coordinate conversion from the three-phase detected currents $I_{UVW}$ (the U-phase current $I_U$, the V-phase current $I_V$, and the W-phase current $I_W$) of the UVW coordinate system detected by the current detection unit 32, into two-phase detected currents $I_d$, $I_q$ of the dq coordinate system (hereinafter, the two-phase detected currents $I_d$, $I_q$ will be collectively referred to as "two-phase detected currents $I_{dq}$" where appropriate). The rotor angle $\theta_S$ computed by the rotation angle computation unit 47 is used for this coordinate conversion.

The current deviation computation unit 42 computes deviations between the two-phase current command values $I_{dq}$* set by the current command value setting unit 41 and the two-phase detected currents $I_{dq}$ provided from the UVW/dq conversion unit 46. Specifically, the current deviation computation unit 42 computes a deviation of the d-axis detected current $I_d$ with respect to the d-axis current command value $I_d$* and a deviation of the q-axis detected current Iq with respect to the q-axis current command value Iq*. These deviations are provided to the PI control unit 43.

The PI control unit 43 generates two-phase voltage command values $V_{dq}$* (the d-axis voltage command value $V_d$* and the q-axis voltage command value $V_q$*), which are values of voltages that should be applied to the electric motor 18, by executing a PI computation on the current deviations computed by the current deviation computation unit 42. The two-phase voltage command values $V_{dq}$* are provided to the dq/UVW conversion unit 44. The dq/UVW conversion unit 44 executes coordinate conversion from the two-phase voltage command values $V_{dq}$* into three-phase voltage command values $V_{UVW}$*. The rotor angle $\theta_S$ computed by the rotation angle computation unit 47 is used for this coordinate conversion. The three-phase voltage command values $V_{UVW}$* consist of a U-phase voltage command value $V_U$*, a V-phase voltage command value $V_V$*, and a W-phase voltage command value $V_W$*. The three-phase voltage command values $V_{UVW}$* are provided to the PWM control unit 45.

The PWM control unit 45 generates a U-phase PWM control signal, a V-phase PWM control signal, and a W-phase PWM control signal having duty ratios corresponding to the U-phase voltage command value $V_U$*, the V-phase voltage command value $V_V$*, and the W-phase voltage command value $V_W$*, respectively, and provides these control signals to the drive circuit 31. The drive circuit 31 is formed of an inverter circuit with three phases corresponding to the U-phase, the V-phase, and the W-phase. When power elements constituting the inverter circuit are controlled by the PWM control signals provided from the PWM control unit 45, voltages corresponding to the three-phase voltage command values $V_{UVW}$* are applied to the U-phase stator coil 101, the V-phase stator coil 102 and the W-phase stator coil 103 of the electric motor 18.

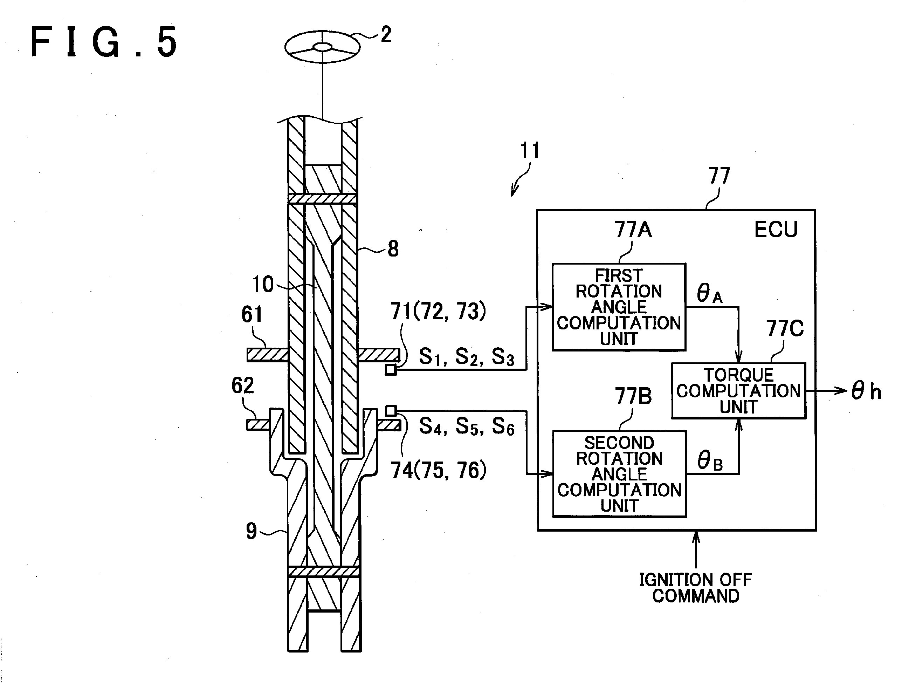

The current deviation computation unit 42 and the PI control unit 43 constitute a current feedback controller. Due to the action of the current feedback controller, motor currents passing through the electric motor 18 are controlled so as to approach the two-phase current command values $I_{dq}$* set by the current command value setting unit 41. FIG. 5 is a schematic view schematically showing the configuration of the torque sensor 11.

An annular first magnet (a multipolar magnet) 61 is connected to the input shaft 8 so as to be rotatable together with the input shaft 8. Three magnetic sensors 71, 72, 73 that respectively output sinusoidal signals having a phase difference in accordance with the rotation of the first magnet 61 are arranged below the first magnet 61. An annular second magnet (a multipolar magnet) 62 is connected to the output shaft 9 so as to be rotatable together with the output shaft 9. Three magnetic sensors 74, 75, 76 that respectively output sinusoidal signals having a phase difference in accordance with the rotation of the second magnet 62 are arranged above the second magnet 62.

The output signals $S_1$ to $S_6$ from the respective magnetic sensors 71 to 76 are input into a torque computation ECU 77 used to compute a steering torque that is applied to the input shaft 8. A power supply for the torque computation ECU 77 is turned on when an ignition key is turned on. When the ignition key is turned off, an ignition key off operation signal indicating that the ignition key is turned off is input into the torque computation ECU 77. A magnetic sensor including an element having electrical characteristics that vary due to the action of a magnetic force, for example, a Hall element or a magnetoresistive element (a MR element) may be used as each of the magnetic sensors. In the present embodiment, a Hall element is used as each of the magnetic sensors.

The magnets 61, 62, the magnetic sensors 71 to 76, and the torque computation ECU 77 constitute the torque sensor 11. The torque computation ECU 77 includes a microcomputer. The microcomputer is provided with a CPU and memories (a ROM, a RAM, a nonvolatile memory, etc.), and functions as a plurality of functional processing units by executing predetermined programs. The functional processing units include a first rotation angle computation unit 77A, a second rotation angle computation unit 77B, and a torque computation unit 77C.

The first rotation angle computation unit 77A computes the rotation angle (an electrical angle $\theta_A$) of the input shaft 8 on the basis of the output signals $S_1$, $S_2$, $S_3$ from the three magnetic sensors 71, 72, 73. The second rotation angle computation unit 77B computes the rotation angle (an electrical angle $\theta_B$) of the output shaft 9 on the basis of the output signals $S_4$, $S_5$, $S_6$ from the three magnetic sensors 74, 75, 76. The torque computation unit 77C computes the steering torque Th applied to the input shaft 8 on the basis of the rotation angle $\theta_A$ of the input shaft 8 detected by the first rotation angle computation unit 77A and the rotation angle $\theta_B$ of the output shaft 9 detected by the second rotation angle computation unit 77B. Specifically, the steering torque Th is computed according to the following expression (1) where K is a spring constant of the torsion bar 10 and N is the number of magnetic pole pairs formed in each of the magnets 61,62.

$$Th = \{(\theta_A - \theta_B) / N\} \times K \qquad (1)$$

The first magnet 61, the magnetic sensors 71, 72, 73 and the first rotation angle computation unit 77A constitute a first rotation angle detection device used to detect the rotation angle $\theta_A$ of the input shaft 8. The second magnet 62, the magnetic sensors 74, 75, 76 and the second rotation angle computation unit 77B constitute a second rotation angle detection device used to detect the rotation angle $\theta_B$ of the output shaft 9. Because an operation of the first rotation angle detection device (the first rotation angle computation unit 77A) is the same as an operation of the second rotation angle detection device (the second rotation angle computation unit 77B), only the operation of the first rotation angle detection device (the first rotation computation unit 77A) will be described below.

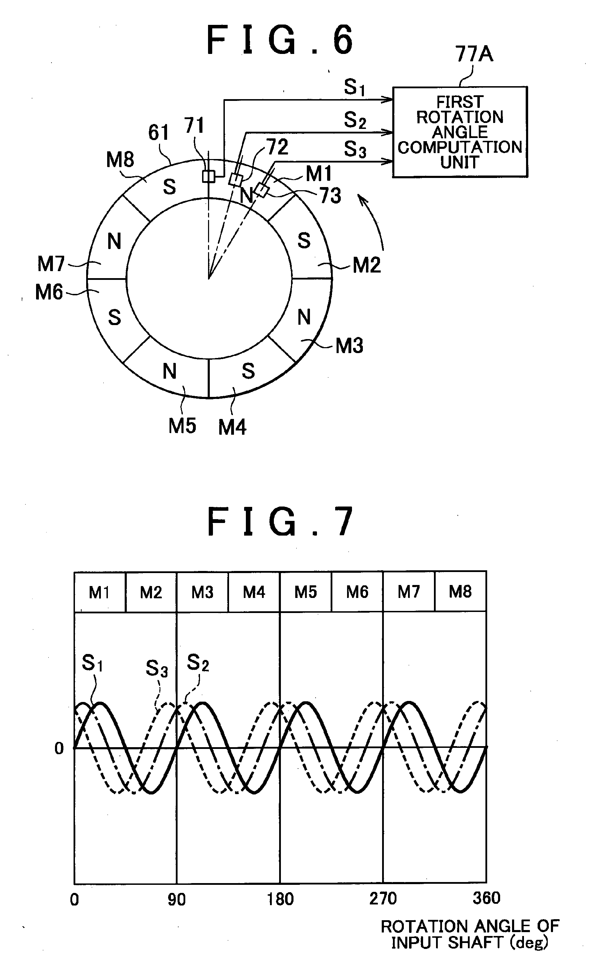

FIG. 6 is a schematic diagram illustrating the configuration of the first magnet 61 and the arrangement of the three magnetic sensors 71, 72, 73. The first magnet 61 has four magnetic pole pairs (M1, M2), (M3, M4), (M5, M6), (M7, M8) arranged at equal angular intervals in the circumferential direction. That is, the first magnet 61 has the eight magnetic poles M1 to M8 arranged at the equal angular intervals. The magnetic poles M1 to M8 are arranged at angular intervals (angular widths) of approximately 45° (approximately 180° in electrical angle) around the central axis of the input shaft 8. The magnitudes of magnetic forces of the magnetic poles M1 to M8 are substantially equal to each other.

The three magnetic sensors 71, 72, 73 are arranged so as to face a lower annular end face of the first magnet 61. In the following description, the magnetic sensor 71 will be referred to as a first magnetic sensor 71, the magnetic sensor 72 will be referred to as a second magnetic sensor 72, and the magnetic sensor 73 will be referred to as a third magnetic sensor 73 where appropriate. The first magnetic sensor 71 and the second magnetic sensor 72 are arranged at an angular interval of 60° in electrical angle (15° in mechanical angle) around the central axis of the input shaft 8. The second magnetic sensor 72 and the third magnetic sensor 73 are arranged at an angular interval of 60° (15° in mechanical angle) in electrical angle around the central axis of the input shaft 8. Therefore, the first magnetic sensor 71 and the third magnetic sensor 73 are arranged at an angular interval of 120° in electrical angle (30° in mechanical angle) around the central axis of the input shaft 8.

The sum of the angular interval between the second magnetic sensor 72 and the first magnetic sensor 71 and the angular interval between the second magnetic sensor 72 and the third magnetic sensor 73 is 120° in electrical angle, and is set smaller than the angular width of one magnetic pole (180° electrical angle). It may be considered that, as the angular interval between the first magnetic sensor 71 and the second magnetic sensor 72, there are two kinds of angular intervals, that is, the angular interval with respect to the second magnetic sensor 72 in the clockwise direction in FIG. 6 and the angular interval with respect to the second magnetic sensor 72 in the counterclockwise direction in FIG. 6. However, in this specification, among the two kinds of angular intervals, the angular interval having a smaller electrical angle will be referred to as the angular interval between the first magnetic sensor 71 and the second magnetic sensor 72. In other words, the angular interval between the first magnetic sensor 71 and the second magnetic sensor 72 is the angular interval having an electrical angle smaller than 180° among the two kinds of angular intervals. The same applies to the angular interval between the second magnetic sensor 72 and the third magnetic sensor 73.

The direction indicated by an arrow in FIG. 6 is defined as the forward rotation direction of the input shaft 8. The rotation angle of the input shaft 8 increases as the input shaft 8 is rotated in the forward direction, and the rotation angle of the input shaft 8 decreases as the input shaft 8 is rotated in the reverse direction. Sinusoidal signals $S_1$, $S_2$, $S_3$ are respectively output from the magnetic sensors 71, 72, 73 in accordance with rotation of the input shaft 8, as illustrated in FIG. 7. Note that a rotation angle (deg) on the abscissa axis in FIG. 7 represents a mechanical angle.

In the following description, the output signal $S_1$ from the first magnetic sensor 71 will be referred to as a first output signal $S_1$ or a first sensor value $S_1$, the output signal $S_2$ from the second magnetic sensor 72 will be referred to as a second output signal $S_2$ or a second sensor value $S_2$, and the output signal $S_3$ from the third magnetic sensor 73 will be referred to as a third output signal $S_3$ or a third sensor value $S_3$, where appropriate. In the following description, a rotation angle of the input shaft 8 will be denoted by $\theta$ instead of $\theta_A$, for convenience of explanation. If each of the

output signals $S_1$, $S_2$, $S_3$ is a sinusoidal signal and a rotation angle of the input shaft 8 is $\theta$ (electrical angle), the output signal $S_1$ from the first magnetic sensor 71 is expressed by $S_1 = A_1 \cdot \sin\theta$, the output signal $S_2$ from the second magnetic sensor 72 is expressed by $S_2 = A_2 \cdot \sin(\theta + 60)$, and the output signal $S_3$ from the third magnetic sensor 73 is expressed by $S_3 = A_3 \cdot \sin(\theta + 120)$. Each of $A_1$, $A_2$ and $A_3$ represents an amplitude. The phase difference between the first output signal $S_1$ and the second output signal $S_2$ is 60°. The phase difference between the second output signal $S_2$ and the third output signal $S_3$ is also 60°. Therefore, the phase difference between the first output signal $S_1$ and the third output signal $S_3$ is 120°.

A basic concept of a method of computing the rotation angle $\theta$ with the use of the first rotation angle computation unit 77A will be described. The modes of computation of the rotation angle $\theta$ executed by the first rotation angle computation unit 77A include a first computation mode to a seventh computation mode. Each computation mode will be described below. The first computation mode is a computation mode that is applied when both the first and second magnetic sensors 71, 72 sense one and the same magnetic pole for three consecutive sampling periods (three consecutive computation periods). In the first computation mode, the rotation angle $\theta$ is computed on the basis of the output signals from the first and second magnetic sensors 71, 72, which are sampled at three sampling timings.

A phase difference (electrical angle) between the first output signal $S_1$ and the second output signal $S_2$ will be denoted by C. The number of the present sampling period (the number of the present computation period) will be denoted by (n), the number of the immediately preceding sampling period will be denoted by (n - 1), and the number of the second preceding sampling period will be denoted by (n - 2). A correction value used to correct a rotation angle computing error due to the variations of angular widths (pitch widths) of the magnetic poles M1 to M8 will be referred to as an angular width error correction value, and will be denoted by E.

When the phase difference C, the numbers of the sampling periods (n), (n - 1), (n - 2), and the angular width error correction value E are used, the first output signals $S_1$ sampled in the present sampling period, the immediately preceding sampling period, and the second preceding sampling period, and the second output signals $S_2$ sampled in the present sampling period, the immediately preceding sampling period, and the second preceding sampling period can be expressed by the following expressions (2a), (2b), (2c), (2d), (2e), (2f), respectively.

$$S_1(n) = A_1(n)\sin(E_1(n)\theta(n)) \tag{2a}$$

$$S_1(n-1) = A_1(n-1)\sin(E_1(n-1)\theta(n-1)) \tag{2b}$$

$$S_1(n-2) = A_1(n-2)\sin(E_1(n-2)\theta(n-2)) \tag{2c}$$

$$S_2(n) = A_2(n)\sin(E_2(n)\theta(n) + C) \tag{2d}$$

$$S_2(n-1) = A_2(n-1)\sin(E_2(n-1)\theta(n-1) + C) \tag{2e}$$

$$S_2(n-2) = A_2(n-2)\sin(E_2(n-2)\theta(n-2) + C) \tag{2f}$$

In the expressions (2a) to (2f), $E_1(x)$ is an angular width error correction value corresponding to a magnetic pole sensed by the first magnetic sensor 71 in an x-th computation period. $E_2(x)$ is an angular width error correction value corresponding to a magnetic pole sensed by the second magnetic sensor 72 in an x-th computation period.

If an angular width of a given magnetic pole is w (electrical angle), an angular width error $\theta_{err}$ (electrical angle) of this magnetic pole can be defined by the following expression (3).

$$\theta_{err} = w - 180 \tag{3}$$

The angular width error correction value E for this magnetic pole can be defined by the following expression (4).

$$E = 180 / w$$

$$= 180 / (\theta_{err} + 180) \qquad (4)$$

The angular width error correction value E for each magnetic pole is a piece of information regarding a magnetic pole width of the magnetic pole. Note that the piece of the information regarding the magnetic pole width of each magnetic pole may be an angular width w of the magnetic pole or an angular width error $\theta_{err}$ of the magnetic pole.

If C is a known quantity, the number of unknown quantities included in the six expressions expressed by the expressions (2a) to (2f) is 15. Because the number of the unknown quantities is greater than the number of the expressions, simultaneous equations constituted of the six expressions cannot be solved in this state. Therefore, in the present embodiment, by setting a short sampling interval (sampling period), variations of amplitudes due to temperature changes between three sampling timings are assumed to be non-existent. That is, on the assumption that amplitudes $A_1(n)$, $A_1(n - 1)$ $A_1(n - 2)$ of the output signals from the first magnetic sensor 71, which are sampled at three sampling timings, are equal to each other, the amplitudes $A_1(n)$, $A_1(n - 1)$, $A_1(n - 2)$ are expressed by $A_1$. Similarly, on the assumption that amplitudes $A_2(n)$, $A_2(n - 1)$, $A_2(n - 2)$ of the output signals from the second magnetic sensor 72, which are sampled at three sampling timings, are equal to each other, the amplitudes $A_2(n)$, $A_2(n - 1)$, $A_2(n - 2)$ are expressed by $A_2$.

When both the magnetic sensors 71, 72 sense one and the same magnetic pole at the three sampling timings, angular width error correction values $E_1(n)$, $E_1(n - 1)$, $E_1(n - 2)$, $E_2(n)$, $E_2(n - 1)$, $E_2(n - 2)$ included in the output signals from the magnetic sensors 71, 72, which are sampled at the three sampling timings, are equal to each other, and hence they are expressed by E. As a result, the expressions (2a) to (2f) can be expressed by the following expressions (5a) to (5f), respectively.

$$S_1(n) = A_1 \sin(E\theta(n)) \qquad (5a)$$

$$S_1(n - 1) = A_1 \sin(E\theta(n - 1)) \qquad (5b)$$

$$S_1(n - 2) = A_1 \sin(E\theta(n - 2)) \qquad (5c)$$

$$S_2(n) = A_2 \sin(E\theta(n) + C) \qquad (5d)$$

$$S_2(n - 1) = A_2 \sin(E\theta(n - 1) + C) \qquad (5e)$$

$$S_2(n - 2) = A_2 \sin(E\theta(n - 2) + C) \qquad (5f)$$

The number of unknown quantities ($A_1$, $A_2$, E, $\theta(n)$, $\theta(n - 1)$, $\theta(n - 2)$) included in these six expressions is six. That is, the number of the unknown quantities is equal to or smaller than the number of the expressions, and hence simultaneous equations constituted of the six expressions can be solved. Therefore, by solving the simultaneous equations constituted of the six expressions (5a) to (5f), the rotation angle $\theta(n)$ of the input shaft 8 can be computed.

Hereinafter, the case where the phase difference C between the sinusoidal signals output from the magnetic sensors 71, 72 is 60° will be described in detail. When the phase difference C is 60°, the six expressions (5a) to (5f) can be expressed by the following expressions (6a) to (6f), respectively.

$$S_1(n) = A_1 \sin(E\theta(n)) \qquad (6a)$$

$$S_1(n - 1) = A_1 \sin(E\theta(n - 1)) \qquad (6b)$$

$$S_1(n - 2) = A_1 \sin(E\theta(n - 2)) \qquad (6c)$$

$$S_2(n) = A_2\sin(E\theta(n) + 60) \tag{6d}$$

$$S_2(n - 1) = A_2\sin(E\theta(n - 1) + 60) \tag{6e}$$

$$S_2(n - 2) = A_2\sin(E\theta(n - 2) + 60) \tag{6f}$$

If $E\theta(n)$ is regarded as one unknown quantity, by solving simultaneous equations constituted of four expressions (6a), (6b), (6d), (6e) among the six expressions (6a) to (6f), $E\theta(n)$ can be expressed by the following expression (7) (hereinafter, referred to as "$E\theta$ basic arithmetic expression (7)").

$$E\theta[n] = \frac{1}{4}\cos^{-1}\left(1 - \frac{(3p_1^2 p_2^2 - 2p_1^2 - 2p_2^2 + p_1 p_2)^2}{2(p_1 - p_2)^2(p_1^2 + p_1 p_2 + p_2^2)}\right)$$

$$- \frac{1}{4}\cos^{-1}\left(\frac{1}{2} - \frac{3}{2} \cdot \frac{p_1 p_2 + p_2^2}{p_1^2 + p_1 p_2 + p_2^2}\right) \tag{7}$$

where

$$p_1 = \frac{S_1[n]}{S_1[n-1]}$$

$$p_2 = \frac{S_2[n]}{S_2[n-1]}$$

By solving simultaneous equations constituted of the six expressions (6a) to (6f), the angular width error correction value E can be expressed by the following expression (8) (hereinafter, referred to as "E arithmetic expression (8)").

$$E = \frac{1}{120} \cdot \cos^{-1}\left(\frac{q_1^2 t^2 - 2q_1 q_2 t + q_2^2}{2t(S_1[n]S_2[n] - S_1[n-1]S_2[n-1])^2} - 1\right) \tag{8}$$

where

$$q_1 = S_1[n-1]^2 - S_1[n]^2$$

$$q_2 = S_2[n]^2 - S_2[n-1]^2$$

$$t = \frac{S_1[n]S_2[n]q_3 + S_1[n-1]S_2[n-1]q_4 + S_1[n-2]S_2[n-2]q_1}{S_1[n]S_2[n]q_5 + S_1[n-1]S_2[n-1]q_6 + S_1[n-2]S_2[n-2]q_2}$$

$$q_3 = S_1[n-2]^2 - S_1[n-1]^2$$

$$q_4 = S_1[n]^2 - S_1[n-2]^2$$

$$q_5 = S_2[n-1]^2 - S_2[n-2]^2$$

$$q_6 = S_2[n-2]^2 - S_2[n]^2$$

By dividing E$\theta$(n) computed according to the E$\theta$ basic arithmetic expression (7) by the angular width error correction value E computed according to the E arithmetic expression (8), $\theta$(n) can be obtained. That is, $\theta$(n) can be obtained according to the following expression (9).

$$\theta(n) = E\theta(n) / E \qquad (9)$$

Note that, when at least one of the denominators of the fractions included in the expression (8) is zero, the angular width error correction value E cannot be computed according to the expression (8). Therefore, in the present embodiment, when at least one of the denominators of the fractions included in the expression (8) is zero, the immediately preceding computed angular width error correction value E is used as the present angular width error correction value E.

The case where at least one of the denominators of the fractions included in the expression (8) is zero is the case where at least one of the three conditions expressed by the following expressions (10), (11), (12) is satisfied.

$$S_1[n]S_2[n] - S_1[n-1]S_2[n-1] = 0 \qquad (10)$$

$$S_1[n]S_2[n]q_3 + S_1[n-1]S_2[n-1]q_4 - S_1[n-2]S_2[n-2]q_1 = 0 \qquad (11)$$

$$S_1[n]S_2[n]q_5 + S_1[n-1]S_2[n-1]q_6 + S_1[n-2]S_2[n-2]q_2 = 0 \qquad (12)$$

where

$$q_1 = S_1[n]^2 - S_1[n-1]^2$$

$$q_2 = S_2[n]^2 - S_2[n-1]^2$$

$$q_3 = S_1[n-2]^2 - S_1[n-1]^2$$

$$q_4 = S_1[n]^2 - S_1[n-2]^2$$

$$q_5 = S_2[n-1]^2 - S_2[n-2]^2$$

$$q_6 = S_2[n-2]^2 - S_2[n]^2$$

When at least one of the denominators of the fractions included in the E$\theta$ basic arithmetic expression (7) is zero, E$\theta$(n) cannot be computed according to the E$\theta$ basic arithmetic expression (7). In the present embodiment, when at least one of the denominators of the fractions included in the E$\theta$ basic arithmetic expression (7) is zero, E$\theta$(n) is computed according to an arithmetic expression that differs from the E$\theta$ basic arithmetic expression (7). Further, in the present embodiment, if E$\theta$(n) can be computed according to an arithmetic expression that is simpler than the E$\theta$ basic arithmetic expression (7) although E$\theta$(n) can be computed according to the E$\theta$ basic arithmetic expression (7), E$\theta$(n) is computed according to the arithmetic expression that is simpler than the basic E$\theta$ arithmetic expression (7). In the present embodiment, the case where E$\theta$(n) can be computed more easily than using the basic E$\theta$ arithmetic expression (7) is the case where $S_1(n) = 0$ or the case where $S_2(n) = 0$.

In the present embodiment, as arithmetic expressions used to compute E$\theta$(n), ten kinds of arithmetic expressions including the E$\theta$ basic arithmetic expression (7) are prepared. Table 1 shows the ten kinds of arithmetic expressions and the conditions for the arithmetic expressions. Note that, at the time of computing E$\theta$(n), whether the conditions are satisfied is determined starting from the conditions on the top of Table 1. If it is determined that the conditions are satisfied, whether the subsequent conditions are satisfied is not determined. Then, E$\theta$(n) is computed according to the arithmetic expression corresponding to the conditions that are determined to be satisfied.

Table 1

Table 1

| | | CONDITIONS (AND) | ARITHMETIC EXPRESSIONS |
|---|---|---|---|
| | 1 | $S_1[n]\neq0$, $S_2[n-1]\neq0$, $S_2[n]\neq0$, $S_1[n-1]\neq0$, $P_1$-$P_2\neq0$ | E$\theta$ BASIC ARITHMETIC EXPRESSION (EXPRESSION (7)) |
| | 2 | $S_1[n]\neq0$, $S_2[n-1]\neq0$, $S_2[n]\neq0$, $S_1[n-1]\neq0$, $P_1$-$P_2$=0 | E$\theta$[n] ← IMMEDIATELY PRECEDING VALUE |
| | 3 | $S_1[n]\neq0$, $S_2[n-1]\neq0$, $S_2[n]\neq0$, $S_1[n-1]=0$, $S_2[n-1]>0$ | $E\theta[n]=\sin^{-1}\left(\dfrac{\sqrt{3}}{2}\cdot\dfrac{S_2[n]}{S_2[n-1]}\right)-60$ |
| | 4 | $S_1[n]\neq0$, $S_2[n-1]\neq0$, $S_2[n]$#0, $S_1[n-1]=0$, $S_2[n-1]<0$ | $E\theta[n]=\sin^{-1}\left(-\dfrac{\sqrt{3}}{2}\cdot\dfrac{S_2[n]}{S_2[n-1]}\right)-60$ |
| | 5 | $S_1[n]$#0, $S_2[n-1]\neq0$, $S_2[n]=0$, $S_1[n]>0$ | E$\theta$[n]=120 |
| | 6 | $S_1[n]\neq0$, $S_2[n-1]\neq0$, $S_2[n]=0$, $S_1[n]<0$ | E$\theta$[n]=-60 |
| | 7 | $S_1[n]\neq0$, $S_2[n-1]=0$, $S_1[n-1]>0$ | $E\theta[n]=\sin^{-1}\left(\dfrac{\sqrt{3}}{2}\cdot\dfrac{S_1[n]}{S_1[n-1]}\right)$ |
| | 8 | $S_1[n]\neq0$, $S_2[n-1]=0$, $S_1[n-1]<0$ | $E\theta[n]=\sin^{-1}\left(-\dfrac{\sqrt{3}}{2}\cdot\dfrac{S_1[n]}{S_1[n-1]}\right)$ |
| | 9 | $S_1[n]=0$, $S_2[n]>0$ | E$\theta$[n]=0 |
| | 10 | $S_1[n]=0$, $S_2[n]<0$ | E$\theta$[n]=180 |

The first arithmetic expression from the top of Table 1 is the E$\theta$ basic arithmetic expression (7). The E$\theta$ basic arithmetic expression (7) is used when the condition that neither $S_1(n)$ nor $S_2(n)$ is zero and the condition that none of the denominators of the fractions included in the E$\theta$ basic arithmetic expression (7) are zero are both satisfied. The condition that none of the denominators of the fractions included in the E$\theta$ basic arithmetic expression (7) are zero is satisfied when $S_1(n - 1) \neq 0$, $S_2(n - 1) \neq 0$, $p_1 - p_2 \neq 0$, and $p_1^2 + p_1p_2 + p_2^2 \neq 0$. Note that $S_1(n - 1)$ is the denominator of $p_1$ and $S_2(n - 1)$ is the denominator of $p_2$.

Note that, $p_1^2 + p_1p_2 + p_2^2 = 0$ is satisfied only when $p_1 = p_2 = 0$. However, the phase of a sinusoidal signal output from the first magnetic sensor 71 is 60° different from the phase of a sinusoidal signal output from the second magnetic sensor 72, and hence the sensor values $S_1$, $S_2$ from both the magnetic sensors 71, 72 do not become zero at the same time. Therefore, $p_1^2 + p_1p_2 + p_2^2 = 0$ is not satisfied. Therefore, the condition that none of the denominators

13

of the fractions included in the $E\theta$ basic arithmetic expression (7) are zero is satisfied when all the conditions that $S_1(n - 1) \neq 0$, $S_2(n - 1) \neq 0$, and $p_1 - p_2 \neq 0$ are satisfied.

The second arithmetic expression from the top of Table 1 is an arithmetic expression that is used when $p_1 - p_2 = 0$. The case where $p_1 - p_2 = 0$ is satisfied will be considered blow. In this case, because $p_1 = p_2$, the following expression (13) is satisfied.

$$\frac{A_1 \sin E\theta[n]}{A_1 \sin E\theta[n-1]} = \frac{A_2 \sin(E\theta[n]+60)}{A_2 \sin(E\theta[n-1]+60)} \qquad (13)$$

When this expression is deformed, the following expression (14) can be obtained.

$$\frac{\sin E\theta[n-1]}{\sin E\theta[n]} \cdot \frac{\sin(E\theta[n]+60)}{\sin(E\theta[n-1]+60)} = 1 \qquad (14)$$

The case where the expression (14) is satisfied is the case where $E\theta(n)$ is equal to $E\theta(n - 1)$, that is, the case where the present value $E\theta(n)$ is equal to the immediately preceding value $E\theta(n - 1)$. When the condition that neither $S_1(n)$ nor $S_2(n)$ is zero, the condition that neither the denominator $S_1(n - 1)$ of $p_1$ nor the denominator $S_2(n - 1)$ of $p_2$ is zero, and the condition that $p_1 - p_2 = 0$ are all satisfied, the immediately preceding computed $E\theta(n - 1)$ is used as the present $E\theta(n)$.

The third and fourth arithmetic expressions from the top of Table 1 are arithmetic expressions that are used when the denominator $S_1(n - 1)$ of $p_1$ is zero. Because $S_1(n - 1) = A_1 \sin E\theta(n - 1)$, $S_1(n - 1) = 0$ is satisfied when $\sin E\theta(n - 1) = 0$. That is, when $E\theta(n - 1)$ is 0° or 180°, $S_1(n - 1)$ is zero. Because $S_2(n - 1) = A_2 \sin(E\theta(n - 1) + 60)$, $S_2(n - 1) > 0$ is satisfied when $E\theta(n - 1)$ is 0°, and $S_2(n - 1) < 0$ is satisfied when $E\theta(n - 1)$ is 180°. $E\theta(n - 1) = 0$ is satisfied when $S_1(n - 1) = 0$ and $S_2(n - 1) > 0$, and $E\theta(n - 1) = 180$ is satisfied when $S_1(n - 1) = 0$ and $S_2(n - 1) < 0$..

When $E\theta(n - 1) = 0$, the expressions (6d), (6e) are expressed by the following expressions (15d), (15e), respectively.

$$S_2(n) = A_2 \sin(E\theta(n) + 60) \qquad (15d)$$

$$S_2(n - 1) = A_2 \sin 60 = \sqrt{3} / 2 \cdot A_2 \qquad (15e)$$

The following expression (16) is obtained from the expression (15e).

$$A_2 = (2 / \sqrt{3}) \cdot S_2(n - 1) \qquad (16)$$

When the expression (16) is substituted into the expression (15d), the following expression (17) is obtained.

$$\sin(E\theta(n) + 60) = (\sqrt{3} / 2) \cdot (S_2(n) / S_2(n - 1)) \qquad (17)$$

Therefore, $E\theta(n)$ can be computed according to the following expression (18).

$$E\theta[n] = \sin^{-1}\left(\frac{\sqrt{3}}{2} \cdot \frac{S_2[n]}{S_2[n-1]}\right) - 60 \qquad (18)$$

As shown in the third row from the top of Table 1, when the conditions that neither $S_1(n)$ nor $S_2(n)$ is zero, the

denominator $S_2(n - 1)$ of $p_2$ is not zero, the denominator $S_1(n - 1)$ of $p_1$ is zero, and $S_2(n - 1) > 0$ are all satisfied, $E\theta(n)$ is computed according to the arithmetic expression expressed by the expression (18). On the other hand, when $E\theta(n - 1) = 180$, the expressions (6d), (6e) are expressed by the following expressions (19d), (19e), respectively.

$$S_2(n) = A_2 sin(E\theta(n) + 60) \tag{19d}$$

$$S_2(n - 1) = A_2 sin240 = -\sqrt{3} / 2 \cdot A_2 \tag{19e}$$

The following expression (20) is obtained from the expression (19e).

$$A_2 = (-2 / \sqrt{3}) \cdot S_2(n - 1) \tag{20}$$

When the expression (20) is substituted into the expression (19d), the following expression (21) is obtained.

$$sin(E\theta(n) + 60) = (-\sqrt{3} / 2) \cdot (S_2(n) / S_2(n - 1)) \tag{21}$$

Therefore, $E\theta(n)$ can be computed according to the following expression (22).

$$E\theta[n] = sin^{-1}\left(-\frac{\sqrt{3}}{2} \cdot \frac{S_2[n]}{S_2[n-1]}\right) - 60 \tag{22}$$

As shown in the fourth row from the top of Table 1, when the conditions that neither $S_1(n)$ nor $S_2(n)$ is zero, the denominator $S_2(n - 1)$ of $p_2$ is not zero, the denominator $S_1(n - 1)$ of $p_1$ is zero, and $S_2(n - 1) < 0$ are all satisfied, $E\theta(n)$ is computed according to the arithmetic expression expressed by the expression (22). The fifth and sixth arithmetic expressions from the top of Table 1 are arithmetic expressions used when $S_2(n) = 0$ is satisfied. Because $S_2(n) = A_2 sin(E\theta(n) + 60)$, when $sin(E\theta(n) + 60) = 0$, $S_2(n) = 0$ is satisfied. That is, when $E\theta(n)$ is -60° or 120°, $S_2(n) = 0$ is satisfied. Because $S_1(n) = A_1 sinE\theta(n)$, $S_1(n) < 0$ is satisfied when $E\theta(n)$ is -60°, and $S_1(n) > 0$ is satisfied when $E\theta(n) = 120$. Therefore, $E\theta(n) = 120$ is satisfied when $S_2(n) = 0$ and $S_1(n) > 0$, and $E\theta(n) = -60$ is satisfied when $S_2(n) = 0$ and $S_1(n) < 0$.

As shown in the fifth row from the top of Table 1, when the conditions that $S_1(n)$ is not zero, the denominator $S_2(n - 1)$ of $p_2$ is not zero, $S_2(n) = 0$, and $S_1(n) > 0$ are all satisfied, $E\theta(n)$ is computed as 120°. As shown in the sixth row from the top of Table 1, when the conditions that $S_1(n)$ is not zero, the denominator $S_2(n - 1)$ of $p_2$ is not zero, $S_2(n) = 0$, and $S_1(n) < 0$ are all satisfied, $E\theta(n)$ is computed as -60°.

The seventh and eighth arithmetic expressions from the top of Table 1 are arithmetic expressions used when the denominator $S_2(n - 1)$ of $p_2$ is zero. Because $S_2(n - 1) = A_2 sin(E\theta(n - 1) + 60)$, when $sin(E\theta(n - 1) + 60) = 0$, $S_2(n - 1) = 0$ is satisfied. That is, when $E\theta(n - 1)$ is -60° or 120°, $S_2(n - 1)$ is zero. Because $S_1(n - 1) = A_1 sinE\theta(n - 1)$, $S_1(n - 1) < 0$ is satisfied when $E\theta(n - 1)$ is -60°, and $S_1(n - 1) > 0$ is satisfied when $E\theta(n - 1)$ is 120°. Therefore, $E\theta(n - 1) = 120$ is satisfied when $S_2(n - 1) = 0$ and $S_1(n - 1) > 0$, and $E\theta(n - 1) = -60$ is satisfied when $S_2(n - 1) = 0$ and $S_1(n - 1) < 0$.

When $E\theta(n - 1) = 120$, the expressions (6a), (6b) are expressed by the following expressions (23a), (23b), respectively.

$$S_1(n) = A_1 sinE\theta(n) \tag{23a}$$

$$S_1(n - 1) = A_1 sin120 = \sqrt{3} / 2 \cdot A_1 \tag{23b}$$

The following expression (24) is obtained from the expression (23b).

$$A_1 = (2 / \sqrt{3}) \cdot S_1(n - 1) \qquad (24)$$

When the expression (24) is substituted into the expression (23a), the following expression (25) is obtained.

$$\sin E\theta(n) = (\sqrt{3} / 2) \cdot (S_1(n) / S_1(n - 1)) \qquad (25)$$

$E\theta(n)$ can be computed according to the following expression (26).

$$E\theta[n] = \sin^{-1}\left( \frac{\sqrt{3}}{2} \cdot \frac{S_1[n]}{S_1[n-1]} \right) \qquad (26)$$

As shown in the seventh row from the top of Table 1, when the conditions that $S_1(n)$ is not zero, the denominator $S_2(n - 1)$ of $p_2$ is zero, and $S_1(n - 1) > 0$ are all satisfied, $E\theta(n)$ is computed according to the arithmetic expression expressed by the expression (26). On the other hand, when $E\theta(n - 1) = -60$, the expressions (6a), (6b) are expressed by the following expressions (27a), (27b), respectively.

$$S_1(n) = A_1 \sin E\theta(n) \qquad (27a)$$

$$S_1(n - 1) = A_1 \sin(-60) = -\sqrt{3} / 2 \cdot A_2 \qquad (27b)$$

The following expression (28) is obtained from the following expression (27b).

$$A_1 = (-2 / \sqrt{3}) \cdot S_1(n - 1) \qquad (28)$$

When the expression (28) is substituted into the expression (27a), the following expression (29) is obtained.

$$\sin E\theta(n) = (-\sqrt{3} / 2) \cdot (S_1(n) / S_1(n - 1)) \qquad (29)$$

$E\theta(n)$ can be computed according to the following expression (30).

$$E\theta[n] = \sin^{-1}\left( -\frac{\sqrt{3}}{2} \cdot \frac{S_1[n]}{S_1[n-1]} \right) \qquad (30)$$

As shown by the eighth row from the top of Table 1, when the conditions that $S_1(n)$ is not zero, the denominator $S_2(n - 1)$ of $p_2$ is zero, and $S_1(n - 1) < 0$ are all satisfied, $E\theta(n)$ is computed according to an arithmetic expression expressed by the expression (30). The ninth and tenth arithmetic expressions from the top of Table 1 are arithmetic expressions that are used when $S_1(n) = 0$ is satisfied. Because $S_1(n) = A_1 \sin E\theta(n)$, when $\sin E\theta(n) = 0$, $S_1(n) = 0$ is satisfied. That is, when $E\theta(n)$ is 0° or 180°, $S_1(n) = 0$ is satisfied. Because $S_2(n) = A_2 \sin(E\theta(n) + 60)$, $S_2(n) > 0$ is satisfied when $E\theta(n)$ is 0°, and $S_2(n) < 0$ is satisfied when $E\theta(n)$ is 180°. Therefore, $E\theta(n) = 0$ is satisfied when $S_1(n) = 0$ and $S_2(n) > 0$, and $E\theta(n) = 180$ is satisfied when $S_1(n) = 0$ and $S_2(n) < 0$.

As shown in the ninth row from the top of Table 1, when the conditions that $S_1(n)$ is zero and $S_2(n) > 0$ are both satisfied, $E\theta(n)$ is computed as 0°. As shown in the tenth row from the top of Table 1, when the conditions that $S_1(n)$ is zero and $S_2(n) < 0$ are both satisfied, $E\theta(n)$ is computed as 180°. When $E\theta(n)$ is computed, it is possible to compute the amplitude $A_1$ according to the expression (6a), and compute the amplitude $A_2$ according to the expression (6d). That is, it is possible to compute $E, \theta(n), A_1, A_2$ in the first computation mode.

The second computation mode is a computation mode that may be applied when both the second and third magnetic sensors 72, 73 sense one and the same magnetic pole for three consecutive sampling periods (three consecutive computation periods). In the second computation mode, the rotation angle θ is computed on the basis of the output signals from the second and third magnetic sensors 72, 73, which are sampled at three sampling timings.

When the output signals $S_2$, $S_3$ from the second magnetic sensor 72 and the third magnetic sensor 73 are expressed with the use of an angular width error correction value E, the output signal $S_2(n)$ from the second magnetic sensor 72 is expressed by $S_2(n) = A_2 \cdot \sin(E_2\theta(n) + 60)$, and the output signal $S_3(n)$ from the third magnetic sensor 73 is expressed by $S_3(n) = A_3 \cdot \sin(E_3\theta(n) + 120)$. Note that, $E_3$ is an angular width error correction value corresponding to a magnetic pole sensed by the third magnetic sensor 73. When the second magnetic sensor 72 and the third magnetic sensor 73 sense one and the same magnetic pole, $E_2$ is equal to $E_3$. Therefore, when $E_2$ and $E_3$ are denoted by E, the output signal $S_2(n)$ from the second magnetic sensor 72 is expressed by $S_2(n) = A_2 \cdot \sin(E\theta(n) + 60)$, and the output signal $S_3(n)$ from the third magnetic sensor 73 is expressed by $S_3(n) = A_3 \cdot \sin(E\theta(n) + 120)$.

When $(E\theta(n) + 60)$ is substituted by $E\Theta(n)$, the second output signal $S_2(n)$ is expressed by $S_2(n) = A_2 \cdot \sin E\Theta(n)$, and the third output signal $S_3(n)$ is expressed by $S_3(n) = A_3 \cdot \sin(E\Theta(n) + 60)$. Therefore, $E\Theta(n)$ and E can be computed with the use of the second output signal $S_2$ and the third output signal $S_3$ according to a method similar to the above-described method. Because $E\Theta(n) = E\theta(n) + 60$, $\theta(n) = (E\Theta(n) - 60) / E$ is satisfied. Therefore, the rotation angle $\theta(n)$ of the input shaft 8 can be computed by substituting the computed $E\Theta(n)$ and E into the expression $\theta(n) = (E\Theta(n) - 60) / E$. When $E\Theta(n)$ is computed, the amplitude $A_2$ and the amplitude $A_3$ can be computed. That is, in the second computation mode, E, $\theta(n)$, $A_2$, $A_3$ can be computed.

When the second and third output signals $S_2$, $S_3$, which are sampled at three sampling timings and which are used to compute the rotation angle in the second computation mode, are expressed by the following expressions (31a) to (31f) after the model of the expressions (6a) to (6f), an $E\Theta$ basic arithmetic expression and an E arithmetic expression can be expressed by the following expressions (32), (33), respectively.

$$S_2(n) = A_2\sin(E\theta(n) + 60) \qquad (31a)$$

$$S_2(n - 1) = A_2\sin(E\theta(n - 1) + 60) \qquad (31b)$$

$$S_2(n - 2) = A_2\sin(E\theta(n - 2) + 60) \qquad (31c)$$

$$S_3(n) = A_3\sin(E\theta(n) + 120) \qquad (31d)$$

$$S_3(n - 1) = A_3\sin(E\theta(n - 1) + 120) \qquad (31e)$$

$$S_3(n - 2) = A_3\sin(E\theta(n - 2) + 120) \qquad (31f)$$

$$E\Theta[n] = \frac{1}{4}\cos^{-1}\left(1 - \frac{(3p_2{}^2p_3{}^2 - 2p_2{}^2 - 2p_3{}^2 + p_2p_3)^2}{2(p_2-p_3)^2(p_2{}^2 + p_2p_3 + p_3{}^2)}\right)$$

$$-\frac{1}{4}\cos^{-1}\left(\frac{1}{2} - \frac{3}{2}\cdot\frac{p_2p_3 + p_3{}^2}{p_2{}^2 + p_2p_3 + p_3{}^2}\right) \qquad (32)$$

where

$$p_2 = \frac{S_2[n]}{S_2[n-1]}$$

$$p_3 = \frac{S_3[n]}{S_3[n-1]}$$

$$E = \frac{1}{120} \cdot \cos^{-1}\left(\frac{q_1^2 t^2 - 2q_1 q_2 t + q_2^2}{2t(S_2[n]S_3[n] - S_2[n-1]S_3[n-1])^2} - 1\right) \quad (33)$$

where

$$q_1 = S_1[n-1]^2 - S_1[n]^2$$

$$q_2 = S_3[n]^2 - S_3[n-1]^2$$

$$t = \frac{S_2[n]S_3[n]q_3 + S_2[n-1]S_3[n-1]q_4 + S_2[n-2]S_3[n-2]q_1}{S_2[n]S_3[n]q_5 + S_2[n-1]S_3[n-1]q_6 + S_2[n-2]S_3[n-2]q_2}$$

$$q_3 = S_2[n-2]^2 - S_2[n-1]^2$$

$$q_4 = S_2[n]^2 - S_2[n-2]^2$$

$$q_5 = S_3[n-1]^2 - S_3[n-2]^2$$

$$q_6 = S_3[n-2]^2 - S_3[n]^2$$

Note that the definitions of $q_1$ to $q_6$ and t in the E arithmetic expression (33) in the second computation mode are different from the definitions of $q_1$ to $q_6$ and t in the E arithmetic expression (8) in the first computation mode.

The third computation mode is a computation mode that may be applied when both the first and third magnetic sensors 71, 73 sense one and the same magnetic pole for three consecutive sampling periods (three consecutive computation periods). In the third computation mode, the rotation angle $\theta$ is computed on the basis of the output signals from the first and third magnetic sensors 71, 73, which are sampled at three sampling timings.

The first and third output signals, which are sampled at three sampling timings and which are used to compute the rotation angle in the third computation mode, are expressed by the following expressions (34a) to (34f) after the model of the expressions (6a) to (6f), respectively.

$$S_1(n) = A_1 \sin(E\theta(n)) \quad (34a)$$

$$S_1(n-1) = A_1 \sin(E\theta(n-1)) \quad (34b)$$

$$S_1(n - 2) = A_1\sin(E\theta(n - 2)) \qquad (34c)$$

$$S_3(n) = A_3\sin(E\theta(n) + 120) \qquad (34d)$$

$$S_3(n - 1) = A_3\sin(E\theta(n - 1) + 120) \qquad (34e)$$

$$S_3(n - 2) = A_3\sin(E\theta(n - 2) + 120) \qquad (34f)$$

If $E\theta(n)$ is regarded as one unknown quantity, by solving simultaneous equations constituted of four expressions (34a), (34b), (34d), (34e) among the six expressions (34a) to (34f), $E\theta(n)$ can be expressed by the following expression (35) (hereinafter, referred to as "$E\theta$ basic arithmetic expression (35)").

$$E\theta[n] = \frac{1}{4}\cos^{-1}\left(1 - \frac{(3p_1{}^2p_3{}^2 - 2p_1{}^2 - 2p_3{}^2 + p_1p_3)^2}{2(p_1 - p_3)^2(p_1{}^2 + p_1p_3 + p_3{}^2)}\right)$$

$$- \frac{1}{4}\cos^{-1}\left(\frac{1}{2} - \frac{3}{2} \cdot \frac{p_1p_3 + p_3{}^2}{p_1{}^2 + p_1p_3 + p_3{}^2}\right) \qquad (35)$$

where

$$p_1 = \frac{S_1[n]}{S_1[n-1]}$$

$$p_3 = \frac{S_3[n]}{S_3[n-1]}$$

By solving simultaneous equations constituted of the six expressions (34a) to (34f), the angular width error correction value E can be expressed by the following expression (36) (hereinafter, referred to as "E arithmetic expression (36)"). Note that the definitions of $q_1$ to $q_6$ and t in the E arithmetic expression (36) in the third computation mode are different from the definitions of $q_1$ to $q_6$ and t in the E arithmetic expression (8) in the first computation mode.

$$E = \frac{1}{240} \cdot \cos^{-1}\left(\frac{q_1{}^2t^2 - 2q_1q_2t + q_2{}^2}{2t(S_1[n]S_3[n] - S_1[n-1]S_3[n-1])^2} - 1\right) \qquad (36)$$

where

$$q_1 = S_1[n-1]^2 - S_1[n]^2$$

$$q_2 = S_3[n]^2 - S_3[n-1]^2$$

$$t = \frac{S_1[n]S_3[n]q_3 + S_1[n-1]S_3[n-1]q_4 + S_1[n-2]S_3[n-2]q_1}{S_1[n]S_3[n]q_5 + S_1[n-1]S_3[n-1]q_6 + S_1[n-2]S_3[n-2]q_2}$$

$$q_3 = S_1[n-2]^2 - S_1[n-1]^2$$

$$q_4 = S_1[n]^2 - S_1[n-2]^2$$

$$q_5 = S_3[n-1]^2 - S_3[n-2]^2$$

$$q_6 = S_3[n-2]^2 - S_3[n]^2$$

By dividing E$\theta$(n) computed according to the E$\theta$ basic arithmetic expression (35) by the angular width error correction value E computed according to the E arithmetic expression (36), $\theta$(n) can be obtained. That is, $\theta$(n) can be obtained according to the following expression (37).

$$\theta(n) = E\theta(n) / E \qquad (37)$$

Note that, when at least one of the denominators of the fractions included in the expression (36) is zero, the angular width error correction value E cannot be computed according to the expression (36). Therefore, in the present embodiment, when at least one of the denominators of the fractions included in the expression (36) is zero, the immediately preceding computed angular width error correction value E is used as the present angular width error correction value E.

The case where at least one of the denominators of the fractions included in the E arithmetic expression (36) is zero is the case where the denominator of t in the E arithmetic expression (36) is zero, the case where the numerator of t is zero, or the case where $(S_1(n) \cdot S_3(n) - S_1(n - 1) \cdot S3(n - 1))$ is zero. When at least one of the denominators of the fractions included in the E$\theta$ basic arithmetic expression (35) is zero, E$\theta$(n) cannot be computed according to the E$\theta$ basic arithmetic expression (35). In the present embodiment, when at least one of the denominators of the fractions included in the E$\theta$ basic arithmetic expression (35) is zero, E$\theta$(n) is computed according to an arithmetic expression that differs from the E$\theta$ basic arithmetic expression (35). In the present embodiment, if E$\theta$(n) can be computed according to an arithmetic expression that is simpler than the E$\theta$ basic arithmetic expression (35) although E$\theta$(n) can be computed according to the E$\theta$ basic arithmetic expression (35), E$\theta$(n) is computed according to the arithmetic expression that is simpler than the basic E$\theta$ arithmetic expression (35). In the present embodiment, the case where E$\theta$(n) can be computed more easily than using the basic E$\theta$ arithmetic expression (35) is the case where $S_1(n) = 0$ or the case where $S_3(n) = 0$.

In the present embodiment, as arithmetic expressions used to compute E$\theta$(n), ten kinds of arithmetic expressions including the E$\theta$ basic arithmetic expression (35) are prepared. Table 2 shows the ten kinds of arithmetic expressions and the conditions for the arithmetic expressions. Note that, at the time of computing E$\theta$(n), whether the conditions are satisfied is determined starting from the conditions on the top of Table 2. If it is determined that the conditions are satisfied, whether the subsequent conditions are satisfied is not determined. Then, E$\theta$(n) is computed according to the arithmetic expression corresponding to the conditions that are determined to be satisfied.

Table 2

| | CONDITIONS (AND) | ARITHMETIC |
|---|---|---|
| 1 | $S_1[n]\neq0$, $S_3[n-1]\neq0$, $S_3[n]\neq0$, $S_1[n-1]\neq0$, $P_1-P_3\neq0$ | E$\theta$ BASIC ARITHMETIC EXPRESSION (EXPRESSION (35)) |
| 2 | $S_1[n]\neq0$, $S_3[n-1]\neq0$, $S_3[n]\neq0$, $S_1[n-1]\neq0$, $P_1-P_3=0$ | E$\theta$ [n] $\leftarrow$ IMMEDIATELY PRECEDING VALUE |
| 3 | $S_1[n]\neq0$, $S_3[n-1]\neq0$, $S_3[n]\neq0$, $S_1[n-1]=0$, $S_3[n-1]>0$, | $E\theta[n] = \sin^{-1}\left(\frac{\sqrt{3}}{2} \cdot \frac{S_3[n]}{S_3[n-1]}\right) - 120$ |

(continued)

| | | CONDITIONS (AND) | ARITHMETIC |
|---|---|---|---|
| | 4 | $S_1[n]\neq0$, $S_3[n-1]\neq0$, $S_3[n]\neq0$, $S_1[n-1]=0$, $S_3[n-1]<0$ | $E\theta[n]=\sin^{-1}\left(-\dfrac{\sqrt{3}}{2}\cdot\dfrac{S_3[n]}{S_3[n-1]}\right)-120$ |
| | 5 | $S_1[n]\neq0$, $S_3[n-1]\neq0$, $S_3[n]=0$, $S_1[n]>0$ | $E\theta[n]=60$ |
| | 6 | $S_1[n]\neq0$, $S_3[n-1]\neq0$, $S_3[n]\neq0$, $S_1[n]<0$ | $E\theta[n]=-120$ |
| | 7 | $S_1[n]\neq0$, $S_3[n-1]=0$, $S_1[n-1]>0$ | $E\theta[n]=\sin^{-1}\left(\dfrac{\sqrt{3}}{2}\cdot\dfrac{S_1[n]}{S_1[n-1]}\right)$ |
| | 8 | $S_1[n]\neq0$, $S_1[n-1]=0$, $S_1[_{n-1}]<0$ | $E\theta[n]=\sin^{-1}\left(-\dfrac{\sqrt{3}}{2}\cdot\dfrac{S_1[n]}{S_1[n-1]}\right)$ |
| | 9 | $S_1[n]=0$, $S_3[n]>0$ | $E\theta[n]=0$ |
| | 10 | $S_1[n]=0$, $S_3[n]<0$ | $E\theta[n]=180$ |

The first arithmetic expression from the top of Table 2 is the $E\theta$ basic arithmetic expression (35). The $E\theta$ basic arithmetic expression (35) is used when the condition that neither $S_1(n)$ nor $S_2(n)$ is zero and the condition that none of the denominators of the fractions included in the $E\theta$ basic arithmetic expression (35) are zero are both satisfied. The condition that none of the denominators of the fractions included in the $E\theta$ basic arithmetic expression (35) are zero is satisfied when $p_1 - p_3 \neq 0$, $p_1^2 + p_1p_3 + p_3^2 \neq 0$, $S_1(n - 1) \neq 0$, and $S_3(n - 1) \neq 0$. Note that $S_1(n - 1)$ is the denominator of $p_1$ and $S_3(n - 1)$ is the denominator of $p_3$.

Note that, $p_1^2 + p_1p_3 + p_3^2 = 0$ is satisfied only when $p_1 = p_3 = 0$. However, the phase of a sinusoidal signal output from the first magnetic sensor 71 is 120° different from the phase of a sinusoidal signal output from the third magnetic sensor 73, and hence the sensor values $S_1$, $S_3$ from both the magnetic sensors 71, 73 do not become zero at the same time. Therefore, $p_1^2 + p_1p_3 + p_3^2 = 0$ is not satisfied. Therefore, the condition that none of the denominators of the fractions included in the $E\theta$ basic arithmetic expression (35) are zero is satisfied when all the conditions that $p_1 - p_3 \neq 0$, $S_1(n - 1) \neq 0$, and $S_3(n - 1) \neq 0$ are satisfied.

The second arithmetic expression from the top of Table 2 is an arithmetic expression that is used when $p_1 - p_3 = 0$. The case where $p_1 - p_3 = 0$ is satisfied will be considered below. In this case, because $p_1 = p_3$, the following expression (38) is satisfied.

$$\frac{A_1\sin E\theta[n]}{A_1\sin E\theta[n-1]}=\frac{A_3\sin(E\theta[n]+120)}{A_3\sin(E\theta[n-1]+120)} \tag{38}$$

When the expression (38) is deformed, the following expression (39) can be obtained.

$$\frac{\sin E\theta[n-1]}{\sin E\theta[n]}\cdot\frac{\sin(E\theta[n]+120)}{\sin(E\theta[n-1]+120)}=1 \tag{39}$$

The case where the expression (39) is satisfied is the case where $E\theta(n)$ is equal to $E\theta(n - 1)$, that is, the case where the present value $E\theta(n)$ is equal to the immediately preceding value $E\theta(n - 1)$. When the condition that neither $S_1(n)$ nor $S_3(n)$ is zero, the condition that neither the denominator $S_1(n - 1)$ of $p_1$ nor the denominator $S_3(n - 1)$ of $p_3$ is zero, and the condition that $p_1 - p_3 = 0$ are all satisfied, the immediately preceding computed $E\theta(n - 1)$ is used as the present $E\theta(n)$.

The third and fourth arithmetic expressions from the top of Table 2 are arithmetic expressions that are used when the denominator $S_1(n - 1)$ of $p_1$ is zero. Because $S_1(n - 1) = A_1\sin E\theta(n - 1)$, $S_1(n - 1) = 0$ is satisfied when $\sin E\theta(n - 1) = 0$. That is, when $E\theta(n - 1)$ is 0° or 180°, $S_1(n - 1)$ is zero. Because $S_3(n - 1) = A_3\sin(E\theta(n - 1) + 120)$, $S_3(n - 1) > 0$ is satisfied when $E\theta(n - 1)$ is 0°, and $S_3(n - 1) < 0$ is satisfied when $E\theta(n - 1)$ is 180°. $E\theta(n - 1) = 0$ is satisfied when

$S_1(n - 1) = 0$ and $S_3(n - 1) > 0$, and $E\theta(n - 1) = 180$ is satisfied when $S_1(n - 1) = 0$ and $S_3(n - 1) < 0$.

When $E\theta(n - 1) = 0$, the expressions (34d), (34e) are expressed by the following expressions (40d), (40e), respectively.

$$S_3(n) = A_3 \sin(E\theta(n) + 120) \qquad (40d)$$

$$S_3(n - 1) = A_3 \sin 120 = \sqrt{3} / 2 \cdot A_3 \qquad (40e)$$

The following expression (41) is obtained from the expression (40e).

$$A_3 = (2 / \sqrt{3}) \cdot S_3(n - 1) \qquad (41)$$

When the expression (41) is substituted into the expression (40d), the following expression (42) is obtained.

$$\sin(E\theta(n) + 120) \doteq (\sqrt{3} / 2) \cdot (S_3(n) / S_3(n - 1)) \qquad (42)$$

$E\theta(n)$ can be computed according to the following expression (43).

$$E\theta[n] = \sin^{-1}\left(\frac{\sqrt{3}}{2} \cdot \frac{S_3[n]}{S_3[n-1]}\right) - 120 \qquad (43)$$

As shown in the third row from the top of Table 2, when the conditions that neither $S_1(n)$ nor $S_3(n)$ is zero, the denominator $S_3(n - 1)$ of $p_3$ is not zero, the denominator $S_1(n - 1)$ of $p_1$ is zero, and $S_3(n - 1) > 0$ are all satisfied, $E\theta(n)$ is computed according to the arithmetic expression expressed by the expression (43).

On the other hand, when $E\theta(n - 1) = 180$, the expressions (34d), (34e) are expressed by the following expressions (44d), (44e), respectively.

$$S_3(n) = A_3 \sin(E\theta(n) + 120) \qquad (44d)$$

$$S_3(n - 1) = A_3 \sin 300 = -\sqrt{3} / 2 \cdot A_3 \qquad (44e)$$

The following expression (45) is obtained from the expression (44e).

$$A_3 = (-2 / \sqrt{3}) \cdot S_3(n - 1) \qquad (45)$$

When the expression (45) is substituted into the expression (44d), the following expression (46) is obtained.

$$\sin(E\theta(n) + 120) = (-\sqrt{3} / 2) \cdot (S_3(n) / S_3(n - 1)) \qquad (46)$$

$E\theta(n)$ can be computed according to the following expression (47).

$$E\theta[n] = \sin^{-1}\left(-\frac{\sqrt{3}}{2} \cdot \frac{S_3[n]}{S_3[n-1]}\right) - 120 \qquad (47)$$

As shown in the fourth row from the top of Table 2, when the conditions that neither $S_1(n)$ nor $S_3(n)$ is zero, the denominator $S_3(n - 1)$ of $p_3$ is not zero, the denominator $S_1(n - 1)$ of $p_1$ is zero, and $S_3(n - 1) < 0$ are all satisfied, $E\theta(n)$ is computed according to the arithmetic expression expressed by the expression (47). The fifth and sixth arithmetic expressions from the top of Table 2 are arithmetic expressions used when $S_3(n) = 0$ is satisfied. Because $S_3(n) = A_3\sin(E\theta(n) + 120)$, when $\sin(E\theta(n) + 120) = 0$, $S_3(n) = 0$ is satisfied. That is, when $E\theta(n)$ is -120° or 60°, $S_3(n) = 0$ is satisfied. Because $S_1(n) = A_1\sin E\theta(n)$, $S_1(n) < 0$ is satisfied when $E\theta(n)$ is -120°, and $S_1(n) > 0$ is satisfied when $E\theta(n) = 60°$. $E\theta(n) = 60$ is satisfied when $S_3(n) = 0$ and $S_1(n) > 0$, and $E\theta(n) = -120$ is satisfied when $S_3(n) = 0$ and $S_1(n) < 0$.

As shown in the fifth row from the top of Table 2, when the conditions that $S_1(n)$ is not zero, the denominator $S_3(n - 1)$ of $p_3$ is not zero, $S_3(n) = 0$, and $S_1(n) > 0$ are all satisfied, $E\theta(n)$ is computed as 60°. As shown in the sixth row from the top of Table 2, when the conditions that $S_1(n)$ is not zero, the denominator $S_3(n - 1)$ of $p_3$ is not zero, $S_3(n) = 0$, and $S_1(n) < 0$ are all satisfied, $E\theta(n)$ is computed as -120°.

The seventh and eighth arithmetic expressions from the top of Table 2 are arithmetic expressions used when the denominator $S_3(n - 1)$ of $p_3$ is zero. Because $S_3(n - 1) = A_3\sin(E\theta(n - 1) + 120)$, when $\sin(E\theta(n - 1) + 120) = 0$, $S_3(n - 1) = 0$ is satisfied. That is, when $E\theta(n - 1)$ is -120° or 60°, $S_3(n - 1)$ is zero. Because $S_1(n - 1) = A_1\sin E\theta(n - 1)$, $S_1(n - 1) < 0$ is satisfied when $E\theta(n - 1)$ is -120°, and $S_1(n - 1) > 0$ is satisfied when $E\theta(n - 1)$ is 60°. Therefore, $E\theta(n - 1) = 60$ is satisfied when $S_3(n - 1) = 0$ and $S_1(n - 1) > 0$, and $E\theta(n - 1) = -120$ is satisfied when $S_3(n - 1) = 0$ and $S_1(n - 1) < 0$.

When $E\theta(n - 1) = 60$, the expressions (34a), (34b) are expressed by the following expressions (48a), (48b), respectively.

$$S_1(n) = A_1\sin E\theta(n) \qquad (48a)$$

$$S_1(n - 1) = A_1\sin 60 = \sqrt{3} / 2 \cdot A_1 \qquad (48b)$$

The following expression (49) is obtained from the expression (48b).

$$A_1 = (2 / \sqrt{3}) \cdot S_1(n - 1) \qquad (49)$$

When the expression (48a) is substituted into the expression (49), the following expression (50) is obtained.

$$\sin E\theta(n) = (\sqrt{3} / 2) \cdot (S_1(n) / S_1(n - 1)) \qquad (50)$$

$E\theta(n)$ can be computed according to the following expression (51).

$$E\theta[n] = \sin^{-1}\left(\frac{\sqrt{3}}{2} \cdot \frac{S_1[n]}{S_1[n-1]}\right) \qquad (51)$$

As shown in the seventh row from the top of Table 2, when the conditions that $S_1(n)$ is not zero, the denominator $S_3(n - 1)$ of $p_3$ is zero, and $S_1(n - 1) > 0$ are all satisfied, $E\theta(n)$ is computed according to the arithmetic expression expressed by the expression (51). When $E\theta(n - 1) = -120$, the expressions (34a), (34b) are expressed by the following expressions (52a), (52b), respectively.

$$S_1(n) = A_1\sin E\theta(n) \qquad (52a)$$

$$S_1(n - 1) = A_1\sin(-120) = -\sqrt{3} / 2 \cdot A_1 \qquad (52b)$$

The following expression (53) is obtained from the following expression (52b).

$$A_1 = (-2 / \sqrt{3}) \cdot S_1(n - 1) \qquad (53)$$

When the expression (52a) is substituted into the expression (53), the following expression (54) is obtained.

$$\sin E\theta(n) = (-\sqrt{3} / 2) \cdot (S_1(n) / S_1(n - 1)) \qquad (54)$$

$E\theta(n)$ can be computed according to the following expression (55).

$$E\theta[n] = \sin^{-1}\left( - \frac{\sqrt{3}}{2} \cdot \frac{S_1[n]}{S_1[n-1]} \right) \qquad (55)$$

As shown by the eighth row from the top of Table 2, when the conditions that $S_1(n)$ is not zero, the denominator $S_3(n - 1)$ of $p_3$ is zero, and $S_1(n - 1) < 0$ are all satisfied, $E\theta(n)$ is computed according to an arithmetic expression expressed by the expression (55). The ninth and tenth arithmetic expressions from the top of Table 2 are arithmetic expressions that are used when $S_1(n) = 0$ is satisfied. Because $S_1(n) = A_1 \sin E\theta(n)$, when $\sin E\theta(n) = 0$, $S_1(n) = 0$ is satisfied. That is, when $E\theta(n)$ is 0° or 180°, $S_1(n) = 0$ is satisfied. Because $S_3(n) = A_3 \sin(E\theta(n) + 120)$, $S_3(n) > 0$ is satisfied when $E\theta(n)$ is 0°, and $S_3(n) < 0$ is satisfied when $E\theta(n)$ is 180°. Therefore, $E\theta(n) = 0$ is satisfied when $S_1(n) = 0$ and $S_3(n) > 0$, and $E\theta(n) = 180$ is satisfied when $S_1(n) = 0$ and $S_3(n) < 0$.

As shown in the ninth row from the top of Table 2, when the conditions that $S_1(n)$ is zero and $S_3(n) > 0$ are both satisfied, $E\theta(n)$ is computed as 0°. Further, as shown in the tenth row from the top of Table 2, when the conditions that $S_1(n)$ is zero and $S_3(n) < 0$ are both satisfied, $E\theta(n)$ is computed as 180°. When $E\theta(n)$ is computed, it is possible to compute the amplitude $A_1$ according to the expression (34a), and compute the amplitude $A_3$ according to the expression (34d). That is, it is possible to compute E, $\theta(n)$, $A_1$, $A_3$ in the third computation mode.

In each of the first computation mode, the second computation mode, and the third computation mode, because the rotation angle $\theta(n)$ of the input shaft 8 is computed on the basis of the output signals from two magnetic sensors among the three magnetic sensors 71, 72, 73, which are sampled at three sampling timings, it is possible to compute the rotation angle with a high degree of accuracy. In each of the first computation mode, the second computing method, and the third computation mode, even if the number of expressions used to compute the rotation angle $\theta(n)$ of the input shaft 8 is smaller than the number of the unknown quantities originally included in these expressions, the rotation angle $\theta(n)$ of the input shaft 8 can be computed. Therefore, it is possible to reduce the number of sensor values required to compute the rotation angle $\theta(n)$ of the input shaft 8.

In each of the first computation mode, the second computation mode, and the third computation mode, the amplitudes of the output signals from the same magnetic sensor, which are sampled at the three sampling timings, are assumed to be equal to each other. The amplitudes of the output signals from the same magnetic sensor, which are sampled at three sampling timings, may be different values due to the influence of temperature changes. However, if the sampling interval is short, a temperature change between the three sampling timings is considerably small. Therefore, the amplitudes of the output signals from the same magnetic sensor, which are sampled at the three sampling timings, may be assumed to be equal to each other. Therefore, in each of the first computation mode, the second computation mode, and the third computation mode, variations of amplitudes due the influence of temperature changes between the three sampling timings can be compensated for. In each of the first computation mode, the second computation mode, and the third computation mode, because the amplitudes of the output signals from the two magnetic sensors used to compute the rotation angle are regarded as different unknown quantities, the influence of variations of temperature characteristics between the two magnetic sensors can be compensated for. As a result, it is possible to detect a rotation angle with a high degree of accuracy.

In each of the first computation mode, the second computation mode and the third computation mode, it is possible to highly accurately compensate for variations of the angular widths (pitch widths) of the magnetic poles M1 to M8 of the magnet 61. Therefore, it is possible to detect a rotation angle with a smaller error.

The fourth computation mode is a computation mode that may be applied in the case where the angular width error correction value $E_1$ corresponding to a magnetic pole sensed by the first magnetic sensor 71 and the amplitude $A_1$ of the first output signal $S_1$ have already been computed in the first computation mode or the third computation mode and stored in the memory. In the fourth computation mode, the rotation angle $\theta$ is computed mainly based on the output signal $S_1$ from the first magnetic sensor 71.

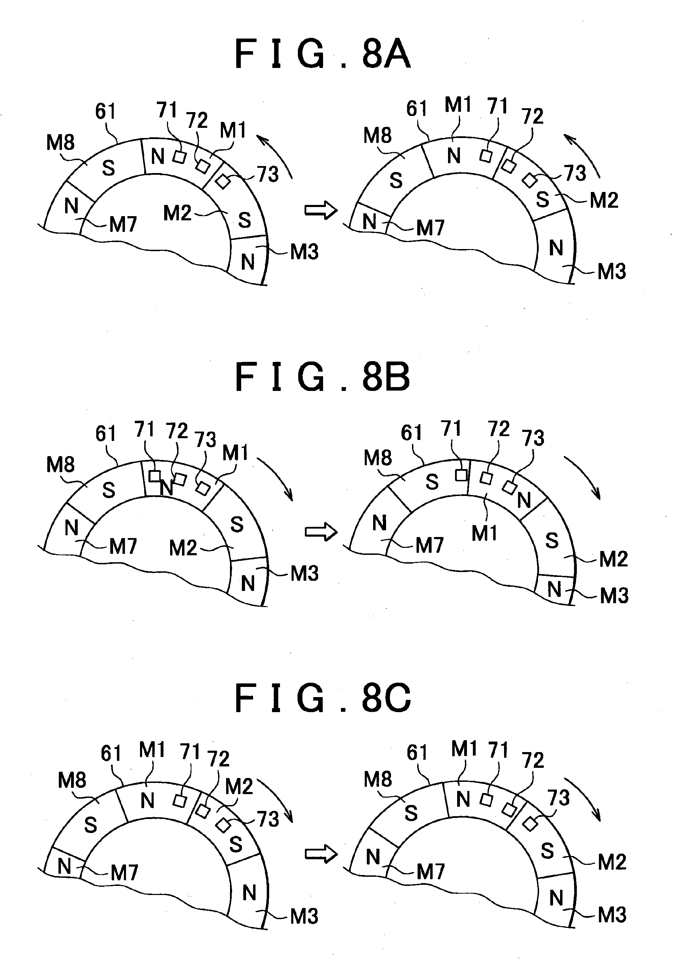

The following description will be provided on the assumption that the magnetic pole sensed by the second magnetic sensor 72 is changed from the one in the state where the same magnetic pole (M1 in this example) is sensed by the first and second magnetic sensors 71, 72, in the case where the magnet 61 (the input shaft 8) is rotating in the direction indicated by an arrow, for example, as illustrated in FIG. 8A. In a state immediately after the change, the second magnetic sensor 72 and the third magnetic sensor 73 do not sense one and the same magnetic pole for three consecutive sampling periods (three consecutive computation periods), and therefore the second computation mode cannot be applied. In such a case, the fourth computation mode may be applied.

When the angular width error correction value E and the number n of the present computation period are used, the output signal $S_1$ from the first magnetic sensor 71, which is sampled in the present computation period, is expressed by the following expression (56).

$$S_1(n) = A_1(n)\sin(E_1\theta(n)) \qquad (56)$$

$E_1$ is the angular width error correction value corresponding to the magnetic pole sensed by the first magnetic sensor 71.

The rotation angle $\theta(n)$ is expressed by the following expression (57) based on the expression (56).

$$\theta(n) = (1 / E_1)\sin^{-1}(S_1(n) / A_1) \qquad (57)$$

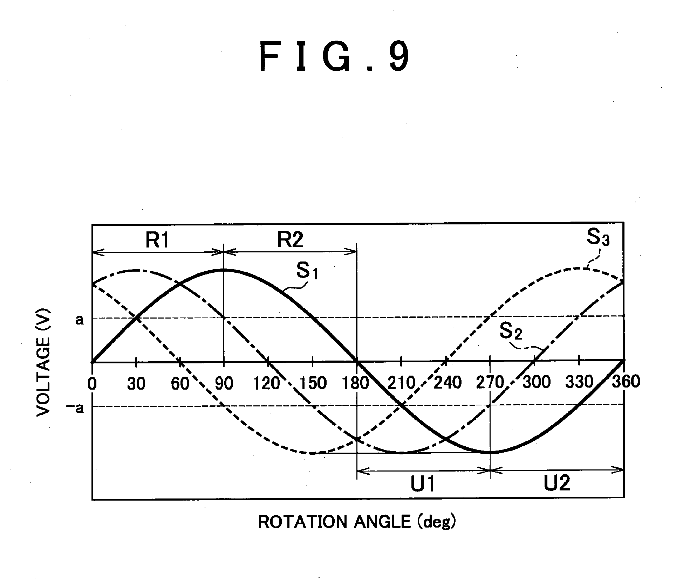

When $E_1$ and $A_1$ that correspond to the magnetic pole sensed by the first magnetic sensor 71 are stored in the memory, if $E_1$ and $A_1$ are substituted into the expression (57), the rotation angle $\theta(n)$ can be computed. However, when the rotation angle $\theta(n)$ is computed according to the expression (57), two rotation angles $\theta(n)$ are computed and therefore it is necessary to determine which of the two rotation angles $\theta(n)$ is the actual rotation angle. This determination method will be described with reference to FIG. 9. FIG. 9 shows waveforms of the first output signal $S_1$, the second output signal $S_2$, and the third output signal $S_3$ in one period. A rotation angle (deg) on the abscissa axis in FIG. 9 represents an electrical angle.

As shown in FIG. 9, when the first output signal $S_1(n)$ takes, for example, a positive value, the rotation angles $\theta(n)$ corresponding to $(1 / E_1)\sin^{-1}(S_1(n) / A_1)$ are two rotation angles, that is, a rotation angle in a region R1 from 0° to 90° and a rotation angle in a region R2 from 90° to 180°. On the other hand, when the first output signal $S_1(n)$ takes, for example, a negative value, the rotation angles $\theta(n)$ corresponding to $(1 / E_1)\sin^{-1}(S_1(n) / A_1)$ are two rotation angles, that is, a rotation angle in a region U1 from 180° to 270° and a rotation angle in a region U2 from 270° to 360°.

In the present embodiment, it is determined which of the two rotation angles computed according to the expression (57) is the actual rotation angle, on the basis of one of the output signals $S_2$, $S_3$ from the two magnetic sensors 72, 73, which are the magnetic sensors other than the first magnetic sensor 71. When one of the second magnetic sensor 72 and the third magnetic sensor 73 malfunctions, the determination is made on the basis of the output signal from the other one of the magnetic sensors that is properly operating.

The case where the determination is made on the basis of the second output signal $S_2(n)$ will be described. 1/2 of the amplitude $A_2$ of the second output signal $S_2$ is set as a threshold a (a > 0). The threshold a can be obtained on the basis of , for example, the amplitude $A_2$ of the second output signal $S_2$ that is stored in the memory and that corresponds to the magnetic pole sensed by the second magnetic sensor 72. Note that, 1/2 of the amplitude $A_1$ of the first output signal $S_1$ may be set as the threshold a (a > 0).

The values that the rotation angle $\theta(n)$ of the input shaft 8 may take when the second output signal $S_2(n)$ is equal to or greater than the threshold a are within the range of 0° to 90° and the range of 330° to 360°. The values that the rotation angle $\theta(n)$ of the input shaft 8 may take when the second output signal $S_2(n)$ is smaller than the threshold -a are within the range of 150° to 270°. The values that the rotation angle $\theta(n)$ of the input shaft 8 may take when the second output signal $S_2(n)$ is equal to or greater than the threshold -a and smaller than the threshold a are within the range of 90° to 150° and the range of 270° to 330°.

Therefore, it is possible to determine which of the two rotation angles computed according to the expression (57) is the actual rotation angle on the basis of the second output signal $S_2(n)$. Specifically, in the case where the first output signal $S_1(n)$ takes a positive value, if the second output signal $S_2(n)$ is equal to or greater than the threshold a, it is determined that the rotation angle in the region R1 among the two rotation angles computed according to the expression (57) is the actual rotation angle. On the other hand, if the second output signal $S_2(n)$ is smaller than the threshold a, it is determined that the rotation angle in the region R2 among the two rotation angles computed according to the expression (57) is the actual rotation angle.

In the case where the first output signal $S_1(n)$ takes a negative value, if the second output signal $S_2(n)$ is smaller than the threshold -a, it is determined that the rotation angle in the region U1 among the two rotation angles computed according to the expression (57) is the actual rotation angle. On the other hand, if the second output signal $S_2(n)$ is equal to or greater than the threshold -a, it is determined that the rotation angle in the region U2 among the two rotation angles computed according to the expression (57) is the actual rotation angle.

The case where the determination is made on the basis of the third output signal $S_3(n)$ will be described. 1/2 of the amplitude $A_3$ of the third output signal $S_3$ is set as a threshold a (a > 0). The threshold a can be obtained on the basis of , for example, the amplitude $A_3$ of the third output signal $S_3$ that is stored in the memory and that corresponds to the magnetic pole sensed by the first magnetic sensor 71. Note that, 1/2 of the amplitude $A_1$ of the first output signal $S_1$ may be set as the threshold a (a > 0).

In the case where the first output signal $S_1(n)$ takes a positive value, if the third output signal $S_3(n)$ is equal to or greater than the threshold -a, it is determined that the rotation angle in the region R1 among the two rotation angles computed according to the expression (57) is the actual rotation angle. On the other hand, if the third output signal $S_3(n)$ is smaller than the threshold -a, it is determined that the rotation angle in the region R2 among the two rotation angles computed according to the expression (57) is the actual rotation angle.

In the case where the first output signal $S_1(n)$ takes a negative value, if the third output signal $S_3(n)$ is smaller than the threshold a, it is determined that the rotation angle in the region U1 among the two rotation angles computed according to the expression (57) is the actual rotation angle. On the other hand, if the third output signal $S_3(n)$ is equal to or greater than the threshold a, it is determined that the rotation angle in the region U2 among the two rotation angles computed according to the expression (57) is the actual rotation angle.

The fifth computation mode is a computation mode that may be applied in the case where the angular width error correction value $E_2$ corresponding to a magnetic pole sensed by the second magnetic sensor 72 and the amplitude $A_2$ of the second output signal $S_2$ have already been computed in the first computation mode or the third computation mode and stored in the memory. In the fifth computation mode, the rotation angle $\theta$ is computed mainly based on the output signal $S_2$ from the second magnetic sensor 72.

The following description will be provided on the assumption that the magnetic pole sensed by the first magnetic sensor 71 is changed from the one in the state where the same magnetic pole (M1 in this example) is sensed by the first, second and third magnetic sensors 71, 72, 73, in the case where the magnet 61 (the input shaft 8) is rotating in the direction indicated by an arrow, for example, as illustrated in FIG. 8B. When the third magnetic sensor malfunctions, the second computation mode cannot be applied in a state after the change. In such a case, the fifth computation mode may be applied.

When the angular width error correction value E and the number n of the present computation period are used, the output signal $S_2$ from the second magnetic sensor 72, which is sampled in the present computation period, is expressed by the following expression (58).

$$S_2(n) = A_2(n)\sin(E_2\theta(n) + 60) \qquad (58)$$

$E_2$ is the angular width error correction value corresponding to the magnetic pole sensed by the second magnetic sensor 72.

The rotation angle $\theta(n)$ is expressed by the following expression (59) based on the expression (58).

$$\theta(n) = (1 / E_2)\{\sin^{-1}(S_2(n) / A_2) - 60\} \qquad (59)$$

When $E_2$ and $A_2$ that correspond to the magnetic pole sensed by the second magnetic sensor 72 are stored in the memory, the rotation angle $\theta(n)$ can be computed by substituting the stored values of $E_2$ and $A_2$ into the expression (59). When the rotation angle $\theta(n)$ is computed according to the expression (59), two rotation angles $\theta(n)$ are computed. Then, it is determined which of the two rotation angles $\theta(n)$ computed according to the expression (59) is the actual rotation angle, on the basis of one of the output signals $S_1$, $S_3$ from the two magnetic sensors 71, 73, which are the magnetic sensors other than the second magnetic sensor 72. Note that, when one of the first magnetic sensor 71 and the third magnetic sensor 73 malfunctions, the determination is made based on the output signal from the other one of the magnetic sensors that is properly operating.

The case where the determination is made on the basis of the first output signal $S_1(n)$ will be described. 1/2 of the amplitude $A_1$ of the first output signal $S_1$ or 1/2 of the amplitude $A_2$ of the second output signal $S_2$ stored in the memory is set as a threshold a (a > 0). In the case where the second output signal $S_2(n)$ takes a positive value, if the first output signal $S_1(n)$ is smaller than the threshold a, it is determined that the rotation angle within the range of 0° to 30° or within the range of 300° to 360° among the two rotation angles computed according to the expression (59) is the actual rotation angle. On the other hand, if the first output signal $S_1(n)$ is equal to or greater than the threshold a, it is determined that the rotation angle within the range of 30° to 120° among the two rotation angles computed according to the expression (59) is the actual rotation angle.

On the other hand, in the case where the second output signal $S_2(n)$ takes a negative value, if the first output signal $S_1(n)$ is equal to or greater than the threshold -a, it is determined that the rotation angle within the range of 120° to 210° among the two rotation angles computed according to the expression (59) is the actual rotation angle. On the other hand, if the first output signal $S_1(n)$ is smaller than the threshold -a, it is determined that the rotation angle within the range of 210° to 300° among the two rotation angles computed according to the expression (59) is the actual rotation angle.

The case where the determination is made on the basis of the third output signal $S_3(n)$ will be described. 1/2 of the amplitude $A_3$ of the third output signal $S_3$ or 1/2 of the amplitude $A_2$ of the second output signal $S_2$ stored in the memory is set as a threshold a (a > 0). In the case where the second output signal $S_2(n)$ takes a positive value, if the third output signal $S_3(n)$ is equal to or greater than the threshold a, it is determined that the rotation angle within the range of 0° to 30° or within the range of 300° to 360° among the two rotation angles computed according to the expression (59) is the actual rotation angle. On the other hand, if the third output signal $S_3(n)$ is smaller than the threshold a, it is determined that the rotation angle within the range of 30° to 120° among the two rotation angles computed according to the expression (59) is the actual rotation angle.

In the case where the second output signal $S_2(n)$ takes a negative value, if the third output signal $S_3(n)$ is smaller than the threshold -a, it is determined that the rotation angle within the range of 120° to 210° among the two rotation angles computed according to the expression (59) is the actual rotation angle. On the other hand, if the third output signal $S_3(n)$ is equal to or greater than the threshold -a, it is determined that the rotation angle within the range of 210° to 300° among the two rotation angles computed according to the expression (59) is the actual rotation angle.

The sixth computation mode is a computation mode that may be applied in the case where the angular width error correction value $E_3$ corresponding to a magnetic pole sensed by the third magnetic sensor 73 and the amplitude $A_3$ of the third output signal $S_3$ have already been computed in the second computation mode or the third computation mode and stored in the memory. In the sixth computation mode, the rotation angle θ is computed mainly based on the output signal $S_3$ from the third magnetic sensor 73.

The following description will be provided on the assumption that the magnetic pole sensed by the second magnetic sensor 72 is changed from the one in the state where the same magnetic pole (M2 in this example) is sensed by the second and third magnetic sensors 72, 73, in the case where the magnet 61 (the input shaft 8) is rotating in the direction indicated by an arrow, for example, as illustrated in FIG. 8C. In a state immediately after the change, the first magnetic sensor 71 and the second magnetic sensor 72 do not sense one and the same magnetic pole for three consecutive sampling periods (three consecutive computation periods), and therefore the first computation mode cannot be applied. In such a case, the sixth computation mode may be applied.

The sixth computation mode may be applied if the second magnetic sensor 72 malfunctions when the magnetic pole sensed by the first magnetic sensor 71 is changed from the one in the state where the first, second and third magnetic sensors 71, 72, 73 sense the same magnetic pole (M1 in this example) in the case where the magnet 61 is rotating in the direction indicated by an arrow, as illustrated in FIG. 8B.

When the angular width error correction value E and the number n of the present computation period are used, the output signal $S_3$ from the third magnetic sensor 73, which is sampled in the present computation period, is expressed by the following expression (60).

$$S_3(n) = A_3(n)\sin(E_3\theta(n) + 120) \qquad (60)$$

$E_3$ is the angular width error correction value corresponding to the magnetic pole sensed by the third magnetic sensor 73.

The rotation angle θ(n) is expressed by the following expression (61) based on the expression (60).

$$\theta(n) = (1 / E_3)\{\sin^{-1}(S_3(n) / A_3) - 120\} \qquad (61)$$

When $E_3$ and $A_3$ that correspond to the magnetic pole sensed by the third magnetic sensor 73 are stored in the memory, the rotation angle θ(n) is computed by substituting the stored values of $E_3$ and $A_3$ into the expression (61). When the rotation angle θ(n) is computed according to the expression (61), two rotation angles θ(n) are computed. Then, it is determined which of the two rotation angles θ(n) computed according to the expression (61) is the actual rotation angle, on the basis of one of the output signals $S_1$, $S_2$ from the two magnetic sensors 71, 72, which are the magnetic sensors other than the third magnetic sensor 73. When one of the first magnetic sensor 71 and the second magnetic sensor 72 malfunctions, the determination is made based on the output signal from the other one of the magnetic sensors that is properly operating.

The case where the determination is made on the basis of the second output signal $S_2(n)$ will be described. 1/2 of the amplitude $A_2$ of the second output signal $S_2$ or 1/2 of the amplitude $A_3$ of the third output signal $S_3$ stored in the memory is set as a threshold a (a > 0). In the case where the third output signal $S_3(n)$ takes a positive value, if the second output signal $S_2(n)$ is smaller than the threshold a, it is determined that the rotation angle within the range of 240° to 330° among the two rotation angles computed according to the expression (61) is the actual rotation angle. On the other hand, if the second output signal $S_2(n)$ is equal to or greater than the threshold a, it is determined that the rotation angle within the range of 330° to 360° or within the range of 0° to 60° among the two rotation angles computed according to the expression (61) is the actual rotation angle.

In the case where the third output signal $S_3(n)$ takes a negative value, if the second output signal $S_2(n)$ is equal to or greater than the threshold -a, it is determined that the rotation angle within the range of 60° to 150° among the two rotation angles computed according to the expression (61) is the actual rotation angle. On the other hand, if the second output signal $S_2(n)$ is smaller than the threshold -a, it is determined that the rotation angle within the range of 150° to 240° among the two rotation angles computed according to the expression (61) is the actual rotation angle.

The case where the determination is made on the basis of the first output signal $S_1(n)$ will be described. 1/2 of the amplitude $A_1$ of the first output signal $S_1$ or 1/2 of the amplitude $A_3$ of the third output signal $S_3$ stored in the memory is set as a threshold a (a > 0). In the case where the third output signal $S_3(n)$ takes a positive value, if the first output signal $S_1(n)$ is smaller than the threshold -a, it is determined that the rotation angle within the range of 240° to 330° among the two rotation angles computed according to the expression (61) is the actual rotation angle. On the other hand, if the first output signal $S_1(n)$ is equal to or greater than the threshold -a, it is determined that the rotation angle within the range of 330° to 360° or the range of 0° to 60° among the two rotation angles computed according to the expression (61) is the actual rotation angle.

In the case where the third output signal $S_3(n)$ takes a negative value, if the first output signal $S_1(n)$ is equal to or greater than the threshold a, it is determined that the rotation angle within the range of 60° to 150° among the two rotation angles computed according to the expression (61) is the actual rotation angle. On the other hand, if the first output signal $S_1(n)$ is smaller than the threshold a, it is determined that the rotation angle within the range of 150° to 240° among the two rotation angles computed according to the expression (61) is the actual rotation angle.

The seventh computation mode is a computation mode that is applied when the second magnetic sensor 72 malfunctions and none of the third computation mode, the fourth computation mode, and the sixth computation mode can be applied. In the seventh computation mode, the rotation angle $\theta(n)$ is computed according to the arithmetic expressions (35), (36), (37) that are used in the third computation mode. That is, in the seventh computation mode, even if the condition that both the first and third magnetic sensors 71, 73 sense one and the same magnetic pole for three consecutive sampling periods (three consecutive computation periods) is not satisfied, the rotation angle $\theta(n)$ is computed according to the same arithmetic expressions as those used in the third computation mode.

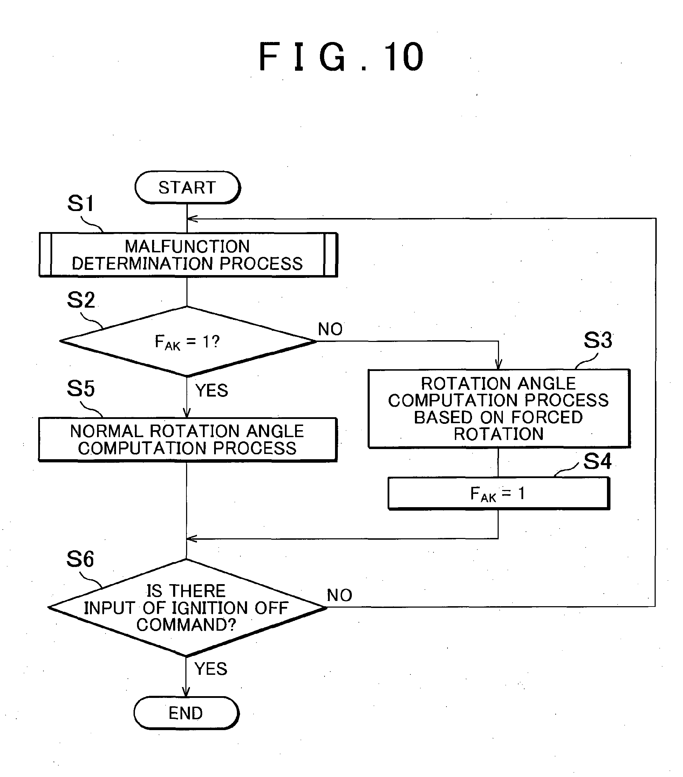

FIG. 10 is a flowchart showing the operation of the first rotation angle computation unit 77A. When the power supply for the torque computation ECU 77 is turned on, the first rotation angle computation unit 77A executes a malfunction determination process to determine whether each of the magnetic sensors 71, 72, 73 malfunctions (step S1). The malfunction determination process will be described later in detail. If it is determined in the malfunction determination process in step S1 that none of the three magnetic sensors 71, 72, 73 malfunction or if it is determined in step S1 that only one of the three magnetic sensors 71, 72, 73 malfunctions, the first rotation angle computation unit 77A proceeds on to step S2.

In step S2, the first rotation angle computation unit 77A determines whether the value of a forced rotation flag $F_{AK}$ is one. The forced rotation flag $F_{AK}$ is a flag for storing the fact that the rotation angle computation process based on forced rotation in step S3 described later is executed in response to turning-on of the power supply for the torque computation ECU 77. The initial value of the forced rotation flag $F_{AK}$ is zero, and the value of the forced rotation flag $F_{AK}$ is set to one when the rotation angle computation process based on forced rotation is executed.

When the value of the forced rotation flag $F_{AK}$ is zero (NO in step S2), the first rotation angle computation unit 77A executes the rotation angle computation process based on forced rotation (step S3). In this process, the electric motor 18 is forced to rotate temporarily to rotate the input shaft 8 (the output shaft 9), and the rotation angle $\theta$ of the input shaft 8 is computed. Details of the process will be described later. In each of the first computation mode, the second computation mode and the third computation mode, if there is no change in the output signals from the two magnetic sensors used to compute the rotation angle $\theta(n)$ between the immediately preceding sampling timing and the present sampling timing, the immediately preceding computed values of $E\theta(n)$ (or $E\Theta(n)$), E, and $\theta(n)$ are used as the present values of $E\theta(n)$ (or $E\Theta(n)$), E, and $\theta(n)$ (see the second arithmetic expression from the top of each of Table 1 and Table 2). However, at the time when the power supply for the torque computation ECU 77 is turned on by turning on the ignition key, there are no immediately preceding computed values of $E\theta(n)$ (or $E\Theta(n)$), E, and $\theta(n)$. Therefore, if the output signals from the two magnetic sensors used to compute the rotation angle $\theta(n)$ do not change after the power supply for the torque computation ECU 77 is turned on, the rotation angle $\theta(n)$ cannot be computed in any of the first, second and third computation modes. Therefore, in order to create the immediately preceding values of $E\theta(n)$ (or $E\Theta(n)$), $E$, and $\theta(n)$, the rotation angle computing process based on forced rotation is executed.

When the rotation angle computation process based on forced rotation ends, the first rotation angle computation unit 77A sets the value of the forced rotation flag $F_{AK}$ to one (step S4), and proceeds on to step S6. In step S6, the first rotation angle computation unit 77A determines whether there is an input of an ignition off command. If there is no input of an ignition off command (NO in step S6), the first rotation angle computation unit 77A returns to step S1.

If it is determined in step S2 that the value of the forced rotation flag $F_{AK}$ is one (YES in step S2), the first rotation angle computation unit 77A executes a normal rotation angle computation process (step S5). The normal rotation angle computation process will be described later in detail. When the rotation angle is computed by the normal rotation angle computation process, the first rotation angle computation unit 77A proceeds on to step S6 and determines whether there is an input of an ignition off command. If there is no input of an ignition off command (NO in step S6), the first rotation angle computation unit 77A returns to step S1.

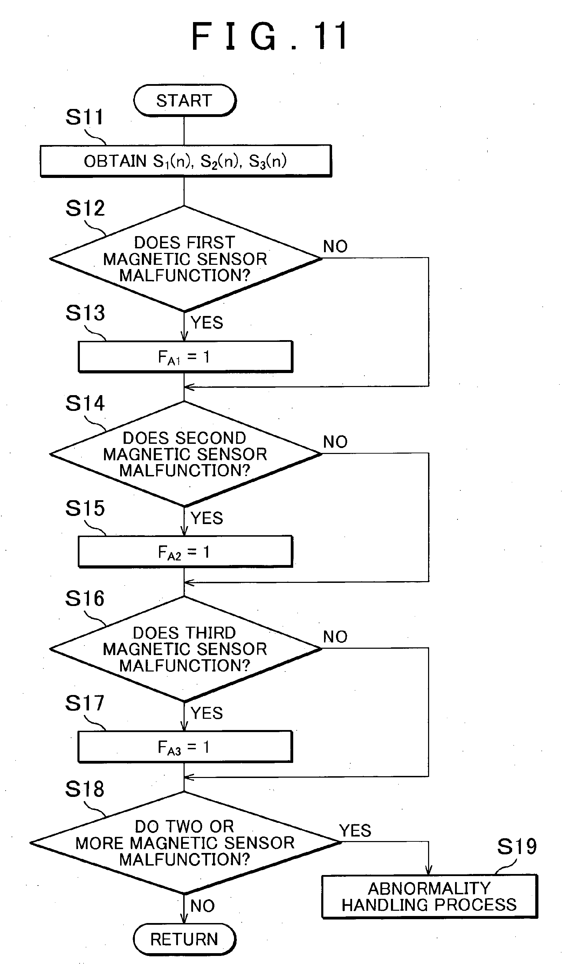

If it is determined in step S6 that there is an input of an ignition off command (YES in step S6), the first rotation angle computation unit 77A ends the rotation angle computation process. FIG. 11 is a flowchart showing the procedure of the malfunction determination process in step S1 in FIG. 10. The first rotation angle computation unit 77A obtains the sensor values $S_1(n)$, $S_2(n)$, $S_3(n)$ from the respective magnetic sensors 71, 72, 73 (step S11). The memory in the torque computation ECU 77 stores sensor values obtained at least at three timings. That is, the memory in the torque computation ECU 77 stores the sensor values from the sensor value obtained n-th preceding timing (n is a prescribed value) to the sensor value obtained most recently.

The first rotation angle computation unit 77A determines whether each of the first magnetic sensor 71, the second magnetic sensor 72, and the third magnetic sensor 73 malfunctions based on the obtained sensor values $S_1(n)$, $S_2(n)$, $S_3(n)$ (steps S12, S14, S16) When there is a malfunctioning magnetic sensor, the output signal from the malfunctioning sensor is fixed to a certain value. For example, if the state where the sensor value from the first magnetic sensor 71 remains unchanged although the sensor values from the second and third magnetic sensors 72, 73 are changing continues, it is determined that the first magnetic sensor 71 malfunctions.

When it is determined that the first magnetic sensor 71 malfunctions (YES in step S12), the first rotation angle computation unit 77A sets the value of a first sensor malfunction flag $F_{A1}$ to one (step S13). The initial value of the first sensor malfunction flag $F_{A1}$ is zero. When it is determined that the second magnetic sensor 72 malfunctions (YES in step S 14), the first rotation angle computation unit 77A sets the value of a second sensor malfunction flag $F_{A2}$ to one (step S15). The initial value of the second sensor malfunction flag $F_{A2}$ is zero.

When it is determined that the third magnetic sensor 73 malfunctions (YES in step S16), the first rotation angle computation unit 77A sets the value of a third sensor malfunction flag $F_{A3}$ to one (step S17). When the malfunction determination on each of the magnetic sensors 71, 72, 73 ends as described above, the first rotation angle computation unit 77A determines whether two or more magnetic sensors malfunction (step S18). When two or more magnetic sensors malfunction (YES in step S18), the first rotation angle computation unit 77A executes an abnormality handling process (step S19). That is, the first rotation angle computation unit 77A terminates the rotation angle computation process and transmits a command for stopping control over the electric motor 18 to the motor control ECU 12. As a result, the electric motor 18 is no longer driven.

When the condition that two or more magnetic sensors malfunction is not satisfied (NO in step S18), that is, when all the magnetic sensors 71, 72, 73 are properly operating or only one of the magnetic sensors 71, 72, 73 malfunctions, the first rotation angle computation unit 77A proceeds on to step S2 in FIG. 10.

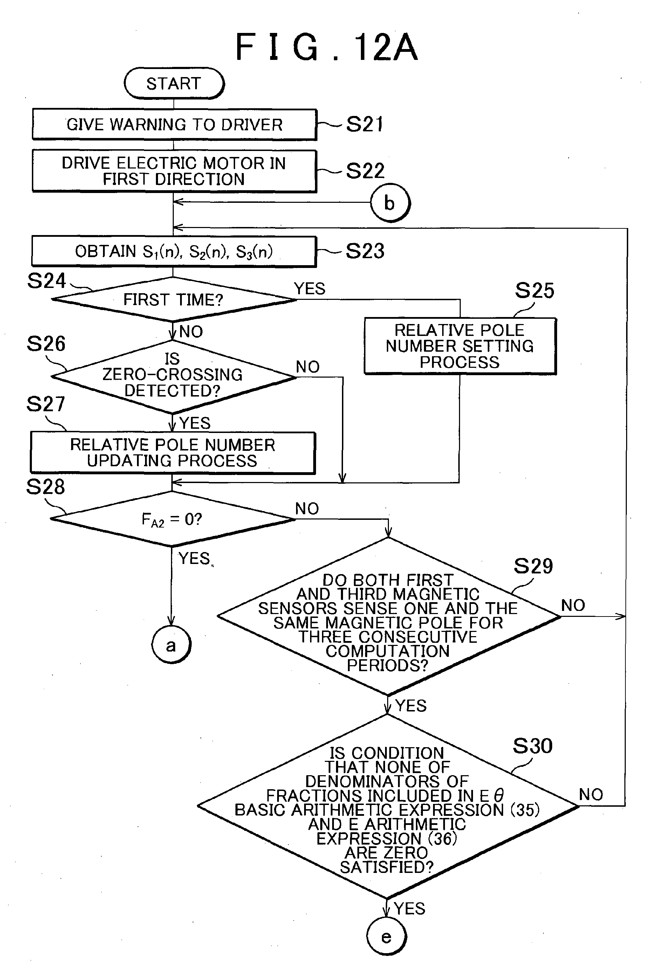

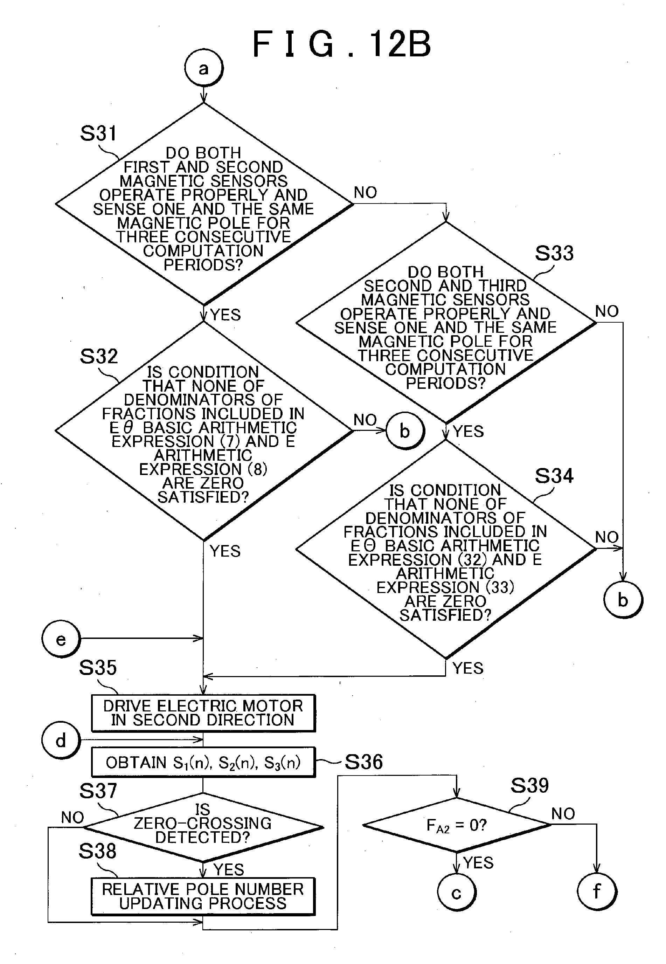

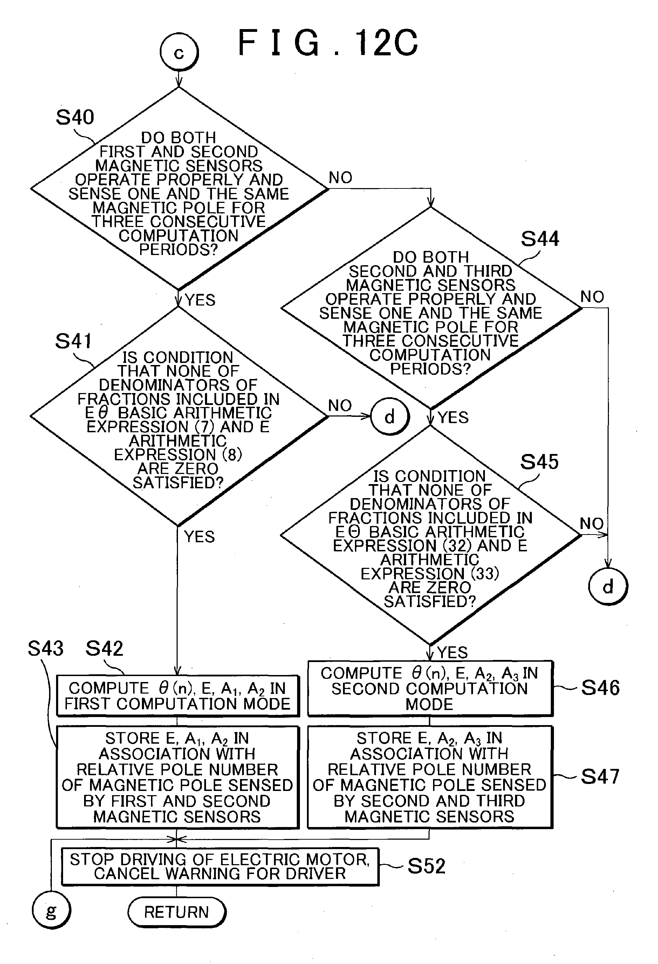

FIG. 12A, FIG. 12B, and FIG. 12C are flowcharts showing the procedure of the rotation angle computing process based on forced rotation in step S3 in FIG. 10. The numbers assigned to the magnetic poles, as relative numbers, using the magnetic pole sensed by prescribed one magnetic sensor among the properly operating magnetic sensors at the start of the rotation angle computing process based on forced rotation as a reference magnetic pole are defined as relative pole numbers. The relative pole number of a magnetic pole sensed by the first magnetic sensor 71 (hereinafter, referred to as "first relative pole number") is expressed by a variable r1, the relative pole number of a magnetic pole sensed by the second magnetic sensor 72 (hereinafter, referred to as "second relative pole number") is expressed by a variable r2, and the relative pole number of a magnetic pole sensed by the third magnetic sensor 73 (hereinafter, referred to as "third relative pole number") is expressed by a variable r3. Each of the relative pole numbers r1, r2, r3 takes an integer from one to eight, the relative pole number that is smaller than one by one is eight, and the relative pole number that is greater than eight by one is one.

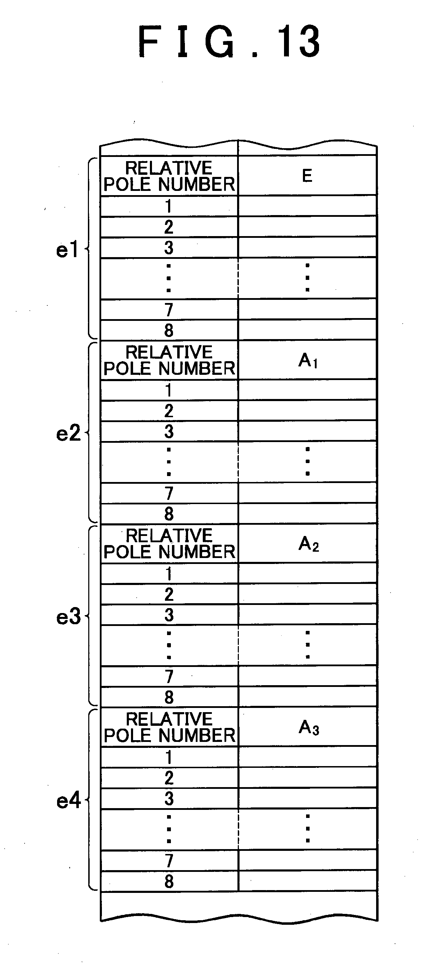

As shown in FIG. 13, in the memory of the torque computation ECU 77, there are provided, for example, areas denoted by e1 to e4. In the area e1, the angular width error correction values $E$ are stored in association with the relative magnetic pole numbers 1 to 8. In the area e2, the amplitudes $A_1$ of the first output signal $S_1$ are stored in association with the relative magnetic pole numbers 1 to 8. In the area e3, the amplitudes $A_2$ of the second output signal $S_2$ are stored in association with the relative magnetic pole numbers 1 to 8. In the area e4, the amplitudes $A_3$ of the third output signal $S_3$ are stored in association with the relative magnetic pole numbers 1 to 8.

With reference to FIG. 12A, the following description will be provided. In the rotation angle computing process based on forced rotation, the steering wheel 2 is automatically driven to be rotated for a short time. Therefore, there is a possibility that a driver will erroneously recognize that a failure has occurred. Thus, the first rotation angle computation unit 77A gives the driver a warning to avoid an erroneous recognition (step S21). Specifically, the first rotation angle computation unit 77A transmits a warning output command to an image-voice control unit (not illustrated) used to control, for example, a display unit (not illustrated), and a voice output device (not illustrated) arranged in the vehicle. Upon reception of the warning output command, the image-voice control unit causes the display unit to display a message "STEERING WHEEL IS FORCEDLY ROTATED, BUT THERE IS NO FAILURE", or causes the voice output device to output the message.

Then, the first rotation angle computation unit 77A drives the electric motor 18 to rotate the electric motor 18 in a first direction (step S22). Specifically, the first rotation angle computation unit 77A transmits, to the motor control ECU 12, a first forced rotation command according to which the electric motor 18 is driven to be rotated in the first direction. Upon reception of the first forced rotation command, the motor control ECU 12 drives the electric motor 18 to rotate the electric motor 18 in the first direction.

The first rotation angle computation unit 77A obtains the sensor values $S_1(n)$, $S_2(n)$, $S_3(n)$ from the respective magnetic sensors 71, 72, 73 (step S23). The process in step S23 is repeatedly executed with a predetermined computation period until an affirmative determination is made in step S30, step S32 or step S34 described later. The memory in the torque computation ECU 77 stores sensor values obtained at least at three timings. That is, the memory stores the sensor values from the sensor value obtained n-th preceding timing (n is a prescribed value) to the sensor value obtained most recently.

The first rotation angle computation unit 77A determines whether the present process is first process after the start of the rotation angle computing process based on forced rotation (step S24). If the present process is the first process after the start of the rotation angle computing process based on forced rotation (YES in step S24), the first rotation angle computation unit 77A executes a relative pole number setting process (step S25).

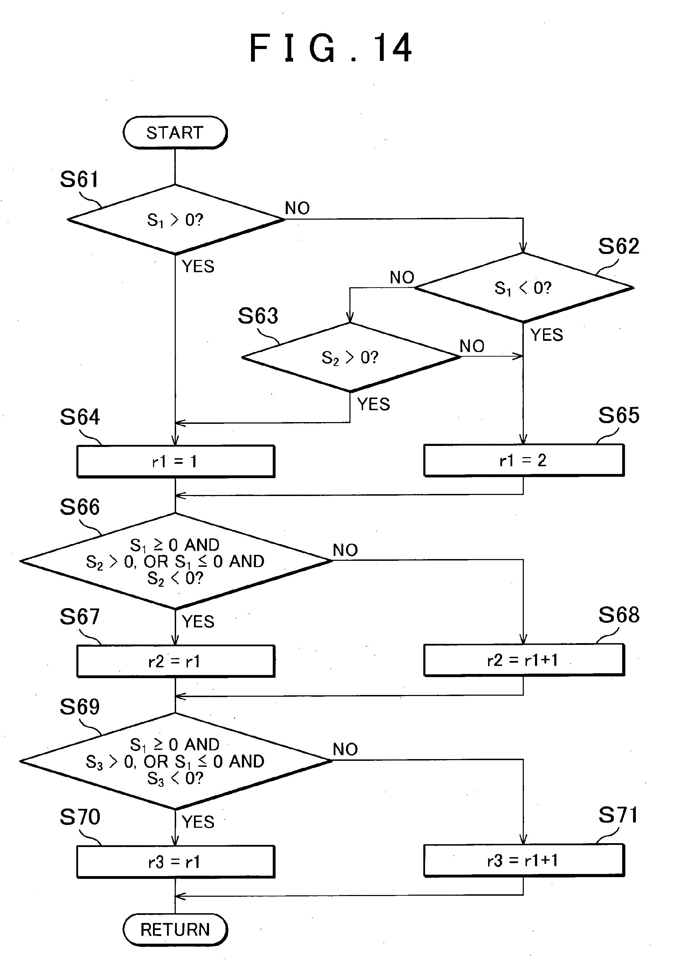

FIG. 14 is a flowchart showing the detailed procedure of the relative pole number setting process. The following description will be provided on an example case where all the magnetic sensors 71, 72, 73 are properly operating and the numbers assigned to the magnetic poles, as relative numbers, using the magnetic pole sensed by the first magnetic sensor 71 as a reference magnetic pole are defined as relative pole numbers. First, the first rotation angle computation unit 77A determines whether the first output signal $S_1$ is greater than zero (step S61). If the first output signal $S_1$ is greater than zero (YES in step S61), the first rotation angle computation unit 77A determines that the magnetic pole sensed by the first magnetic sensor 71 is a north pole, and sets the first relative pole number r1 to one (step S64). Then, the first rotation angle computation unit 77A proceeds on to step S66.

On the other hand, if the first output signal $S_1$ is equal to or smaller than zero (NO in step S61), the first rotation angle computation unit 77A determines whether the first output signal $S_1$ is smaller than zero (step S62). If the first output signal $S_1$ is smaller than zero (YES in step S62), the first rotation angle computation unit 77A determines that the magnetic pole sensed by the first magnetic sensor 71 is a south pole, and sets the first relative pole number r1 to two (step S65). Then, the first rotation angle computation unit 77A proceeds on to step S66.

If it is determined in step S62 that the first output signal $S_1$ is equal to or greater than zero (NO in step S62), that is, if the first output signal $S_1$ is zero, the first rotation angle computation unit 77A determines whether the second output signal $S_2$ is greater than zero in order to determine whether the rotation angle of the input shaft 8 is 0° or 180° (step S63). If the second output signal $S_2$ is greater than zero (YES in step S63), the first rotation angle computation unit 77A determines that the rotation angle of the input shaft 8 is 0°, and sets the first relative pole number r1 to one (step S64). Then, the first rotation angle computation unit 77A proceeds on to step S66.

On the other hand, if the second output signal $S_2$ is equal to or smaller than zero (NO in step S63), the first rotation angle computation unit 77A determines that the rotation angle of the input shaft 8 is 180°, and sets the first relative pole number r1 to two (step S65). Then, the first rotation angle computation unit 77A proceeds on to step S66. In step S66, the first rotation angle computation unit 77A determines whether the condition that "$S_1 \geq 0$ and $S_2 > 0$" or the condition that "$S_1 \leq 0$ and $S_2 < 0$" is satisfied. When one of the above-described conditions is satisfied (YES in step S66), the first rotation angle computation unit 77A determines that the pole number of the magnetic pole sensed by the second magnetic sensor 72 is the same as the pole number of the magnetic pole sensed by the first magnetic sensor 71, and sets the second relative pole number r2 to the same number (r2 = r1) as the first relative pole number r1 (step S67). Then, the first rotation angle computation unit 77A proceeds on to step S69.

On the other hand, when none of the conditions in step S66 are satisfied (NO in step S66), the first rotation angle computation unit 77A determines that the pole number of the magnetic pole sensed by the second magnetic sensor 72 is greater by one than the pole number of the magnetic pole sensed by the first magnetic sensor 71, and sets the second relative pole number r2 to a number greater by one than the first relative pole number r1 (r2 = r1 + 1) (step S68). Then, the first rotation angle computation unit 77A proceeds on to step S69.

In step S69, the first rotation angle computation unit 77A determines whether the condition that "$S_1 \geq 0$ and $S_3$

> 0" or the condition that "$S_1 \leq 0$ and $S_3 < 0$" is satisfied. When one of the above-described conditions is satisfied (YES in step S69), the first rotation angle computation unit 77A determines that the pole number of the magnetic pole sensed by the third magnetic sensor 73 is the same as the pole number of the magnetic pole sensed by the first magnetic sensor 71, and sets the third relative pole number r3 to the same number as the first relative pole number r1 (r3 = r1) (step S70). Then, the first rotation angle computation unit 77A proceeds on to step S28 in FIG. 12A.

On the other hand, when none of the conditions in step S69 are satisfied (NO in step S69), the first rotation angle computation unit 77A determines that the pole number of the magnetic pole sensed by the third magnetic sensor 73 is greater by one than the pole number of the magnetic pole sensed by the first magnetic sensor 71, and sets the third relative pole number r3 to a number that is greater by one than the first relative pole number r1 (r3 = r1 + 1) (step S71). Then, the first rotation angle computation unit 77A proceeds on to step S28 in FIG. 12A.

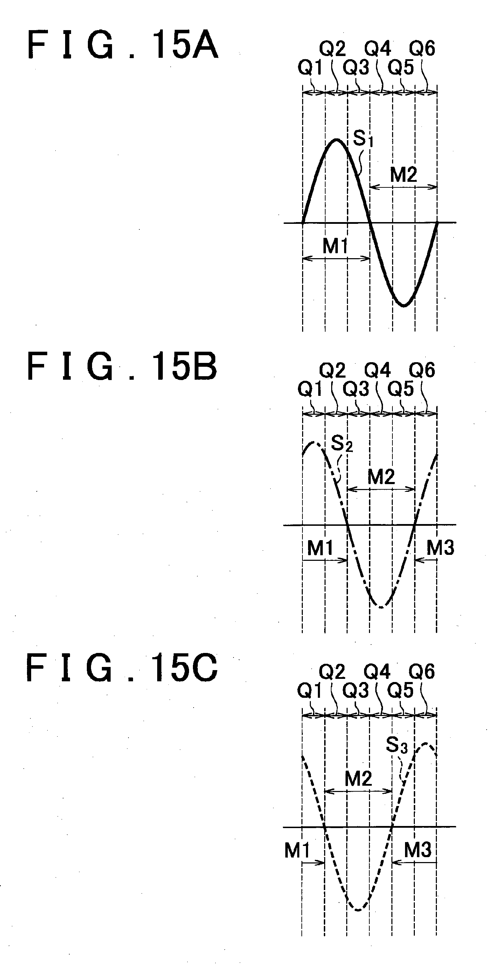

The reason why the second relative pole number r2 is set on the basis of the conditions in step S66 and the reason why the third relative pole number r3 is set on the basis of the conditions in step S69 will be described below. FIG. 15A, FIG. 15B, and FIG. 15C schematically illustrate signal waveforms of the first, second and third output signals $S_1$, $S_2$, $S_3$ at the time when a magnetic pole pair constituted of, for example, the magnetic pole M1 and the magnetic pole M2 in the magnet 61 passes by the first magnetic sensor 71.

In FIG. 15A, FIG. 15B and FIG. 15C, in regions indicated by Q1, Q2, Q4, Q5, the pole number of the magnetic pole sensed by the second magnetic sensor 72 is the same as the pole number of the magnetic pole sensed by the first magnetic sensor 71. In regions indicated by Q3, Q6, the pole number of the magnetic pole sensed by the second magnetic sensor 72 is greater by one than the pole number of the magnetic pole sensed by the first magnetic sensor 71.

In the regions Q1, Q2, both the sensor values $S_1$, $S_2$ satisfy the first condition that $S_1 \geq 0$ and $S_2 > 0$. In the region Q3, both the sensor values $S_1$, $S_2$ satisfy the second condition that $S_1 > 0$ and $S_2 \leq 0$. In the regions Q4, Q5, both the sensor values $S_1$, $S_2$ satisfy the third condition that $S_1 \leq 0$ and $S_2 < 0$. In the region Q6, both the sensor values $S_1$, $S_2$ satisfy the fourth condition that $S_1 < 0$ and $S_2 \geq 0$. When one of the first condition and the third condition is satisfied, the first rotation angle computation unit 77A determines that the pole number of the magnetic pole sensed by the second magnetic sensor 72 is the same as the pole number of the magnetic pole sensed by the first magnetic sensor 71. On the other hand, when neither the first condition nor the third condition is satisfied, the first rotation angle computation unit 77A determines that the pole number of the magnetic pole sensed by the second magnetic sensor 72 is greater by one than the pole number of the magnetic pole sensed by the first magnetic sensor 71.

In FIG. 15A, FIG. 15B, and FIG. 15C, in regions indicated by Q1, Q4, the pole number of the magnetic pole sensed by the third magnetic sensor 73 is the same as the pole number of the magnetic pole sensed by the first magnetic sensor 71. On the other hand, in regions indicated by Q2, Q3, Q5, Q6, the pole number of the magnetic pole sensed by the third magnetic sensor 73 is greater by one than the pole number of the magnetic pole sensed by the first magnetic sensor 71.

In the region Q1, both the sensor values $S_1$, $S_3$ satisfy the fifth condition that $S_1 \geq 0$ and $S_3 > 0$. In the regions Q2, Q3, both the sensor values $S_1$, $S_3$ satisfy the sixth condition that $S_1 > 0$ and $S_3 \leq 0$. In the region Q4, both the sensor values $S_1$, $S_3$ satisfy the seventh condition that $S_1 \leq 0$ and $S_3 < 0$. In the regions Q5, Q6, both the sensor values $S_1$, $S_3$ satisfy the eighth condition that $S_1 < 0$ and $S_3 \geq 0$. When one of the fifth condition and the seventh condition is satisfied, the first rotation angle computation unit 77A determines that the pole number of the magnetic pole sensed by the third magnetic sensor 73 is the same as the pole number of the magnetic pole sensed by the first magnetic sensor 71. On the other hand, when neither the fifth condition nor the seventh condition is satisfied, the first rotation angle computation unit 77A determines that the pole number of the magnetic pole sensed by the third magnetic sensor 73 is greater by one than the pole number of the magnetic pole sensed by the first magnetic sensor 71.

As shown in FIG. 12A, if it is determined in step S24 that the present process is not the first process after the start of the rotation angle computing process based on forced rotation (NO in step S24), the first rotation angle computation unit 77A proceeds on to step S26. In step S26, the first rotation angle computation unit 77A determines whether zero-crossing of each of the sensor values $S_1$, $S_2$, $S_3$, that is, inversion of the sign of each of the sensor values $S_1$, $S_2$, $S_3$ is detected, on the basis of the sensor values $S_1$, $S_2$, $S_3$ stored in the memory. If zero-crossing is not detected (NO in step S26), the first rotation angle computation unit 77A proceeds on to step S28.

If zero-crossing of one of the sensor values $S_1$, $S_2$, $S_3$ is detected in step S26 (YES in step S26), the first rotation angle computation unit 77A executes a relative pole number updating process (step S27). Specifically, the first rotation angle computation unit 77A changes the relative pole number r1, r2 or r3, which is presently set for the magnetic sensor that outputs the sensor value zero-crossing of which is detected in step S26, to a number that is greater by one or a number that is smaller by one than the presently set relative pole number r1, r2 or r3 on the basis of the rotation direction of the input shaft 8 (the magnet 61).

When the rotation direction of the input shaft 8 is the forward direction (the direction indicated by the arrow in FIG. 6), the first rotation angle computation unit 77A updates the relative pole number r1, r2, or r3 presently set for the magnetic sensor that outputs the sensor value zero-crossing of which is detected in step S26, to a number that is greater by one than the presently set relative pole number r1, r2 or r3. On the other hand, when the rotation direction of the input shaft 8 is the reverse direction, the first rotation angle computation unit 77A updates the relative pole number r1, r2, or r3 presently set for the magnetic sensor that outputs the sensor value zero-crossing of which is detected in step S 26, to a number that is smaller by one than the presently set relative pole number r1, r2 or r3. As described above, the relative pole number that is smaller than the relative pole number "one" by one is "eight". Further, the relative pole number that is greater than the relative pole number "eight" by one is "one".

The rotation direction of the input shaft 8 can be determined on the basis of, for example, the immediately preceding value and the present value of the output signal zero-crossing of which is detected and the present value of the other output signal. Specifically, when the output signal zero-crossing of which is detected is the first output signal $S_1$, if the condition that "the immediately preceding value of the first output signal $S_1$ is greater than zero, the present value of the first output signal $S_1$ is equal to or smaller than zero, and the second output signal $S_2$ is smaller than zero (the third output signal $S_3$ is smaller than zero)" or the condition that "the immediately preceding value of the first output signal $S_1$ is smaller than zero, the present value of the first output signal $S_1$ is equal to or greater than zero, and the second output signal $S_2$ is greater than zero (the third output signal $S_3$ is greater than zero)" is satisfied, it is determined that the rotation direction is the forward direction (the direction indicated by the arrow in FIG. 6).

If the condition that "the immediately preceding value of the first output signal $S_1$ is equal to or greater than zero, the present value of the first output signal $S_1$ is smaller than zero, and the second output signal $S_2$ (the third output signal $S_3$ is greater than zero) is greater than zero" or the condition that "the immediately preceding value of the first output signal $S_1$ is equal to or smaller than zero, the present value of the first output signal $S_1$ is greater than zero, and the second output signal $S_2$ is smaller than zero (the third output signal $S_3$ is smaller than zero)" is satisfied, it is determined that the rotation direction is the reverse direction.

When the output signal zero-crossing of which is detected is the second output signal $S_2$, if the condition that "the immediately preceding value of the second output signal $S_2$ is greater than zero, the present value of the second output signal $S_2$ is equal to or smaller than zero, and the first output signal $S_1$ is greater than zero (the third output signal $S_3$ is smaller than zero)" or the condition that "the immediately preceding value of the second output signal $S_2$ is smaller than zero, the present value of the second output signal $S_2$ is equal to or greater than zero, and the first output signal $S_1$ is smaller than zero (the third output signal $S_3$ is greater than zero)" is satisfied, it is determined that the rotation direction is the forward direction (the direction indicated by the arrow in FIG. 6). On the other hand, if the condition that "the immediately preceding value of the second output signal $S_2$ is equal to or greater than zero, the present value of the second output signal $S_2$ is smaller than zero, and the first output signal $S_1$ is smaller than zero (the third output signal $S_3$ is greater than zero)" or the condition that "the immediately preceding value of the second output signal $S_2$ is equal to or smaller than zero, the present value of the second output signal $S_2$ is greater than zero, and the first output signal $S_1$ is greater than zero (the third output signal $S_3$ is smaller than zero)" is satisfied, it is determined that the rotation direction is the reverse direction.

When the output signal zero-crossing of which is detected is the third output signal $S_3$, if the condition that "the immediately preceding value of the third output signal $S_3$ is greater than zero, the present value of the third output signal $S_3$ is equal to or smaller than zero, and the second output signal $S_2$ is greater than zero (the first output signal $S_1$ is greater than zero)" or the condition that "the immediately preceding value of the third output signal $S_3$ is smaller than zero, the present value of the third output signal $S_3$ is equal to or greater than zero, and the second output signal $S_2$ is smaller than zero (the first output signal $S_1$ is smaller than zero)" is satisfied, it is determined that the rotation direction is the forward direction (the direction indicated by the arrow in FIG. 6).

On the other hand, if the condition that "the immediately preceding value of the third output signal $S_3$ is equal to or greater than zero, the present value of the third output signal $S_3$ is smaller than zero, and the second output signal $S_2$ is smaller than zero (the first output signal $S_1$ is smaller than zero)" or the condition that "the immediately preceding value of the third output signal $S_3$ is equal to or smaller than zero, the present value of the third output signal $S_3$ is greater than zero, and the second output signal $S_2$ is greater than zero (the first output signal $S_1$ is greater than zero)" is satisfied, it is determined that the rotation direction is the reverse direction.

When the relative pole number updating process ends, the first rotation angle computation unit 77A proceeds on to step 528. In step 528, the first rotation angle computation unit 77A determines whether the value of the second sensor malfunction flag $F_{A2}$ is zero. When the value of the second sensor malfunction flag $F_{A2}$ is zero (YES in step S28), that is, when the second magnetic sensor does not malfunction, the first rotation angle computation unit 77A proceeds on to step S31 in FIG. 12B.

In step S31, the first rotation angle computation unit 77A determines whether the condition that both the first and second magnetic sensors 71, 72 are properly operating and sense one and the same magnetic pole for three consecutive computation periods is satisfied. It is possible to recognize the relative numbers of the magnetic poles sensed by the first and second magnetic sensors 71, 72 in each computation period on the basis of the first relative magnetic pole number r1 and the second relative magnetic pole number r2. Therefore, if the relative magnetic pole numbers r1, r2 for multiple computation periods from the n-th preceding computation period (n is a prescribed value) to the present computation period are stored in the memory, it is possible to determine whether both the first and second magnetic sensors 71, 72 sense one and the same magnetic pole for three consecutive computation periods.

When the condition in step S31 is not satisfied (NO in step S31), the first rotation angle computation unit 77A determines whether the condition that both the second and third magnetic sensors 72, 73 are properly operating and sense one and the same magnetic pole for three consecutive computation periods is satisfied (step S33). It is possible to recognize the relative numbers of the magnetic poles sensed by the second and third magnetic sensors 72, 73 in each computation period on the basis of the second relative magnetic pole number r2 and the third relative magnetic pole number r3. Therefore, if the relative magnetic pole numbers r2, r3 for multiple computation periods from the n-th preceding computation period (n is a prescribed value) to the present computation period are stored in the memory, it is possible to determine whether both the second and third magnetic sensors 72, 73 sense one and the same magnetic pole for three consecutive computation periods.

If the condition in step S33 is not satisfied (NO in step S33), the first rotation angle computation unit 77A returns to step S23 in FIG. 12A. If it is determined in step S31 that the condition in step S31 is satisfied (YES in step S31), the first rotation angle computation unit 77A determines whether the condition that none of the denominators of the fractions included in the $E\theta$ basic arithmetic expression (7) and the E arithmetic expression (8) used in the first computation mode are zero is satisfied (step S32). If the condition in step S32 is not satisfied (NO in step S32), the first rotation angle computation unit 77A returns to step S23 in FIG. 12A. On the other hand, if the condition in step S32 is satisfied (YES in step S32), the first rotation angle computation unit 77A proceeds on to step S35.

If it is determined in step S33 that the condition in step S33 is satisfied (YES in step S33), the first rotation angle computation unit 77A determines whether the condition that none of the denominators of the fractions included in the $E\Theta$ basic arithmetic expression (32) and the E arithmetic expression (33) used in the second computation mode are zero is satisfied (step S34). If the condition in step S34 is not satisfied (NO in step S34), the first rotation angle computation unit 77A returns to step S23 in FIG. 12A. On the other hand, if the condition in step S34 is satisfied (YES in step S34), the first rotation angle computation unit 77A proceeds on to step S35.

In step S35, the first rotation angle computation unit 77A drives the electric motor 18 to rotate the electric motor 18 in a second direction that is the opposite direction of the first direction. Specifically, the first rotation angle computation unit 77A transmits, to the motor control ECU 12, a second forced rotation command according to which the electric motor 18 is driven to be rotated in the second direction. Upon reception of the second forced rotation command, the motor control ECU 12 drives the electric motor 18 to rotate the electric motor 18 in the second direction.

Then, the first rotation angle computation unit 77A obtains the sensor values $S_1(n)$, $S_2(n)$, $S_3(n)$ from the respective magnetic sensors, 71, 72, 73 (step S36). The process in step S36 is repeatedly executed with a predetermined computation period until an affirmative determination is made in step S41, step S45 or step S49 described later. Then, the first rotation angle computation unit 77A determines whether zero-crossing of each of the sensor values $S_1$, $S_2$, $S_3$, that is, inversion of the sign of each of the sensor values $S_1$, $S_2$, $S_3$ is detected, on the basis of the sensor values $S_1$, $S_2$, $S_3$ stored in the memory (step S37). If zero-crossing is not detected (NO in step S37), the first rotation angle computation unit 77A proceeds on to step S39.

If zero-crossing of one of the sensor values $S_1$, $S_2$, $S_3$ is detected in step S37 (YES in step S37), the first rotation angle computation unit 77A executes a relative pole number updating process (step S38). The relative pole number updating process is the same as the relative pole number updating process in step S27 (see FIG. 12A) described above. When the relative pole number updating process in step S38 ends, the first rotation angle computation unit 77A proceeds on to step S39.

In step S39, the first rotation angle computation unit 77A determines whether the value of the second sensor malfunction flag $F_{A2}$ is zero. When the value of the second sensor malfunction flag $F_{A2}$ is zero (YES in step S39), that is, when the second magnetic sensor 72 does not malfunction, the first rotation angle computation unit 77A proceeds on to step S40 in FIG. 12C. In step S40, the first rotation angle computation unit 77A determines whether the condition that both the first and second magnetic sensors 71, 72 are properly operating and sense one and the same magnetic pole for three consecutive computation periods is satisfied. If the condition in step S40 is not satisfied (NO in step S40), the first rotation angle computation unit 77A determines whether the condition that both the second and third magnetic sensors 72, 73 are properly operating and sense one and the same magnetic pole for three consecutive computation periods is satisfied (step S44). If the condition in step S44 is not satisfied (NO in step S44), the first rotation angle computation unit 77A returns to step S36 in FIG. 12B.

If it is determined in step S40 that the condition in step S40 is satisfied (YES in step S40), the first rotation angle computation unit 77A determines whether the condition that none of the denominators of the fractions included in the $E\theta$ basic arithmetic expression (7) and the E arithmetic expression (8) used in the first computation mode are zero is satisfied (step S41). If the condition in step S41 is not satisfied (NO in step S41), the first rotation angle computation unit 77A returns to step S36 in FIG. 12B.

If it is determined that the condition in step S41 is satisfied (YES in step S41), the first rotation angle computation unit 77A computes the values of $\theta(n)$, E, $A_1$, and $A_2$ in the first computation mode (step S42). Then, the first rotation angle computation unit 77A stores the computed values of E, $A_1$, and $A_2$ in the memory in association with the relative pole number of the magnetic pole sensed by the first and second magnetic sensors 71, 72 (step S43). The relative pole number of the magnetic pole sensed by the first and second magnetic sensors 71, 72 is the same number as the presently set first relative pole number r1 or second relative pole number r2. Specifically, the first rotation angle computation unit 77A stores the computed values of E, $A_1$, and $A_2$ in the storage locations in the areas e1, e2, e3 of the memory, which are associated with the presently set first relative pole number r1. Then, the first rotation angle computation unit 77A proceeds on to step S52.

If it is determined in step S44 that the condition in step S44 is satisfied (YES in step S44), the first rotation angle computation unit 77A determines whether the condition that none of the denominators of the fractions included in the E$\Theta$ basic arithmetic expression (32) and the E arithmetic expression (33) used in the second computation mode are zero is satisfied (step S45). If the condition in step S45 is not satisfied (NO in step S45), the first rotation angle computation unit 77A returns to step S36 in FIG. 12B.

If it is determined that the condition in step S45 is satisfied (YES in step S45), the first rotation angle computation unit 77A computes the values of $\theta(n)$, E, $A_2$, and $A_3$ in the second computation mode (step S46). Then, the first rotation angle computation unit 77A stores the computed values of E, $A_2$, and $A_3$ in the memory in association with the relative pole number of the magnetic pole sensed by the second and third magnetic sensors 72, 73 (step S47). The relative pole number of the magnetic pole sensed by the second and third magnetic sensors 72, 73 is the same number as the presently set second relative pole number r2 or third relative pole number r3. Specifically, the first rotation angle computation unit 77A stores the computed values of E, $A_2$, and $A_3$ in the storage locations in the areas e1, e3, e4 of the memory, which are associated with the presently set second relative pole number r2. Then, the first rotation angle computation unit 77A proceeds on to step S52.

In step S52, the first rotation angle computation unit 77A stops driving of the electric motor 18 and cancels the warning for the driver. Specifically, the first rotation angle computation unit 77A transmits a driving stop command for the electric motor 18 to the motor control ECU 12, and also transmits a warning cancellation command to the image-voice control unit. Upon reception of the driving stop command for the electric motor 18, the motor control ECU 12 stops driving of the electric motor 18. Upon reception of the warning cancellation command, the image-voice control unit cancels the warning display, the warning voice output, or the like. Thus, the rotation angle computing process based on forced rotation ends.

As shown in FIG. 12A, when it is determined in step S28 that the value of the second sensor malfunction flag $F_{A2}$ is not zero (NO in step S28), that is, when it is determined that the second magnetic sensor 72 malfunctions from immediately after the power supply is turned on, the first rotation angle computation unit 77A proceeds on to step S29. In step S29, the first rotation angle computation unit 77A determines whether the condition that both the first and third magnetic sensors 71, 73 sense one and the same magnetic pole for three consecutive computation periods is satisfied. It is possible to recognize the relative numbers of the magnetic poles sensed by the first and third magnetic sensors 71, 73 in each computation period on the basis of the first relative magnetic pole number r1 and the third relative magnetic pole number r3. Therefore, if the relative magnetic pole numbers r1, r3 for multiple computation periods from the n-th preceding computation period (n is a prescribed value) to the present computation period are stored in the memory, it is possible to determine whether both the first and third magnetic sensors 71, 73 sense one and the same magnetic pole for three consecutive computation periods.

When the condition in step S29 is not satisfied (NO in step S29), the first rotation angle computation unit 77A returns to step S23. On the other hand, if it is determined that the condition in step S29 is satisfied (YES in step S29), the first rotation angle computation unit 77A determines whether the condition that none of the denominators of the fractions included in the E$\theta$ basic arithmetic expression (35) and the E arithmetic expression (36) used in the third computation mode are zero is satisfied (step S30). If the condition in step S30 is not satisfied (NO in step S30), the first rotation angle computation unit 77A returns to step S23. On the other hand, if the condition in step S30 is satisfied (YES in step S30), the first rotation angle computation unit 77A proceeds on to step S35 in FIG. 12B and drives the electric motor 18 in the second direction.

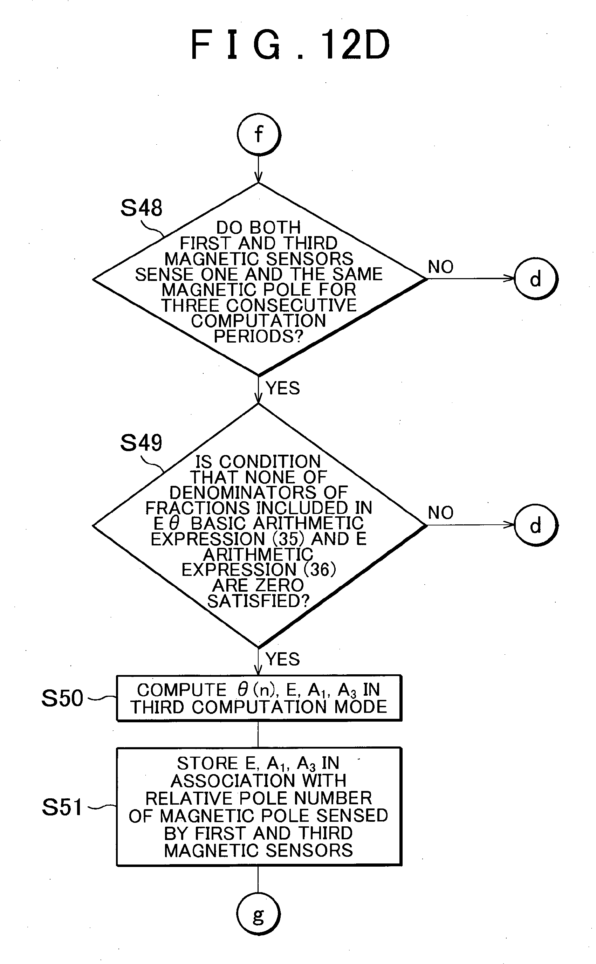

When it is determined in step S39 in FIG. 12B that the value of the second sensor malfunction flag $F_{A2}$ is not zero (NO in step S39), that is, when it is determined that the second magnetic sensor 72 malfunctions from immediately after the power supply is turned on, the first rotation angle computation unit 77A proceeds on to step S48 in FIG. 12D. In step S48, the first rotation angle computation unit 77A determines whether the condition that both the first and third magnetic sensors 71, 73 sense one and the same magnetic pole for three consecutive computation periods is satisfied. If the condition in step S48 is not satisfied (NO in step S48), the first rotation angle computation unit 77A returns to step S36 in FIG. 12B.

In step S48, if it is determined that the condition in step S48 is satisfied (YES in step S48), the first rotation angle computation unit 77A determines whether the condition that none of the denominators of the fractions included in the E$\theta$ basic arithmetic expression (35) and the E arithmetic expression (36) used in the third computation mode are zero is satisfied (step S49). If the condition in step S49 is not satisfied (NO in step S49), the first rotation angle computation unit 77A returns to step S36 in FIG. 12B.

If it is determined that the condition in step S49 is satisfied (YES in step S49), the first rotation angle computation unit 77A computes the values of $\theta(n)$, E, $A_1$, and $A_3$ in the third computation mode (step S50). The first rotation angle computation unit 77A stores the computed values of E, $A_1$, and $A_3$ in the memory in association with the relative pole number of the magnetic pole sensed by the first and third magnetic sensors 71, 73 (step S51). The relative pole number of the magnetic pole sensed by the first and third magnetic sensors 71, 73 is the same number as the presently set first relative pole number r1 or third relative pole number r3. Specifically, the first rotation angle computation unit 77A stores the computed values of E, $A_1$, and $A_3$ in storage locations in the areas e1, e2, e4 of the memory, which are associated with the presently set first relative pole number r1. Then, the first rotation angle computation unit 77A proceeds on to step S52.

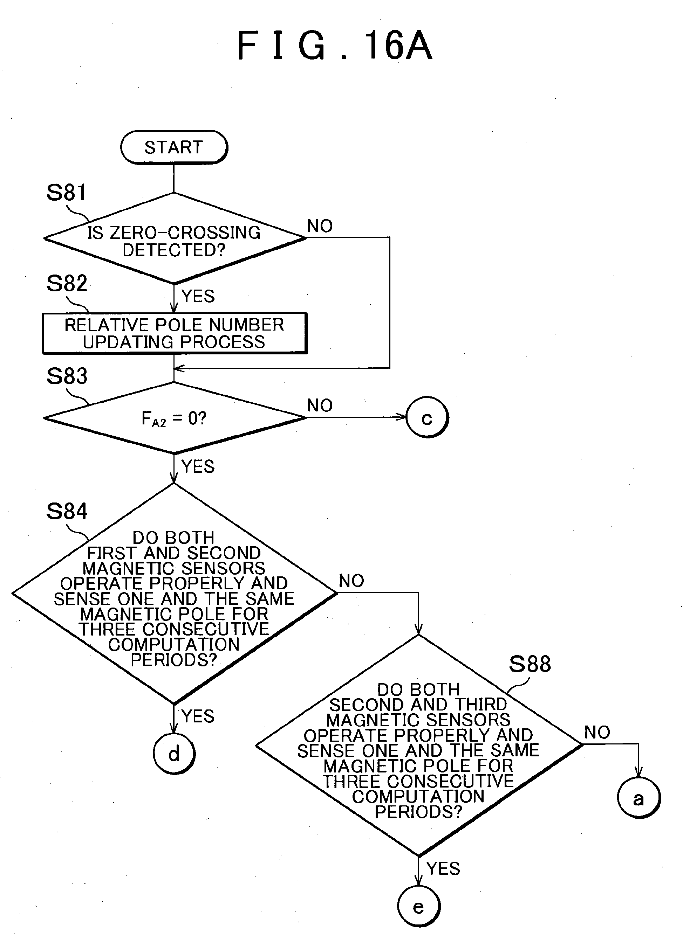

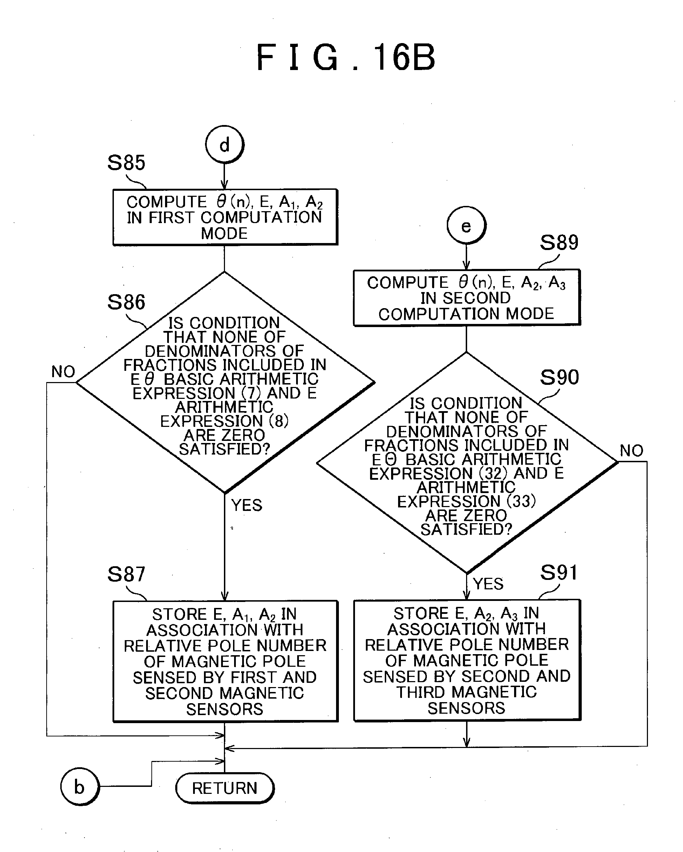

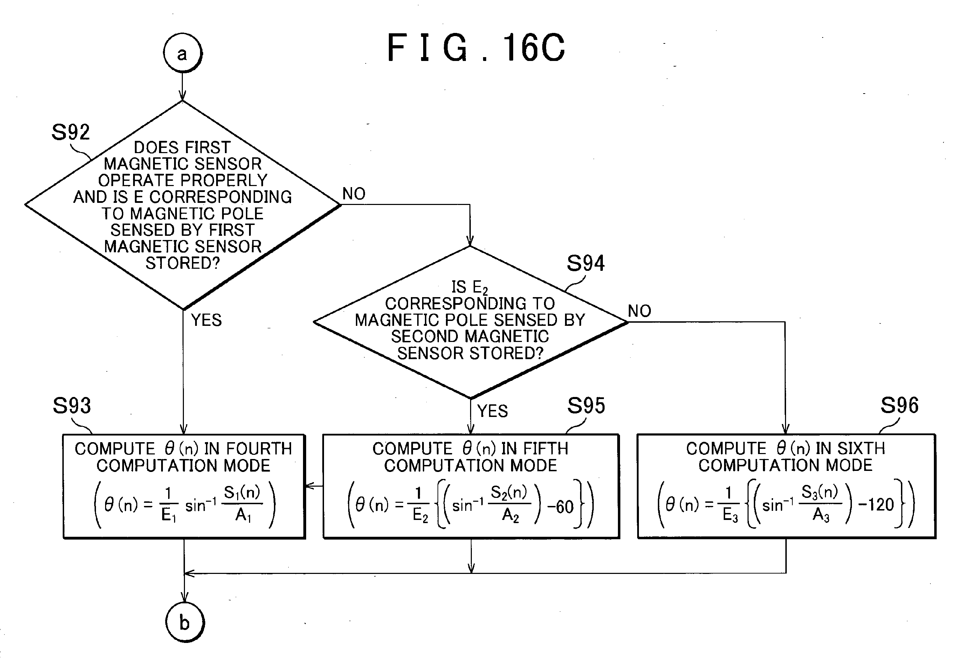

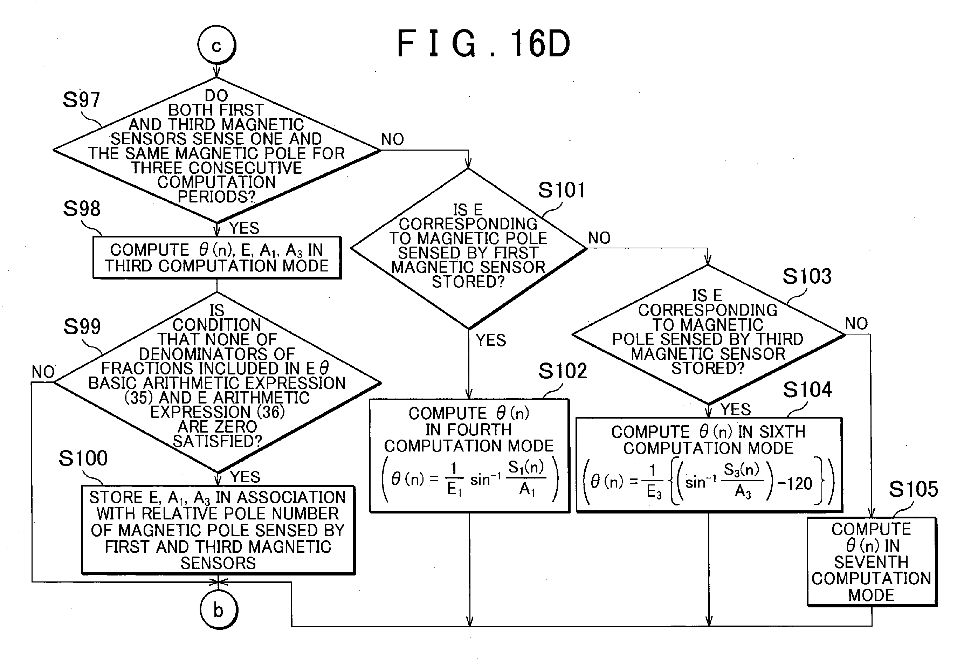

FIG. 16A, FIG. 16B, FIG. 16C, and FIG. 16D are flowcharts showing the procedure of the normal rotation angle computation process in step S5 in FIG. 10. In the normal rotation angle computation process, the first rotation angle computation unit 77A computes the rotation angle $\theta$ of the input shaft 8 on the basis of the sensor values $S_1(n)$, $S_2(n)$, $S_3(n)$ obtained in the malfunction determination process in step S1 in FIG. 10 (more specifically, in step S11 in FIG. 11).

The first rotation angle computation unit 77A determines whether zero-crossing of each of the sensor values $S_1$, $S_2$, $S_3$, that is, inversion of the sign of each of the sensor values $S_1$, $S_2$, $S_3$ is detected, on the basis of the sensor values $S_1$, $S_2$, $S_3$ stored in the memory (step S81). If zero-crossing is not detected (NO in step S81), the first rotation angle computation unit 77A proceeds on to step S83. If zero-crossing of one of the sensor values $S_1$, $S_2$, $S_3$ is detected in step S81 (YES in step S81), the first rotation angle computation unit 77A executes a relative pole number updating process (step S82). The relative pole number updating process is the same as the relative pole number updating process in step S27 in FIG. 12A described above. When the relative pole number updating process in step S82 ends, the first rotation angle computation unit 77A proceeds on to step S83.

In step S83, the first rotation angle computation unit 77A determines whether the value of the second sensor malfunction flag $F_{A2}$ is zero. If the value of the second sensor malfunction flag $F_{A2}$ is zero (YES in step S83), that is, if the second magnetic sensor 72 does not malfunction, the first rotation angle computation unit 77A proceeds on to step S84. In step S64, the first rotation angle computation unit 77A determines whether the condition that both the first and second magnetic sensors 71, 72 are properly operating and sense one and the same magnetic pole for three consecutive computation periods is satisfied. If the condition in step S84 is satisfied (YES in step S84), the first rotation angle computation unit 77A computes the values of $\theta(n)$, E, $A_1$, and $A_2$ in the first computation mode (step S85). At the time of computing the rotation angle $\theta(n)$ in the first computation mode, the first rotation angle computation unit 77A determines whether the denominators of the fractions included in the $E\theta$ basic arithmetic expression (7) are not zero and whether the denominators of the fractions included in the E arithmetic expression (8) are not zero, and computes the values of $\theta(n)$, E, $A_1$, and $A_2$ on the basis of the results of determinations.

After computing the values of $\theta(n)$, E, $A_1$, and $A_2$, the first rotation angle computation unit 77A determines whether the condition that none of the denominators of the fractions included in the $E\theta$ basic arithmetic expression (7) and the E arithmetic expression (8) are zero is satisfied (step S86). If the condition in step S86 is satisfied (YES in step S86), the first rotation angle computation unit 77A stores the computed values of E, $A_1$, and $A_2$ in the memory in association with the relative pole number of the magnetic pole sensed by the first and second magnetic sensors 71, 72 (step S87). The relative pole number of the magnetic pole sensed by the first and second magnetic sensors 71, 72 is the same number as the presently set first relative pole number r1 or second relative pole number r2. Specifically, the first rotation angle computation unit 77A stores the computed values of E, $A_1$, and $A_2$ in the storage locations in the areas e1, e2, e3 of the memory, which are associated with the presently set first relative pole number r1. Note that, if the values of E, $A_1$, and $A_2$ have already been stored in the above-described storage locations in the areas e1, e2, e3 of the memory, the already stored values of E, $A_1$, and $A_2$ are overwritten with the presently computed values of E, $A_1$, and $A_2$. Then, the first rotation angle computation unit 77A ends the normal rotation angle computation process in the present computation period.

If it is determined in step S86 that the condition in step S86 is not satisfied (NO in step S86), the first rotation angle computation unit 77A ends the normal rotation angle computation process in the present computation period without executing the process in step S87. In this case, the values of E, $A_1$, and $A_2$ computed in step S85 are not stored in the areas e1, e2, e3 of the memory.

If it is determined in step S84 that the condition in step S84 is not satisfied (NO in step S84), the first rotation angle computation unit 77A determines whether the condition that both the second and third magnetic sensors 72, 73 are properly operating and sense one and the same magnetic pole for three consecutive computation periods is satisfied (step S88). If the condition in step S88 is satisfied (YES in step S88), the first rotation angle computation unit 77A computes the values of $\theta(n)$, E, $A_2$, and $A_3$ in the second computation mode (step S89). At the time of computing the rotation angle $\theta(n)$ in the second computation mode, the first rotation angle computation unit 77A determines whether the denominators of the fractions included in the $E\Theta$ basic arithmetic expression (32) are not zero and whether the denominators of the fractions included in the E arithmetic expression (33) are not zero, and computes the values of $\theta(n)$, E, $A_2$, and A3 on the basis of the results of determinations.

After computing the values of θ(n), E, $A_2$, and $A_3$, the first rotation angle computation unit 77A determines whether the condition that none of the denominators of the fractions included in the EΘ basic arithmetic expression (32) and the E arithmetic expression (33) are zero is satisfied (step S90). If the condition in step S90 is satisfied (YES in step S90), the first rotation angle computation unit 77A stores the computed values of E, $A_2$, and $A_3$ in the memory in association with the relative pole number of the magnetic pole sensed by the second and third magnetic sensors 72, 73 (step S91). The relative pole number of the magnetic pole sensed by the second and third magnetic sensors 72, 73 is the same number as the presently set second relative pole number r2 or third relative pole number r3. Specifically, the first rotation angle computation unit 77A stores the computed values of E, $A_2$, and $A_3$ in storage locations in the areas e1, e3, e4 of the memory, which are associated with the presently set second relative pole number r2. Note that, if the values of E, $A_2$, and $A_3$ have already been stored in the above-described storage locations in the areas e1, e3, e4 of the memory, the already stored values of E, $A_2$, and $A_3$ are overwritten with the presently computed values of E, $A_2$, and $A_3$. Then, the first rotation angle computation unit 77A ends the normal rotation angle computation process in the present computation period.

If it is determined in step S90 that the condition in step S90 is not satisfied (NO in step S90), the first rotation angle computation unit 77A ends the normal rotation angle computation process in the present computation period without executing the process in step S91. In this case, the values of E, $A_2$, and $A_3$ computed in step S89 are not stored in the areas e1, e3, e4 of the memory.

If it is determined in step S88 that the condition in step S88 is not satisfied (NO in step S88), the first rotation angle computation unit 77A proceeds on to step S92 in FIG. 13B. In step S92, the first rotation angle computation unit 77A determines whether the first magnetic sensor 71 is properly operating and the angular width error correction value E corresponding to the magnetic pole sensed by the first magnetic sensor 71 is stored in the memory. Whether the angular width error correction value E corresponding to the magnetic pole sensed by the first magnetic sensor 71 is stored in the memory is determined based on whether the angular width error correction value E is stored in a storage location in the area e1 of the memory, which is associated with the presently set first relative pole number r1.

If the first magnetic sensor 71 is properly operating and the angular width error correction value E corresponding to the magnetic pole sensed by the first magnetic sensor 71 is stored in the memory (YES in step S92), the first rotation angle computation unit 77A computes the rotation angle θ(n) in the fourth computation mode (step S93). Then, the first rotation angle computation unit 77A ends the normal rotation angle computation process in the present computation period.

If it is determined in step S92 that the first magnetic sensor 71 malfunctions or the angular width error correction value E corresponding to the magnetic pole sensed by the first magnetic sensor 71 is not stored in the memory (NO in step S92), the first rotation angle computation unit 77A proceeds on to step S94. In step S94, the first rotation angle computation unit 77A determines whether the angular width error correction value E corresponding to the magnetic pole sensed by the second magnetic sensor 72 is stored in the memory. The determination is made based on whether the angular width error correction value E is stored in a storage location in the area e1 of the memory, which is associated with the presently set second relative pole number r2.

If the angular width error correction value E corresponding to the magnetic pole sensed by the second magnetic sensor 72 is stored in the memory (YES in step S94), the first rotation angle computation unit 77A computes the rotation angle θ(n) in the fifth computation mode (step S95). Then, the first rotation angle computation unit 77A ends the normal rotation angle computation process in the present computation period. If it is determined in step S94 that the angular width error correction value E corresponding to the magnetic pole sensed by the second magnetic sensor 72 is not stored in the memory (NO in step S94), the first rotation angle computation unit 77A computes the rotation angle θ(n) in the sixth computation mode (step S96). Then, the first rotation angle computation unit 77A ends the normal rotation angle computation process in the present computation period.

As shown in FIG. 16A, when it is determined in step S 83 that the value of the second sensor malfunction flag $F_{A2}$ is not zero (NO in step S83), that is, when it is determined that the second magnetic sensor 72 malfunctions, the first rotation angle computation unit 77A proceeds on to step S97 in FIG. 16D. In step S97, the first rotation angle computation unit 77A determines whether the condition that both the first and third magnetic sensors 71, 73 sense one and the same magnetic pole for three consecutive computation periods is satisfied. If it is determined that the condition in step S97 is satisfied (YES in step S97), the first rotation angle computation unit 77A computes the values of θ(n), E, $A_1$, and $A_3$ in the third computation mode (step S98). At the time of computing the rotation angle θ(n) in the third computation mode, the first rotation angle computation unit 77A determines whether the denominators of the fractions included in the Eθ basic arithmetic expression (35) are not zero and whether the denominators of the fractions included in the E arithmetic expression (36) are not zero, and computes the values of θ(n), E, $A_1$, and $A_3$ on the basis of the results of determinations.

After computing the values of θ(n), E, $A_1$, and $A_3$, the first rotation angle computation unit 77A determines whether the condition that none of the denominators of the fractions included in the Eθ basic arithmetic expression (35) and the E arithmetic expression (36) are zero is satisfied (step S99). If the condition in step S99 is satisfied (YES in step S99), the first rotation angle computation unit 77A stores the computed values of E, $A_1$, and $A_3$ in the memory in association with the relative pole number of the magnetic pole sensed by the first and third magnetic sensors 71, 73 (step S100). The relative pole number of the magnetic pole sensed by the first and third magnetic sensors 71, 73 is the same number as the presently set first relative pole number r1 or third relative pole number r3. Specifically, the first rotation angle computation unit 77A stores the computed values of E, $A_1$, and $A_3$ in storage locations in the areas e1, e2, e4 of the memory, which are associated with the presently set first relative pole number r1. Note that, if the values of E, $A_1$, and $A_3$ have already been stored in the above-described storage locations in the areas e1, e2, e4 of the memory, the already stored values of E, $A_1$, and $A_3$ are overwritten with the presently computed values of E, $A_1$, and $A_3$. Then, the first rotation angle computation unit 77A ends the normal rotation angle computation process in the present computation period.

If it is determined in step S99 that the condition in step S99 is not satisfied (NO in step S99), the first rotation angle computation unit 77A ends the normal rotation angle computation process in the present computation period without executing the process in step S100. In this case, the values of E, $A_1$, and $A_3$ computed in step S98 are not stored in the areas e1, e2, e4 of the memory.

If it is determined in step S97 that the condition in step S97 is not satisfied (NO in step S97), the first rotation angle computation unit 77A determines whether the angular width error correction value E corresponding to the magnetic pole sensed by the first magnetic sensor 71 is stored in the memory (step S101). The determination is made based on whether the angular width error correction value E is stored in a storage location in the area e1 of the memory, which is associated with the presently set first relative pole number r1.

If the angular width error correction value E corresponding to the magnetic pole sensed by the first magnetic sensor 71 is stored in the memory (YES in step S101), the first rotation angle computation unit 77A computes the rotation angle $\theta(n)$ in the fourth computation mode (step S102). Then, the first rotation angle computation unit 77A ends the normal rotation angle computation process in the present computation period. If it is determined in step S101 that the angular width error correction value E corresponding to the magnetic pole sensed by the first magnetic sensor 71 is not stored in the memory (NO in step S101), the first rotation angle computation unit 77A proceeds on to step S103. In step S103, the first rotation angle computation unit 77A determines whether the angular width error correction value E corresponding to the magnetic pole sensed by the third magnetic sensor 73 is stored in the memory. The determination is made based on whether the angular width error correction value E is stored in a storage location in the area e1 of the memory, which is associated with the presently set third relative pole number r3.

If the angular width error correction value E corresponding to the magnetic pole sensed by the third magnetic sensor 73 is stored in the memory (YES in step S103), the first rotation angle computation unit 77A computes the rotation angle $\theta(n)$ in the sixth computation mode (step S104). Then, the first rotation angle computation unit 77A ends the normal rotation angle computation process in the present computation period. If it is determined in step S103 that the angular width error correction value E corresponding to the magnetic pole sensed by the third magnetic sensor 73 is not stored in the memory (NO in step S103), the first rotation angle computation unit 77A computes the rotation angle $\theta(n)$ in the seventh computation mode (step S105). That is, the rotation angle $\theta(n)$ is computed according to the arithmetic expressions (35), (36), (37) that are used in the third computation mode. Then, the first rotation angle computation unit 77A ends the normal rotation angle computation process in the present computation period. Although the process in step S105 is executed when a negative determination is made in step S103, whether the situation where a negative determination is made in step S103 actually occurs is unknown. Even if the situation where a negative determination is made in step S103 occurs, the probability of occurrence is considered to be considerably low. In the present embodiment, the process in step S105 is prepared just in case.

Note that step S86 in FIG. 16B may be omitted, and step S87 may be executed after completion of the process in step S85. Similarly, step S90 in FIG. 16B may be omitted, and step S91 may be executed after completion of the process in step S89. Similarly, step S99 in FIG. 16D may be omitted, and t step S101 may be executed after completion of the process in step S98. In the foregoing embodiment, the sum of the angular interval between the second magnetic sensor 72 and the first magnetic sensor 71 and the angular interval between the second magnetic sensor 72 and the third magnetic sensor 73 is 120° in electrical angle, and is set smaller than the angular width (180° in electrical angle) of one magnetic pole. Therefore, even if one of the three magnetic sensors 71, 72, 73 malfunctions, the state where the other two properly operating magnetic sensors sense one and the same magnetic pole for three consecutive sampling periods (three consecutive computation periods) may occur.

If the condition that two properly operating magnetic sensors sense one and the same magnetic pole for three consecutive sampling periods (three consecutive computation periods) is satisfied, the rotation angle of the rotary body is computed on the basis of the output signals from the two properly operating magnetic sensors, which are sampled at three sampling timings. Thus, it is possible to compute the rotation angle with a high degree of accuracy. As a result, even if one of the three magnetic sensors malfunctions, it is possible to compute the rotation angle accurately as long as the condition is satisfied.

Moreover, in the present embodiment, even if the condition that the two properly operating magnetic sensors sense one and the same magnetic pole for three sampling periods (three consecutive computation periods) is not satisfied, in most cases, the rotation angle is computed in one of the fourth, fifth, and sixth computation modes. Therefore, even if the condition is not satisfied, the rotation angle can be accurately computed.

While one example embodiment of the invention has been described above, the invention may be implemented in various other embodiments. For example, in the foregoing embodiment, the angular interval between the second magnetic sensor 72 and the first magnetic sensor 71 is 60°, and the angular interval between the second magnetic sensor 72 and the third magnetic sensor 73 is 60°. However, as long as the sum of the angular interval between the second magnetic sensor 72 and the first magnetic sensor 71 and the angular interval between the second magnetic sensor 72 and the third magnetic sensor 73 is smaller than 180° in electrical angle, each of the above angular intervals may be other than 60°. In this case, the angular interval between the second magnetic sensor 72 and the third magnetic sensor 73 may be different from the angular interval between the second magnetic sensor 72 and the third magnetic sensor 73.

In the foregoing embodiment, in each of the first computation mode, the second computation mode, and the third computation mode, when prescribed two magnetic sensors sense one and the same magnetic pole for three consecutive sampling periods, the rotation angle θ is computed on the basis of the output signals from the two magnetic sensors, which are sampled at three sampling timings. Alternatively, in each of the first computation mode, the second computation mode, and the third computation mode, when prescribed two magnetic sensors sense one and the same magnetic pole for two consecutive sampling periods, the rotation angle θ may be computed on the basis of the output signals from the two magnetic sensors, which are sampled at two sampling timings.

In this case, one of the amplitude of the output signal from each of the two magnetic sensors and the angular width error correction value used to compute the rotation angle θ is set to a fixed value. As a result, it is possible to compute the rotation angle θ on the basis of the output signals from the two magnetic sensors, which are sampled at two sampling timings. When the amplitude of the output signal from each of the two magnetic sensors is set to a fixed value, the information stored in association with the relative pole number is only the angular width error correction value. On the other hand, when the angular width error correction value is set to a fixed value, the information stored in association with the relative pole number is only the amplitude of the output signal from each magnetic sensor.

In each of the first computation mode, the second computation mode, and the third computation mode, when prescribed two magnetic sensors sense one and the same magnetic pole for a predetermined number of consecutive sampling periods (the predetermined number is four or more), the rotation angle θ may be computed on the basis of the output signals from the two magnetic sensors, which are sampled at the predetermined number of sampling timings. Note that, the invention may be implemented in various other modified embodiments within the scope of the appended claims.

**Claims**

1. A rotation angle detection device comprising:

   a plurality of sensors (71, 72, 73) used to detect a rotation angle of a rotary body (8; 9);
   a sampling unit that samples an output signal from each of the sensors at prescribed timings;
   a computation unit (77A) that computes the rotation angle of the rotary body (8; 9) with use of a plurality of the output signals from at least two sensors among the plurality of the sensors (71, 72, 73), the output signals of each at least two sensors being sampled at a prescribed number of different timings, the prescribed number being three or more; and
   a multipolar magnet (61) that rotates in accordance with rotation of the rotary body (8; 9), and that has a plurality of magnetic poles, wherein
   a sensor group constituted of multiple sensors is selected from the plurality of the sensors (71, 72, 73), and the sensors arranged at respective ends of the sensor group respectively output sinusoidal signals having a phase difference smaller than 180° in electrical angle in accordance with rotation of the multipolar magnet (61);
   the computation unit (77A) is configured to compute the rotation angle of the rotary body (8; 9) with use of six output signals from two sensors that belong to the sensor group, the six output signals including three output signals from one of the two sensors and three output signals from the other one of the two sensors, and being sampled at three different timings,
   multiple expressions obtained by mathematizing the six output signals each include an amplitude of the corresponding output signal, the rotation angle of the rotary body (8; 9), and a piece of information regarding a magnetic pole width of each of the magnetic poles of the multipolar magnet (61) as unknown quantities,
   the computation unit (77A) computes the rotation angle of the rotary body (8; 9) on an assumption that, among the unknown quantities included in the six expressions, the amplitudes of the three output signals from each one of the two sensors, the three output signals being sampled at different sampling timings, are equal to one another, and all the pieces of the information regarding the magnetic pole width included in the six expressions are the same.

2. The rotation angle detection device according to claim 1, wherein:

the sensor group is constituted of three magnetic sensors, and a sum of an angular interval between a central magnetic sensor and one of remaining magnetic sensors among the three magnetic sensors and an angular interval between the central magnetic sensor and the other one of the remaining magnetic sensors is smaller than 180° in electrical angle; and
the rotation angle detection device further includes
a malfunction determination unit that determines whether each of the magnetic sensors malfunctions,
a first computation unit that computes the rotation angle of the rotary body based on the output signals from two properly operating magnetic sensors including the central magnetic sensor that sense one and the same magnetic pole for a prescribed number of multiple consecutive sampling periods among the three magnetic sensors, the output signals being sampled at the prescribed number of multiple sampling timings, when at least two magnetic sensors including the central magnetic sensor among the three magnetic sensors are properly operating and a first condition that both the two properly operating magnetic sensors including the central magnetic sensor sense one and the same magnetic pole for the prescribed number of multiple consecutive sampling periods is satisfied, and
a second computation unit that computes the rotation angle of the rotary body based on the output signals from two properly operating magnetic sensors other than the central magnetic sensor among the three magnetic sensors, the output signals being sampled at the prescribed number of multiple sampling timings, when only the central magnetic sensor malfunctions and a second condition that the two properly operating magnetic sensors other than the central magnetic sensor sense one and the same magnetic pole for the prescribed number of multiple consecutive sampling periods is satisfied.

3. The rotation angle detection device according to claim 2, wherein:

the first computation unit includes a device that computes information regarding the magnetic pole width of the magnetic pole sensed by the two properly operating magnetic sensors including the central magnetic sensor and/or information regarding the amplitude of each of output signals from the two properly operating magnetic sensors, the output signals being sampled at the prescribed number of multiple sampling timings, and stores the information in association with the magnetic pole sensed by the two properly operating magnetic sensors, at all times or when the output signals from the two properly operating magnetic sensors including the central magnetic sensor satisfy a prescribed requirement in a case where the first condition is satisfied;
the second computation unit includes a device that computes information regarding the magnetic pole width of the magnetic pole sensed by the two properly operating magnetic sensors other than the central magnetic sensor and/or information regarding the amplitude of each of the output signals from the two properly operating magnetic sensors, the output signals being sampled at the prescribed number of multiple sampling timings, and stores the information in association with the magnetic pole sensed by the two properly operating magnetic sensors, at all times or when the output signals from the two properly operating magnetic sensors other than the central magnetic sensor satisfy a prescribed requirement in a case where the second condition is satisfied; and
the rotation angle detection device further includes a third computation unit that computes the rotation angle of the rotary body with use of the information stored by the first computation unit and the output signals from two magnetic sensors including one magnetic sensor, among properly operating magnetic sensors out of the three magnetic sensors, the one magnetic sensor sensing the magnetic pole associated with the stored information regarding the magnetic pole width and/or information regarding the amplitude, the output signals being sampled at one sampling timing, when at least two magnetic sensors including the central magnetic sensors among the three magnetic sensors are operating properly in a case where the first condition is not satisfied, and
a fourth computation unit that computes the rotation angle of the rotary body with use of the information stored by the second computation unit and the output signals from two properly operating magnetic sensors among the three magnetic sensors, the output signals being sampled at one sampling timing, when only the central magnetic sensor among the three magnetic sensors malfunctions, the second condition is not satisfied, and the information regarding the magnetic pole width and/or the information regarding the amplitude is stored in association with at least one of magnetic poles sensed by the two properly operating magnetic sensors other than the central magnetic sensor.

**4.** The rotation angle detection device according to claim 3, wherein in a case where the three magnetic sensors are a first magnetic sensor, a second magnetic sensor, and a third magnetic sensor and the second magnetic sensor is the central magnetic sensor, an angular interval between the second magnetic sensor and the first magnetic sensor is 60° in electrical angle, and an angular interval between the second magnetic sensor and the third magnetic sensor is 60° in electrical angle.

**Patentansprüche**

**1.** Drehwinkel-Erfassungsvorrichtung, mit

einer Vielzahl von Sensoren (71, 72, 73), die dazu verwendet werden, einen Drehwinkel eines Drehkörpers (8; 9) zu erfassen;

einer Abfrageeinheit, die ein Ausgabesignal von jedem der Sensoren zu vorgegebenen Zeitpunkten abfragt;

einer Berechnungseinheit (77A), die den Drehwinkel des Drehkörpers (8; 9) mittels einer Vielzahl von Ausgabesignalen von zumindest zwei Sensoren aus der Vielzahl der Sensoren (71, 72, 73) berechnet, wobei die Ausgabesignale von jedem der zumindest zwei Sensoren zu einer vorgegebenen Anzahl unterschiedlicher Zeitpunkte abgefragt werden, wobei die vorgegebene Anzahl drei oder mehr ist; und

einem mehrpoligen Magneten (61), der in Übereinstimmung mit der Drehung des Drehkörpers (8; 9) dreht, und der eine Vielzahl von Magnetpolen aufweist, wobei

eine Sensorgruppe, die aus mehreren Sensoren besteht, aus der Vielzahl der Sensoren (71, 72, 73) ausgewählt wird, und die Sensoren, die an den entsprechenden Enden der Sensorgruppe angeordnet sind, jeweils sinusförmige Signale mit einer Phasendifferenz kleiner als 180° elektrischer Winkel in Übereinstimmung mit der Drehung des mehrpoligen Magneten (61) ausgeben,

die Berechnungseinheit (77A) dazu ausgelegt ist, den Drehwinkel des Drehkörpers (8; 9) mittels sechs Ausgabesignalen von zwei Sensoren, die zu der Sensorgruppe gehören, zu berechnen, wobei die sechs Ausgabesignale drei Ausgabesignale von einem der zwei Sensoren und drei Ausgabesignale von dem anderen der zwei Sensoren umfassen, und zu drei unterschiedlichen Zeitpunkten abgefragt werden,

mehrfache Ausdrücke, die durch Mathematisieren der sechs Ausgabesignale, erhalten werden, die jeweils eine Amplitude des entsprechenden Ausgabesignals, den Drehwinkel des Drehkörpers (8; 9), und einen Teil an Informationen bezüglich einer Magnetpolweite von jedem der Magnetpole des mehrpoligen Magnets (61) als unbekannte Größen beinhalten,

die Berechnungseinheit (77A) den Drehwinkel des Drehkörpers (8; 9) berechnet, unter der Annahme, dass aus den unbekannten Größen, die in den sechs Ausdrücken enthalten sind, die Amplituden von drei zu unterschiedlichen Abfragezeitpunkten abgefragten Ausgabesignalen von jedem einzelnen der zwei Sensoren gleich sind, und alle Teile an Informationen bezüglich der Magnetpolweite, die in den sechs Ausdrücken enthalten sind, gleich sind.

**2.** Drehwinkel-Erfassungsvorrichtung gemäß Anspruch 1, wobei

die Sensorgruppe aus drei magnetischen Sensoren besteht, und eine Summe aus einem Winkelabstand zwischen einem zentralen magnetischen Sensor und einem der verbleibenden magnetischen Sensoren von den drei magnetischen Sensoren und einem Winkelabstand zwischen dem zentralen magnetischen Sensor und dem anderen der verbleibenden magnetischen Sensoren kleiner ist als 180° elektrischer Winkel; und

die Drehwinkel-Erfassungsvorrichtung ferner

eine Fehlfunktionsbestimmungseinheit, die bestimmt, ob einer der magnetischen Sensoren versagt,

eine erste Berechnungseinheit, die den Drehwinkel des Drehkörpers auf Basis der Ausgabesignale von zwei ordnungsgemäß funktionierenden magnetischen Sensoren einschließlich dem zentralen magnetischen Sensor aus den drei magnetischen Sensoren, berechnet, die ein und denselben Magnetpol über eine vorgegebene Anzahl von mehrfachen aufeinanderfolgenden Abfragezeiträumen erfasst, wobei die Ausgabesignale an der vorgegebenen Anzahl der mehreren Abfragezeitpunkte abgefragt werden, wenn zumindest zwei magnetische Sensoren einschließlich dem zentralen magnetischen Sensor aus den drei magnetischen Sensoren ordnungsgemäß funktionieren und eine erste Bedingung, dass beide der zwei ordnungsgemäß funktionierenden magnetischen Sensoren einschließlich dem zentralen magnetischen Sensor ein und denselben Magnetpol für die vorgegebene Anzahl von mehrfachen aufeinanderfolgenden Abfragezeiträumen erfassen, erfüllt ist, und

eine zweite Berechnungseinheit beinhaltet, die den Drehwinkel des Drehkörpers auf Basis der Ausgabesignale von zwei ordnungsgemäß funktionierenden magnetischen Sensoren mit Ausnahme des zentralen magnetischen Sensors aus den drei magnetischen Sensoren, wobei die Ausgabesignale in der vorgegebenen Anzahl der mehrfachen Abgabezeiträume abgefragt werden, wenn nur der zentrale magnetische Sensor versagt und eine zweite Bedingung, dass die zwei ordnungsgemäß funktionierenden magnetischen Sensoren mit Ausnahme des zentralen magnetischen Sensors ein und denselben Magnetpol für die vorgegebene Anzahl von mehrfachen aufeinanderfolgenden Abfragezeiträumen erfassen, erfüllt ist.

3. Drehwinkel-Erfassungsvorrichtung gemäß Anspruch 2, wobei
die erste Berechnungseinheit eine Vorrichtung beinhaltet, welche Informationen bezüglich der Magnetpolweite des Magnetpols berechnet, der von den zwei ordnungsgemäß funktionierenden magnetischen Sensoren einschließlich dem zentralen magnetischen Sensor erfasst wird und / oder Informationen bezüglich der Amplitude von jedem der Ausgabesignale von den zwei ordnungsgemäß funktionierenden magnetischen Sensoren berechnet, wobei die Ausgabesignale in der vorgegebenen Anzahl der mehrfachen Abfragezeitpunkte abgefragt werden, und die Informationen im Zusammenhang mit dem Magnetpol, der von den zwei ordnungsgemäß funktionierenden magnetischen Sensoren erfasst wird, jederzeit oder, wenn die Ausgabesignale von den zwei ordnungsgemäß funktionierenden magnetischen Sensoren einschließlich dem zentralen magnetischen Sensor eine vorgegebene Anforderung erfüllen, in einem Fall, dass die erste Bedingung erfüllt ist, speichert;
die zweite Berechnungseinheit eine Vorrichtung beinhaltet, welche Informationen bezüglich der Magnetpolweite des Magnetpols berechnet, der von den zwei ordnungsgemäß funktionierenden magnetischen Sensoren mit Ausnahme des zentralen magnetischen Sensors erfasst wird und / oder Informationen bezüglich der Amplitude von jedem der Ausgabesignale von den zwei ordnungsgemäß funktionierenden magnetischen Sensoren berechnet, wobei die Ausgabesignale in der vorgegebenen Anzahl der mehrfachen Abfragezeitpunkte abgefragt werden, und die Informationen im Zusammenhang mit dem Magnetpol, der von den zwei ordnungsgemäß funktionierenden magnetischen Sensoren erfasst wird, jederzeit oder, wenn die Ausgabesignale von den zwei ordnungsgemäß funktionierenden magnetischen Sensoren mit Ausnahme des zentralen magnetischen Sensors eine vorgegebene Anforderung in einem Fall, dass die zweite Bedingung erfüllt ist, speichert; und
die Drehwinkel-Erfassungsvorrichtung ferner eine dritte Berechnungseinheit beinhaltet, die den Drehwinkel des Drehkörpers berechnet, mithilfe der von der ersten Berechnungseinheit gespeicherten Informationen und den Ausgabesignalen von zwei magnetischen Sensoren einschließlich einem einzelnen magnetischen Sensor, aus ordnungsgemäß funktionierenden magnetischen Sensoren aus den drei magnetischen Sensoren, wobei der einzelne magnetische Sensor den Magnetpol verknüpft mit den Informationen bezüglich der Magnetpolweite und / oder Informationen bezüglich der Amplitude erfasst, wobei die Ausgabesignale zu einem Abfragezeitpunkt abgefragt werden, wenn zumindest zwei magnetische Sensoren einschließlich des zentralen magnetischen Sensors aus den drei magnetischen Sensoren ordnungsgemäß funktionieren, in einem Fall, dass die erste Bedingung nicht erfüllt ist, und
eine vierte Berechnungseinheit den Drehwinkel des Drehkörpers mittels der von der zweiten Berechnungseinheit gespeicherten Informationen und den Ausgabesignalen von zwei ordnungsgemäß funktionierenden magnetischen Sensoren aus drei magnetischen Sensoren berechnet, wobei die Ausgabesignale zu einem Abfragezeitpunkt abgefragt werden, wenn nur der zentrale magnetische Sensor aus den drei magnetischen Sensoren versagt, die zweite Bedingung nicht erfüllt ist, und die Informationen bezüglich der Magnetpolweite und / oder die Informationen bezüglich der Amplitude im Zusammenhang mit zumindest einem der von den zwei ordnungsgemäß funktionierenden magnetischen Sensoren, mit Ausnahme des zentralen magnetischen Sensors, erkannten Magnetpole, gespeichert werden.

4. Drehwinkel-Erfassungsvorrichtung gemäß Anspruch 3, wobei in einem Fall, dass die drei magnetischen Sensoren ein erster magnetischer Sensor, ein zweiter magnetischer Sensor, und ein dritter magnetischer Sensor sind, und der zweite magnetische Sensor der zentrale magnetische Sensor ist, ein Winkelabstand zwischen dem zweiten magnetischen Sensor und dem ersten magnetischen Sensor 60° elektrischer Winkel ist, und ein Winkelabstand zwischen dem zweiten magnetischen Sensor und dem dritten magnetischen Sensor 60° elektrischer Winkel ist.

**Revendications**

1. Dispositif de détection d'angle de rotation comprenant :

une pluralité de capteurs (71, 72, 73) utilisés pour détecter un angle de rotation d'un corps rotatif (8 ; 9) ;
une unité d'échantillonnage qui échantillonne un signal de sortie de chacun des capteurs à des instants prescrits ;
une unité de calcul (77A) qui calcule l'angle de rotation du corps rotatif (8 ; 9) en utilisant une pluralité des signaux de sortie d'au moins deux capteurs parmi la pluralité des capteurs (71, 72, 73), les signaux de sortie de chacun desdits au moins deux capteurs étant échantillonnés à un nombre prescrit d'instants différents, le nombre prescrit étant de trois ou plus ; et
un aimant multipolaire (61) qui tourne conformément à la rotation du corps rotatif (8 ; 9), et qui comporte une pluralité de pôles magnétiques, dans lequel

un groupe de capteurs constitué de multiples capteurs est sélectionné parmi la pluralité des capteurs (71, 72, 73), et les capteurs agencés aux extrémités respectives du groupe de capteurs délivrent, respectivement, des signaux sinusoïdaux ayant une différence de phase inférieure à 180° en angle électrique conformément à la rotation de l'aimant multipolaire (61),

l'unité de calcul (77A) est configurée pour calculer l'angle de rotation du corps rotatif (8 ; 9) en utilisant six signaux de sortie de deux capteurs qui appartiennent au groupe de capteurs, les six signaux de sortie comprenant trois signaux de sortie de l'un des deux capteurs et trois signaux de sortie de l'autre des deux capteurs, et étant échantillonnés à trois instants différents,

les multiples expressions obtenues en mathématisant les six signaux de sortie comprennent chacune une amplitude du signal de sortie correspondant, l'angle de rotation du corps rotatif (8 ; 9) et un élément d'informations concernant une largeur de pôle magnétique de chacun des pôles magnétiques de l'aimant multipolaire (61) en tant que quantités inconnues,

l'unité de calcul (77A) calcule l'angle de rotation du corps rotatif (8 ; 9) en supposant que, parmi les quantités inconnues incluses dans les six expressions, les amplitudes des trois signaux de sortie de chacun des deux capteurs, les trois signaux de sortie étant échantillonnés à différents instants d'échantillonnage, sont égales les unes aux autres, et tous les éléments des informations concernant la largeur de pôle magnétique inclus dans les six expressions sont identiques.

2. Dispositif de détection d'angle de rotation selon la revendication 1, dans lequel :

le groupe de capteurs est constitué de trois capteurs magnétiques, et une somme d'un intervalle angulaire entre un capteur magnétique central et l'un des capteurs magnétiques restants parmi les trois capteurs magnétiques et d'un intervalle angulaire entre le capteur magnétique central et l'autre des capteurs magnétiques restants est inférieure à 180° en angle électrique ; et

le dispositif de détection d'angle de rotation comprend en outre

une unité de détermination de dysfonctionnement qui détermine si chacun des capteurs magnétiques fonctionne mal,

une première unité de calcul qui calcule l'angle de rotation du corps rotatif sur la base des signaux de sortie de deux capteurs magnétiques fonctionnant correctement comprenant le capteur magnétique central qui détectent un seul et même pôle magnétique pendant un nombre prescrit de multiples périodes d'échantillonnage consécutives parmi les trois capteurs magnétiques, les signaux de sortie étant échantillonnés au nombre prescrit de multiples instants d'échantillonnage, lorsqu'au moins deux capteurs magnétiques comprenant le capteur magnétique central parmi les trois capteurs magnétiques fonctionnent correctement et qu'une première condition que les deux capteurs magnétiques fonctionnant correctement comprenant le capteur magnétique central détectent un seul et même pôle magnétique pendant le nombre prescrit de multiples périodes d'échantillonnage consécutives est satisfaite, et

une deuxième unité de calcul qui calcule l'angle de rotation du corps rotatif sur la base des signaux de sortie de deux capteurs magnétiques fonctionnant correctement autres que le capteur magnétique central parmi les trois capteurs magnétiques, les signaux de sortie étant échantillonnés au nombre prescrit de multiples instants d'échantillonnage, lorsque seul le capteur magnétique central fonctionne mal et qu'une deuxième condition que les deux capteurs magnétiques fonctionnant correctement autres que le capteur magnétique central détectent un seul et même pôle magnétique pendant le nombre prescrit de multiples périodes d'échantillonnage consécutives est satisfaite.

3. Dispositif de détection d'angle de rotation selon la revendication 2, dans lequel :

la première unité de calcul comprend un dispositif qui calcule des informations concernant la largeur de pôle magnétique du pôle magnétique détecté par les deux capteurs magnétiques fonctionnant correctement comprenant le capteur magnétique central et/ou des informations concernant l'amplitude de chacun des signaux de sortie des deux capteurs magnétiques fonctionnant correctement, les signaux de sortie étant échantillonnés au nombre prescrit de multiples instants d'échantillonnage, et mémorise les informations en association avec le pôle magnétique détecté par les deux capteurs magnétiques fonctionnant correctement, à tous moments ou lorsque les signaux de sortie des deux capteurs magnétiques fonctionnant correctement comprenant le capteur magnétique central satisfont à une spécification prescrite dans un cas où la première condition est satisfaite ;

la deuxième unité de calcul comprend un dispositif qui calcule des informations concernant la largeur de pôle magnétique du pôle magnétique détecté par les deux capteurs magnétiques fonctionnant correctement autres que le capteur magnétique central et/ou des informations concernant l'amplitude de chacun des signaux de sortie des deux capteurs magnétiques fonctionnant correctement, les signaux de sortie étant échantillonnés au nombre prescrit de multiples instants d'échantillonnage, et mémorise les informations en association avec le pôle magnétique détecté par les deux capteurs magnétiques fonctionnant correctement, à tous moments ou lorsque les signaux de sortie des deux capteurs magnétiques fonctionnant correctement autres que le capteur magnétique central satisfont à une spécification prescrite dans un cas où la deuxième condition est satisfaite ; et le dispositif de détection d'angle de rotation comprend en outre une troisième unité de calcul qui calcule l'angle de rotation du corps rotatif en utilisant les informations mémorisées par la première unité de calcul et les signaux de sortie des deux capteurs magnétiques comprenant un capteur magnétique, parmi les capteurs magnétiques fonctionnant correctement parmi les trois capteurs magnétiques, ledit un capteur magnétique détectant le pôle magnétique associé aux informations mémorisées concernant la largeur de pôle magnétique et/ou des informations concernant l'amplitude, les signaux de sortie étant échantillonnés à un instant d'échantillonnage, lorsqu'au moins deux capteurs magnétiques comprenant le capteur magnétique central parmi les trois capteurs magnétiques fonctionnent correctement dans un cas où la première condition n'est pas satisfaite, et une quatrième unité de calcul qui calcule l'angle de rotation du corps rotatif en utilisant les informations mémorisées par la deuxième unité de calcul et les signaux de sortie de deux capteurs magnétiques fonctionnant correctement parmi les trois capteurs magnétiques, les signaux de sortie étant échantillonnés à un instant d'échantillonnage, lorsque seul le capteur magnétique central parmi les trois capteurs magnétiques fonctionne mal, la deuxième condition n'est pas satisfaite, et les informations concernant la largeur de pôle magnétique et/ou les informations concernant l'amplitude sont mémorisées en association avec au moins l'un des pôles magnétiques détecté par les deux capteurs magnétiques fonctionnant correctement autres que le capteur magnétique central.

4. Dispositif de détection d'angle de rotation selon la revendication 3, dans lequel, dans un cas où les trois capteurs magnétiques sont un premier capteur magnétique, un deuxième capteur magnétique et un troisième capteur magnétique et le deuxième capteur magnétique est le capteur magnétique central, un intervalle angulaire entre le deuxième capteur magnétique et le premier capteur magnétique est de 60° en angle électrique, et un intervalle angulaire entre le deuxième capteur magnétique et le troisième capteur magnétique est de 60° en angle électrique.

# FIG.1

# FIG.2

EP 2 743 647 B1

# FIG.3

# FIG.4

q-AXIS CURRENT
COMMAND VALUE $I_q^*$ (A)

DETECTED STEERING
TORQUE Th (Nm)

# FIG. 5

# FIG.6

# FIG.7

ROTATION ANGLE OF
INPUT SHAFT (deg)

# F I G . 8A

# F I G . 8B

# F I G . 8C

# FIG.9

# F I G . 10

S1

START

**MALFUNCTION DETERMINATION PROCESS**

S2

$F_{AK} = 1?$

NO → S3

**ROTATION ANGLE COMPUTATION PROCESS BASED ON FORCED ROTATION**

S5

YES

**NORMAL ROTATION ANGLE COMPUTATION PROCESS**

S4

$F_{AK} = 1$

S6

**IS THERE INPUT OF IGNITION OFF COMMAND?**

NO

YES

END

EP 2 743 647 B1

# F I G . 11

START

S11  OBTAIN $S_1(n)$, $S_2(n)$, $S_3(n)$

S12  DOES FIRST MAGNETIC SENSOR MALFUNCTION? — NO

YES

S13  $F_{A1} = 1$

S14  DOES SECOND MAGNETIC SENSOR MALFUNCTION? — NO

YES

S15  $F_{A2} = 1$

S16  DOES THIRD MAGNETIC SENSOR MALFUNCTION? — NO

YES

S17  $F_{A3} = 1$

S18  DO TWO OR MORE MAGNETIC SENSOR MALFUNCTION? — YES

S19  ABNORMALITY HANDLING PROCESS

NO

RETURN

# F I G . 12A

START

GIVE WARNING TO DRIVER ~S21

DRIVE ELECTRIC MOTOR IN FIRST DIRECTION ~S22

b

OBTAIN $S_1(n)$, $S_2(n)$, $S_3(n)$ ~S23

S24 — FIRST TIME? — YES

S25 — RELATIVE POLE NUMBER SETTING PROCESS

NO

S26 — IS ZERO-CROSSING DETECTED? — NO

YES

S27 — RELATIVE POLE NUMBER UPDATING PROCESS

S28 — $F_{A2} = 0$? — NO

YES

a

S29 — DO BOTH FIRST AND THIRD MAGNETIC SENSORS SENSE ONE AND THE SAME MAGNETIC POLE FOR THREE CONSECUTIVE COMPUTATION PERIODS? — NO

YES

S30 — IS CONDITION THAT NONE OF DENOMINATORS OF FRACTIONS INCLUDED IN E $\theta$ BASIC ARITHMETIC EXPRESSION (35) AND E ARITHMETIC EXPRESSION (36) ARE ZERO SATISFIED? — NO

YES

e

# F I G . 12B

# F I G . 12C

c

**S40** DO BOTH FIRST AND SECOND MAGNETIC SENSORS OPERATE PROPERLY AND SENSE ONE AND THE SAME MAGNETIC POLE FOR THREE CONSECUTIVE COMPUTATION PERIODS? — NO

YES

**S44** DO BOTH SECOND AND THIRD MAGNETIC SENSORS OPERATE PROPERLY AND SENSE ONE AND THE SAME MAGNETIC POLE FOR THREE CONSECUTIVE COMPUTATION PERIODS? — NO

**S41** IS CONDITION THAT NONE OF DENOMINATORS OF FRACTIONS INCLUDED IN E $\theta$ BASIC ARITHMETIC EXPRESSION (7) AND E ARITHMETIC EXPRESSION (8) ARE ZERO SATISFIED? — NO → d

YES

**S45** IS CONDITION THAT NONE OF DENOMINATORS OF FRACTIONS INCLUDED IN E $\Theta$ BASIC ARITHMETIC EXPRESSION (32) AND E ARITHMETIC EXPRESSION (33) ARE ZERO SATISFIED? — NO → d

YES

**S43 S42** COMPUTE $\theta(n)$, E, $A_1$, $A_2$ IN FIRST COMPUTATION MODE

COMPUTE $\theta(n)$, E, $A_2$, $A_3$ IN SECOND COMPUTATION MODE — **S46**

STORE E, $A_1$, $A_2$ IN ASSOCIATION WITH RELATIVE POLE NUMBER OF MAGNETIC POLE SENSED BY FIRST AND SECOND MAGNETIC SENSORS

STORE E, $A_2$, $A_3$ IN ASSOCIATION WITH RELATIVE POLE NUMBER OF MAGNETIC POLE SENSED BY SECOND AND THIRD MAGNETIC SENSORS — **S47**

STOP DRIVING OF ELECTRIC MOTOR, CANCEL WARNING FOR DRIVER — **S52**

g

RETURN

# FIG. 12D

**f**

**S48** — DO BOTH FIRST AND THIRD MAGNETIC SENSORS SENSE ONE AND THE SAME MAGNETIC POLE FOR THREE CONSECUTIVE COMPUTATION PERIODS? — NO → **d**

↓ YES

**S49** — IS CONDITION THAT NONE OF DENOMINATORS OF FRACTIONS INCLUDED IN E $\theta$ BASIC ARITHMETIC EXPRESSION (35) AND E ARITHMETIC EXPRESSION (36) ARE ZERO SATISFIED? — NO → **d**

↓ YES

**S50** — COMPUTE $\theta(n)$, E, $A_1$, $A_3$ IN THIRD COMPUTATION MODE

**S51** — STORE E, $A_1$, $A_3$ IN ASSOCIATION WITH RELATIVE POLE NUMBER OF MAGNETIC POLE SENSED BY FIRST AND THIRD MAGNETIC SENSORS

**g**

56

# F I G . 13

| RELATIVE POLE NUMBER | E |
|---|---|
| 1 | |
| 2 | |
| 3 | |
| · · · | · · · |
| 7 | |
| 8 | |

e1

| RELATIVE POLE NUMBER | $A_1$ |
|---|---|
| 1 | |
| 2 | |
| 3 | |
| · · · | · · · |
| 7 | |
| 8 | |

e2

| RELATIVE POLE NUMBER | $A_2$ |
|---|---|
| 1 | |
| 2 | |
| 3 | |
| · · · | · · · |
| 7 | |
| 8 | |

e3

| RELATIVE POLE NUMBER | $A_3$ |
|---|---|
| 1 | |
| 2 | |
| 3 | |
| · · · | · · · |
| 7 | |
| 8 | |

e4

# F I G . 14

S61 — $S_1 > 0$? — NO → S62 — $S_1 < 0$? — YES

S61 — $S_1 > 0$? — YES ↓

S62 — $S_1 < 0$? — NO → S63 — $S_2 > 0$? — NO → S65

S63 — $S_2 > 0$? — YES →

S64 — r1 = 1

S65 — r1 = 2

S66 — $S_1 \geq 0$ AND $S_2 > 0$, OR $S_1 \leq 0$ AND $S_2 < 0$? — NO → S68

S66 — YES ↓

S67 — r2 = r1

S68 — r2 = r1+1

S69 — $S_1 \geq 0$ AND $S_3 > 0$, OR $S_1 \leq 0$ AND $S_3 < 0$? — NO → S71

S69 — YES ↓

S70 — r3 = r1

S71 — r3 = r1+1

RETURN

F I G . 15A

F I G . 15B

F I G . 15C

# F I G . 16A

START

S81

IS ZERO-CROSSING
DETECTED?　　NO

S82　　YES

RELATIVE POLE NUMBER
UPDATING PROCESS

S83

$F_{A2} = 0$?　　NO → ( c )

YES

S84

DO BOTH
FIRST AND SECOND
MAGNETIC SENSORS
OPERATE PROPERLY AND
SENSE ONE AND THE SAME
MAGNETIC POLE FOR
THREE CONSECUTIVE
COMPUTATION
PERIODS?　　NO

YES

( d )

S88

DO BOTH
SECOND AND THIRD
MAGNETIC SENSORS
OPERATE PROPERLY AND
SENSE ONE AND THE SAME
MAGNETIC POLE FOR
THREE CONSECUTIVE
COMPUTATION
PERIODS?　　NO → ( a )

YES

( e )

# F I G . 16B

S85

COMPUTE $\theta$ (n), E, $A_1$, $A_2$
IN FIRST COMPUTATION
MODE

S86

S89

COMPUTE $\theta$ (n), E, $A_2$, $A_3$
IN SECOND
COMPUTATION MODE

IS CONDITION
THAT NONE OF
DENOMINATORS OF
FRACTIONS INCLUDED IN
E $\theta$ BASIC ARITHMETIC
EXPRESSION (7) AND E
ARITHMETIC
EXPRESSION (8)
ARE ZERO
SATISFIED?

NO

YES

S90

IS CONDITION
THAT NONE OF
DENOMINATORS OF
FRACTIONS INCLUDED IN
E $\theta$ BASIC ARITHMETIC
EXPRESSION (32) AND E
ARITHMETIC
EXPRESSION (33)
ARE ZERO
SATISFIED?

NO

YES

S87

STORE E, $A_1$, $A_2$ IN
ASSOCIATION WITH
RELATIVE POLE NUMBER
OF MAGNETIC POLE
SENSED BY FIRST AND
SECOND MAGNETIC
SENSORS

S91

STORE E, $A_2$, $A_3$ IN
ASSOCIATION WITH
RELATIVE POLE NUMBER
OF MAGNETIC POLE
SENSED BY SECOND AND
THIRD MAGNETIC
SENSORS

b

RETURN

# F I G . 16C

a

**S92**

DOES FIRST MAGNETIC SENSOR OPERATE PROPERLY AND IS E CORRESPONDING TO MAGNETIC POLE SENSED BY FIRST MAGNETIC SENSOR STORED?

NO

YES

**S94**

IS $E_2$ CORRESPONDING TO MAGNETIC POLE SENSED BY SECOND MAGNETIC SENSOR STORED?

NO

YES

**S93**

COMPUTE $\theta(n)$ IN FOURTH COMPUTATION MODE

$$\left( \theta(n) = \frac{1}{E_1} \sin^{-1} \frac{S_1(n)}{A_1} \right)$$

**S95**

COMPUTE $\theta(n)$ IN FIFTH COMPUTATION MODE

$$\left( \theta(n) = \frac{1}{E_2} \left\{ \left( \sin^{-1} \frac{S_2(n)}{A_2} \right) - 60 \right\} \right)$$

**S96**

COMPUTE $\theta(n)$ IN SIXTH COMPUTATION MODE

$$\left( \theta(n) = \frac{1}{E_3} \left\{ \left( \sin^{-1} \frac{S_3(n)}{A_3} \right) - 120 \right\} \right)$$

b

EP 2 743 647 B1

EP 2 743 647 B1

(c)

S97 — DO BOTH FIRST AND THIRD MAGNETIC SENSORS SENSE ONE AND THE SAME MAGNETIC POLE FOR THREE CONSECUTIVE COMPUTATION PERIODS?

NO →

YES ↓

S98 — COMPUTE $\theta(n)$, E, $A_1$, $A_3$ IN THIRD COMPUTATION MODE

↓

S99 — IS CONDITION THAT NONE OF DENOMINATORS OF FRACTIONS INCLUDED IN E$\theta$ BASIC ARITHMETIC EXPRESSION (35) AND E ARITHMETIC EXPRESSION (36) ARE ZERO SATISFIED?

NO →

YES ↓

S100 — STORE E, $A_1$, $A_3$ IN ASSOCIATION WITH RELATIVE POLE NUMBER OF MAGNETIC POLE SENSED BY FIRST AND THIRD MAGNETIC SENSORS

(b)

S101 — IS E CORRESPONDING TO MAGNETIC POLE SENSED BY FIRST MAGNETIC SENSOR STORED?

NO →

YES ↓

S102 — COMPUTE $\theta(n)$ IN FOURTH COMPUTATION MODE

$$\left( \theta(n) = \frac{1}{E_1} \sin^{-1} \frac{S_1(n)}{A_1} \right)$$

S103 — IS E CORRESPONDING TO MAGNETIC POLE SENSED BY THIRD MAGNETIC SENSOR STORED?

NO →

YES ↓

S104 — COMPUTE $\theta(n)$ IN SIXTH COMPUTATION MODE

$$\left( \theta(n) = \frac{1}{E_3} \left\{ \left( \sin^{-1} \frac{S_3(n)}{A_3} \right) - 120 \right\} \right)$$

S105 — COMPUTE $\theta(n)$ IN SEVENTH COMPUTATION MODE

# FIG. 17

201

202

222  221

# FIG. 18

S₁  S₂

OUTPUT SIGNAL

0    72    144    216    288    360

ROTOR ROTATION ANGLE (deg)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008026297 A